# EUROPEAN PATENT APPLICATION

(11) **EP 4 697 624 A1**
(43) Date of publication of application: **18.02.2026**
(21) Application number: 23935991.2
(22) Date of filing: 08.05.2023
(51) Int. Cl.: H04B 10/70

(54) **SIGNAL TRANSMISSION METHOD AND APPARATUS**

(71) Applicant: Huawei Technologies Co., Ltd., Shenzhen, Guangdong 518129 (CN)
(72) Inventor: LING, Yun, Shenzhen, Guangdong 518129 (CN); WANG, Tianxiang, Shenzhen, Guangdong 518129 (CN); ZHANG, Weiwei, Shenzhen, Guangdong 518129 (CN); DUAN, Xiang, Shenzhen, Guangdong 518129 (CN); JI, Chunhui, Shenzhen, Guangdong 518129 (CN); WANG, Xinyuan, Shenzhen, Guangdong 518129 (CN)
(74) Representative: Goddar, Heinz J.
(86) International application number: PCT/CN2023/092808
(87) International publication number: WO 2024/229662

(57) **Abstract**

A signal transmission method and an apparatus are disclosed. In this method, a first communication apparatus generates a full-wave radio frequency electrical signal, and converts the full-wave radio frequency electrical signal into a half-wave radio frequency optical signal. The half-wave radio frequency optical signal is a radio frequency optical signal having a positive half-amplitude or a negative half-amplitude of the full-wave radio frequency electrical signal. The first communication apparatus sends the half-wave radio frequency optical signal. A second communication apparatus receives the half-wave radio frequency optical signal, and converts the half-wave radio frequency optical signal into the full-wave radio frequency electrical signal. It can be learned that, compared with a radio frequency optical signal having a full amplitude of the full-wave radio frequency electrical signal, average optical power of the half-wave radio frequency optical signal is lower, reducing transmit optical power between the first communication apparatus and the second communication apparatus. This helps reduce power consumption of an optical component. When an optical signal is transmitted between the first communication apparatus and the second communication apparatus through an optical fiber, the reduction of the transmit optical power further helps reduce a non-linear effect of optical fiber transmission, to reduce signal distortion caused by the non-linear effect of the optical fiber transmission.

## Description

### TECHNICAL FIELD

This application relates to the field of communication technologies, and in particular, to a signal transmission method and an apparatus.

### BACKGROUND

A radio frequency photonic technology is a technology that combines a radio frequency technology and a photonic technology. In the radio frequency photonic technology, the photonic technology is used to implement generation, transmission, detection, and processing of a radio frequency signal, so that direct optical fiber transmission of the radio frequency signal can be implemented, to avoid digital-to-analog conversion/analog-to-digital conversion and complex data processing, and improve transmission efficiency. Especially, a photoelectric diode (photoelectric diode, PD) direct-drive antenna may be used in the radio frequency photonic technology, so that an operating frequency band and bandwidth can be expanded.

In a PD direct-drive antenna architecture, radio frequency radiation power and a coverage area of an antenna are determined by electrical signal power input by a PD to the antenna. To increase the radio frequency radiation power of the antenna, transmit optical power of a wireless fronthaul downlink may be increased to increase optical power input to the PD, so as to increase the electrical signal power input by the PD to the antenna. However, high transmit optical power causes a sharp increase in power consumption of an optical component in a link and severe signal distortion caused by a severe non-linear effect of optical fiber transmission. How to reduce the transmit optical power while ensuring high radio frequency radiation power is a technical problem that needs to be resolved.

### SUMMARY

Embodiments of this application provide a signal transmission method and an apparatus, to reduce transmit optical power, help reduce power consumption of an optical component and a non-linear effect of optical fiber transmission, and further help implement high radio frequency radiation power of an antenna at low transmit optical power.

According to a first aspect, an embodiment of this application provides a signal transmission method. The method may be applied to a first communication apparatus, or may be applied to a chip in the first communication apparatus, or may be applied to a logic module or software that can implement all or a part of functions of the first communication apparatus. The first communication apparatus is used as an example below for description. The signal transmission method includes: The first communication apparatus generates a full-wave radio frequency electrical signal. The first communication apparatus converts the full-wave radio frequency electrical signal into a half-wave radio frequency optical signal. The half-wave radio frequency optical signal is a radio frequency optical signal having a positive half-amplitude or a negative half-amplitude of the full-wave radio frequency electrical signal. The first communication apparatus sends the half-wave radio frequency optical signal.

It can be learned that the half-wave radio frequency optical signal transmitted between the first communication apparatus and a second communication apparatus has the positive half-amplitude or the negative half-amplitude of the full-wave radio frequency electrical signal. Compared with a radio frequency optical signal having a full amplitude of the full-wave radio frequency electrical signal, the half-wave radio frequency optical signal has lower average optical power, so that transmit optical power between the first communication apparatus and the second communication apparatus can be reduced, to further help reduce power consumption of an optical component. In addition, in a scenario in which an optical signal is transmitted between the first communication apparatus and the second communication apparatus through an optical fiber, the reduction of the transmit optical power further helps reduce a non-linear effect of optical fiber transmission, to reduce signal distortion caused by the non-linear effect of optical fiber transmission. In a scenario in which the second communication apparatus further outputs the full-wave radio frequency electrical signal to an antenna for signal radiation, the signal transmission method helps implement high radio frequency radiation power of the antenna at low transmit optical power.

In an optional implementation, the half-wave radio frequency optical signal is obtained by performing optical modulation on a positive half-amplitude signal of the full-wave radio frequency electrical signal relative to a direct current component, or the half-wave radio frequency optical signal is obtained by performing optical modulation on an inverted negative half-amplitude signal of the full-wave radio frequency electrical signal relative to the direct current component.

In an optional implementation, that the first communication apparatus converts the full-wave radio frequency electrical signal into the half-wave radio frequency optical signal includes: The first communication apparatus superimposes a first bias electrical signal on the full-wave radio frequency electrical signal. The first bias electrical signal is a first bias voltage signal or a first bias current signal. The first communication apparatus performs optical modulation on the full-wave radio frequency electrical signal superimposed with the first bias electrical signal, to obtain the half-wave radio frequency optical signal. In other words, the first communication apparatus can convert the full-wave radio frequency electrical signal into the half-wave radio frequency optical signal with low average optical power by superimposing the first bias electrical signal on the full-wave radio frequency electrical signal and performing optical modulation. This further helps reduce the transmit optical power between the first communication apparatus and the second communication apparatus.

In an optional implementation, the first bias electrical signal is the first bias voltage signal. That the first communication apparatus performs optical modulation on the full-wave radio frequency electrical signal superimposed with the first bias electrical signal, to obtain the half-wave radio frequency optical signal includes: The first communication apparatus performs, via an electro-absorption modulated laser, optical modulation on the full-wave radio frequency electrical signal superimposed with the first bias voltage signal, to obtain the half-wave radio frequency optical signal.

In an optional implementation, the electro-absorption modulated laser includes a laser diode and an electro-absorption modulator. That the first communication apparatus performs, via the electro-absorption modulated laser, optical modulation on the full-wave radio frequency electrical signal superimposed with the first bias voltage signal, to obtain the half-wave radio frequency optical signal includes: The first communication apparatus generates a continuous light wave signal via the laser diode. The first communication apparatus modulates, via the electro-absorption modulator, the full-wave radio frequency electrical signal superimposed with the first bias voltage signal onto the continuous light wave signal, to obtain the half-wave radio frequency optical signal. It can be learned that in the electro-absorption modulated laser, the laser diode generates a light source, and the electro-absorption modulator implements optical modulation. In other words, light source generation and optical modulation are decoupled. This helps reduce impact of light source bandwidth on high-frequency modulation when a voltage corresponding to the first bias voltage signal is low.

In an optional implementation, the first bias electrical signal is the first bias current signal. That the first communication apparatus performs optical modulation on the full-wave radio frequency electrical signal superimposed with the first bias electrical signal, to obtain the half-wave radio frequency optical signal includes: The first communication apparatus performs, via a directly modulated laser, optical modulation on the full-wave radio frequency electrical signal superimposed with the first bias current signal, to obtain the half-wave radio frequency optical signal. A current corresponding to the first bias current signal is greater than or equal to a threshold current of the directly modulated laser, and a difference between the current corresponding to the first bias current signal and the threshold current is within a first range.

In an optional implementation, the first bias electrical signal satisfies: A ratio of coefficients of multiple spectral components corresponding to an electrical signal obtained by performing optical-to-electrical conversion on a first optical signal satisfies a first ratio. The first optical signal is an optical signal obtained by performing optical modulation on an electrical signal for bias point detection superimposed with the first bias electrical signal. In other words, when the first bias electrical signal superimposed on the full-wave radio frequency electrical signal satisfies the condition described in this implementation, it is beneficial to convert the full-wave radio frequency electrical signal into the half-wave radio frequency optical signal with low average optical power, to reduce the transmit optical power between the first communication apparatus and the second communication apparatus.

In an optional implementation, the electrical signal for bias point detection is a low-frequency sine wave signal. An error between 0.32:0.5:0.21:0 and a ratio of a coefficient corresponding to a direct current component, a coefficient corresponding to a first-order harmonic component, a coefficient corresponding to a second-order harmonic component, and a coefficient corresponding to a third-order harmonic component that are corresponding to the electrical signal obtained by performing optical-to-electrical conversion on the first optical signal is within a second range.

In an optional implementation, the method further includes: The first communication apparatus generates an electrical signal for bias point detection. The first communication apparatus superimposes a second bias electrical signal on the electrical signal for bias point detection. The first communication apparatus performs optical modulation on the electrical signal for bias point detection superimposed with the second bias electrical signal, to obtain a second optical signal. If a ratio of coefficients of multiple spectral components corresponding to an electrical signal obtained by performing optical-to-electrical conversion on the second optical signal satisfies the first ratio, the first communication apparatus determines the first bias electrical signal as the second bias electrical signal; or if a ratio of coefficients of multiple spectral components corresponding to an electrical signal obtained by performing optical-to-electrical conversion on the second optical signal does not satisfy the first ratio, the first communication apparatus adjusts the second bias electrical signal, and superimposes an adjusted second bias electrical signal on the electrical signal for bias point detection. It can be learned that the first communication apparatus can adjust the bias electrical signal superimposed on the electrical signal for bias point detection, to determine the bias electrical signal that satisfies the foregoing ratio condition, that is, determine the first bias electrical signal that can convert the full-wave radio frequency electrical signal into the half-wave radio frequency optical signal. This further helps reduce the transmit optical power between the first communication apparatus and the second communication apparatus.

In an optional implementation, that the first communication apparatus converts the full-wave radio frequency electrical signal into the half-wave radio frequency optical signal includes: The first communication apparatus converts the full-wave radio frequency electrical signal into a first half-wave radio frequency electrical signal. The first half-wave radio frequency electrical signal is a radio frequency electrical signal having a positive half-amplitude or a negative half-amplitude of the full-wave radio frequency electrical signal in analog domain. The first communication apparatus superimposes a third bias electrical signal on the first half-wave radio frequency electrical signal via a modulated laser, and performs optical modulation on the first half-wave radio frequency electrical signal superimposed with the third bias electrical signal, to obtain the half-wave radio frequency optical signal. It can be learned that the first communication apparatus can convert the full-wave radio frequency electrical signal into the half-wave radio frequency optical signal with low average optical power by converting the full-wave radio frequency electrical signal into a half-wave radio frequency electrical signal and converting the half-wave radio frequency electrical signal into the half-wave radio frequency optical signal. This helps reduce the transmit optical power between the first communication apparatus and the second communication apparatus.

In an optional implementation, the first half-wave radio frequency electrical signal is a positive half-amplitude signal of the full-wave radio frequency electrical signal relative to the direct current component in analog domain, or the first half-wave radio frequency electrical signal is obtained by inverting a negative half-amplitude signal of the full-wave radio frequency electrical signal relative to the direct current component in analog domain.

In an optional implementation, the full-wave radio frequency electrical signal is an analog signal. That the first communication apparatus converts the full-wave radio frequency electrical signal into the first half-wave radio frequency electrical signal includes: The first communication apparatus converts the full-wave radio frequency electrical signal into the first half-wave radio frequency electrical signal via a low-noise power amplifier. The low-noise power amplifier is a class-B low-noise power amplifier, a class-C low-noise power amplifier, or a class-AB low-noise power amplifier. It can be learned that the first communication apparatus can convert, in analog domain via the low-noise power amplifier, the full-wave radio frequency electrical signal into the half-wave radio frequency electrical signal with low average optical power.

In an optional implementation, the full-wave radio frequency electrical signal is a digital signal. That the first communication apparatus converts the full-wave radio frequency electrical signal into the first half-wave radio frequency electrical signal includes: The first communication apparatus converts the full-wave radio frequency electrical signal into a second half-wave radio frequency electrical signal. The second half-wave radio frequency electrical signal is a radio frequency electrical signal having a positive half-amplitude or a negative half-amplitude of the full-wave radio frequency electrical signal in digital domain. The first communication apparatus performs digital-to-analog conversion on the second half-wave radio frequency electrical signal to obtain the first half-wave radio frequency electrical signal. It can be learned that the first communication apparatus can convert, in digital domain, the full-wave radio frequency electrical signal into the half-wave radio frequency electrical signal with low average optical power.

In an optional implementation, the second half-wave radio frequency electrical signal is a positive half-amplitude signal of the full-wave radio frequency electrical signal relative to the direct current component in digital domain, or the second half-wave radio frequency electrical signal is obtained by inverting a negative half-amplitude signal of the full-wave radio frequency electrical signal relative to the direct current component in digital domain.

In an optional implementation, the method further includes: The first communication apparatus performs spectrum adjustment on the first half-wave radio frequency electrical signal by using a filtering function. That the first communication apparatus superimposes the third bias electrical signal on the first half-wave radio frequency electrical signal, and performs optical modulation on the first half-wave radio frequency electrical signal superimposed with the third bias electrical signal, to obtain the half-wave radio frequency optical signal includes: The first communication apparatus superimposes the third bias electrical signal on a spectrum-adjusted first half-wave radio frequency electrical signal, and performs optical modulation on the spectrum-adjusted first half-wave radio frequency electrical signal superimposed with the third bias electrical signal, to obtain the half-wave radio frequency optical signal. In this implementation, spectrum adjustment is performed on the first half-wave radio frequency electrical signal, so that an amplitude of each-order spectral component in the first half-wave radio frequency electrical signal can be adjusted, to optimize a waveform of the first half-wave radio frequency electrical signal. This helps improve an optical modulation effect.

In an optional implementation, the modulated laser is a directly modulated laser, the third bias electrical signal is a second bias current signal, and a current corresponding to the second bias current signal is greater than or equal to a threshold current of the directly modulated laser. Alternatively, the modulated laser is an electro-absorption modulated laser, the third bias electrical signal is a second bias voltage signal, and a voltage corresponding to the second bias voltage signal is greater than a first voltage.

In an optional implementation, the second bias current signal is a third bias current signal corresponding to a third optical signal with a largest signal-to-noise ratio in multiple third optical signals. The multiple third optical signals are in one-to-one correspondence with multiple third bias current signals. Each third optical signal in the multiple third optical signals is obtained by performing optical modulation on the first half-wave radio frequency electrical signal superimposed with a third bias current signal corresponding to the third optical signal. Currents respectively corresponding to the multiple third bias current signals are different from each other, and the currents respectively corresponding to the multiple third bias current signals are all greater than or equal to the threshold current. It can be learned that the second bias current signal determined in this implementation helps increase a signal-to-noise ratio of the half-wave radio frequency optical signal, and helps improve communication quality.

In an optional implementation, the second bias voltage signal is a third bias voltage signal corresponding to a fourth optical signal with a smallest adjacent channel leakage power ratio in multiple fourth optical signals. The multiple fourth optical signals are in one-to-one correspondence with multiple third bias voltage signals. Each fourth optical signal in the multiple fourth optical signals is obtained by performing optical modulation on the first half-wave radio frequency electrical signal superimposed with a third bias voltage signal corresponding to the fourth optical signal. Voltages respectively corresponding to the multiple third bias voltage signals are different from each other, and the voltages respectively corresponding to the multiple third bias voltage signals are all greater than or equal to the first voltage. It can be learned that the second bias voltage signal determined in this implementation helps reduce an adjacent channel leakage power ratio of the half-wave radio frequency optical signal, and helps improve communication quality.

In an optional implementation, the full-wave radio frequency electrical signal is a signal that undergoes digital pre-distortion processing. The digital pre-distortion processing helps correct a non-linear effect caused by optical modulation, and reduce signal distortion caused by the non-linear effect. In addition, in the scenario in which the optical signal is transmitted between the first communication apparatus and the second communication apparatus through the optical fiber, the digital pre-distortion processing further helps correct a non-linear effect of the optical fiber, to reduce signal distortion caused by the non-linear effect of optical fiber transmission.

According to a second aspect, an embodiment of this application provides a signal transmission method. The method may be applied to a second communication apparatus, or may be applied to a chip in the second communication apparatus, or may be applied to a logic module or software that can implement all or a part of functions of the second communication apparatus. The second communication apparatus is used as an example below for description. The signal transmission method includes: The second communication apparatus receives a half-wave radio frequency optical signal. The half-wave radio frequency optical signal is a radio frequency optical signal having a positive half-amplitude or a negative half-amplitude of a full-wave radio frequency electrical signal. The second communication apparatus converts the half-wave radio frequency optical signal into the full-wave radio frequency electrical signal.

It can be learned that the half-wave radio frequency optical signal transmitted between a first communication apparatus and the second communication apparatus has the positive half-amplitude or the negative half-amplitude of the full-wave radio frequency electrical signal. Compared with a radio frequency optical signal having a full amplitude of the full-wave radio frequency electrical signal, the half-wave radio frequency optical signal has lower average optical power, so that transmit optical power between the first communication apparatus and the second communication apparatus can be reduced, to further help reduce power consumption of an optical component. In addition, in a scenario in which an optical signal is transmitted between the first communication apparatus and the second communication apparatus through an optical fiber, the reduction of the transmit optical power further helps reduce a non-linear effect of optical fiber transmission, to reduce signal distortion caused by the non-linear effect of optical fiber transmission. In addition, the second communication apparatus further restores the half-wave radio frequency optical signal with low average optical power to the full-wave radio frequency electrical signal with high power. In a scenario in which the second communication apparatus further needs to output the full-wave radio frequency electrical signal to an antenna for signal radiation, in the signal transmission method, high radio frequency radiation power of the antenna can be implemented at low transmit optical power.

In an optional implementation, the half-wave radio frequency optical signal is obtained by performing optical modulation on a positive half-amplitude signal of the full-wave radio frequency electrical signal relative to a direct current component, or the half-wave radio frequency optical signal is obtained by performing optical modulation on an inverted negative half-amplitude signal of the full-wave radio frequency electrical signal relative to the direct current component.

In an optional implementation, the full-wave radio frequency electrical signal obtained by the second communication apparatus by converting the half-wave radio frequency optical signal is a fundamental frequency signal in an electrical signal obtained by performing optical-to-electrical conversion on the half-wave radio frequency optical signal.

In an optional implementation, that the second communication apparatus converts the half-wave radio frequency optical signal into the full-wave radio frequency electrical signal includes: The second communication apparatus performs optical-to-electrical conversion on the half-wave radio frequency optical signal via a photoelectric detector, to obtain a first electrical signal. A passband of the photoelectric detector covers a spectrum of the fundamental frequency signal. The second communication apparatus filters the first electrical signal via a bandpass filter, to obtain the full-wave radio frequency electrical signal. A passband of the bandpass filter includes only the spectrum of the fundamental frequency signal. It can be learned that the second communication apparatus can restore the half-wave radio frequency optical signal to the full-wave radio frequency electrical signal via the photoelectric detector and the bandpass filter, without using a complex algorithm. This simplifies a manner of restoring the full-wave radio frequency electrical signal.

In an optional implementation, that the second communication apparatus converts the half-wave radio frequency optical signal into the full-wave radio frequency electrical signal includes: The second communication apparatus performs optical-to-electrical conversion on the half-wave radio frequency optical signal via a photoelectric detector, to obtain a first electrical signal, and determines the full-wave radio frequency electrical signal in the first electrical signal. A passband of the photoelectric detector includes only a spectrum of the fundamental frequency signal. It can be learned that when the photoelectric detector has a function of directly filtering out the fundamental signal in addition to an optical-to-electrical conversion function, the second communication apparatus can directly restore the half-wave radio frequency optical signal to the full-wave radio frequency electrical signal via the photoelectric detector, without using a complex algorithm. This simplifies a manner of restoring the full-wave radio frequency electrical signal.

According to a third aspect, an embodiment of this application provides a signal transmission method. The method is described from a perspective of interaction between a first communication apparatus and a second communication apparatus. The method includes: The first communication apparatus generates a full-wave radio frequency electrical signal. The first communication apparatus converts the full-wave radio frequency electrical signal into a half-wave radio frequency optical signal. The half-wave radio frequency optical signal is a radio frequency optical signal having a positive half-amplitude or a negative half-amplitude of the full-wave radio frequency electrical signal. The first communication apparatus sends the half-wave radio frequency optical signal. The second communication apparatus receives the half-wave radio frequency optical signal. The second communication apparatus converts the half-wave radio frequency optical signal into the full-wave radio frequency electrical signal.

It can be learned that the half-wave radio frequency optical signal transmitted between the first communication apparatus and the second communication apparatus has the positive half-amplitude or the negative half-amplitude of the full-wave radio frequency electrical signal. Compared with a radio frequency optical signal having a full amplitude of the full-wave radio frequency electrical signal, the half-wave radio frequency optical signal has lower average optical power, so that transmit optical power between the first communication apparatus and the second communication apparatus can be reduced, to further help reduce power consumption of an optical component. In addition, in a scenario in which an optical signal is transmitted between the first communication apparatus and the second communication apparatus through an optical fiber, the reduction of the transmit optical power further helps reduce a non-linear effect of optical fiber transmission, to reduce signal distortion caused by the non-linear effect of optical fiber transmission. In addition, the second communication apparatus further restores the half-wave radio frequency optical signal with low average optical power to the full-wave radio frequency electrical signal with high power. In a scenario in which the second communication apparatus further needs to output the full-wave radio frequency electrical signal to an antenna for signal radiation, in the signal transmission method, high radio frequency radiation power of the antenna can be implemented at low transmit optical power.

In an optional implementation, the half-wave radio frequency optical signal is obtained by the first communication apparatus by performing optical modulation on a positive half-amplitude signal of the full-wave radio frequency electrical signal relative to a direct current component, or the half-wave radio frequency optical signal is obtained by the first communication apparatus by performing optical modulation on an inverted negative half-amplitude signal of the full-wave radio frequency electrical signal relative to the direct current component.

In an optional implementation, that the first communication apparatus converts the full-wave radio frequency electrical signal into the half-wave radio frequency optical signal includes: The first communication apparatus superimposes a first bias electrical signal on the full-wave radio frequency electrical signal. The first bias electrical signal is a first bias voltage signal or a first bias current signal. The first communication apparatus performs optical modulation on the full-wave radio frequency electrical signal superimposed with the first bias electrical signal, to obtain the half-wave radio frequency optical signal.

In an optional implementation, the first bias electrical signal is the first bias voltage signal. That the first communication apparatus performs optical modulation on the full-wave radio frequency electrical signal superimposed with the first bias electrical signal, to obtain the half-wave radio frequency optical signal includes: The first communication apparatus performs, via an electro-absorption modulated laser, optical modulation on the full-wave radio frequency electrical signal superimposed with the first bias voltage signal, to obtain the half-wave radio frequency optical signal.

In an optional implementation, the electro-absorption modulated laser includes a laser diode and an electro-absorption modulator. That the first communication apparatus performs, via the electro-absorption modulated laser, optical modulation on the full-wave radio frequency electrical signal superimposed with the first bias voltage signal, to obtain the half-wave radio frequency optical signal includes: The first communication apparatus generates a continuous light wave signal via the laser diode. The first communication apparatus modulates, via the electro-absorption modulator, the full-wave radio frequency electrical signal superimposed with the first bias voltage signal onto the continuous light wave signal, to obtain the half-wave radio frequency optical signal.

In an optional implementation, the first bias electrical signal is the first bias current signal. That the first communication apparatus performs optical modulation on the full-wave radio frequency electrical signal superimposed with the first bias electrical signal, to obtain the half-wave radio frequency optical signal includes: The first communication apparatus performs, via a directly modulated laser, optical modulation on the full-wave radio frequency electrical signal superimposed with the first bias current signal, to obtain the half-wave radio frequency optical signal. A current corresponding to the first bias current signal is greater than or equal to a threshold current of the directly modulated laser, and a difference between the current corresponding to the first bias current signal and the threshold current is within a first range.

In an optional implementation, the first bias electrical signal satisfies: A ratio of coefficients of multiple spectral components corresponding to an electrical signal obtained by the first communication apparatus by performing optical-to-electrical conversion on a first optical signal satisfies a first ratio. The first optical signal is an optical signal obtained by the first communication apparatus by performing optical modulation on an electrical signal for bias point detection superimposed with the first bias electrical signal.

In an optional implementation, the electrical signal for bias point detection is a low-frequency sine wave signal. An error between 0.32:0.5:0.21:0 and a ratio of a coefficient corresponding to a direct current component, a coefficient corresponding to a first-order harmonic component, a coefficient corresponding to a second-order harmonic component, and a coefficient corresponding to a third-order harmonic component that are corresponding to the electrical signal obtained by the first communication apparatus by performing optical-to-electrical conversion on the first optical signal is within a second range.

In an optional implementation, the method further includes: The first communication apparatus generates an electrical signal for bias point detection. The first communication apparatus superimposes a second bias electrical signal on the electrical signal for bias point detection. The first communication apparatus performs optical modulation on the electrical signal for bias point detection superimposed with the second bias electrical signal, to obtain a second optical signal. If a ratio of coefficients of multiple spectral components corresponding to an electrical signal obtained by the first communication apparatus by performing optical-to-electrical conversion on the second optical signal satisfies the first ratio, the first communication apparatus determines the first bias electrical signal as the second bias electrical signal; or if a ratio of coefficients of multiple spectral components corresponding to an electrical signal obtained by the first communication apparatus by performing optical-to-electrical conversion on the second optical signal does not satisfy the first ratio, the first communication apparatus adjusts the second bias electrical signal, and superimposes an adjusted second bias electrical signal on the electrical signal for bias point detection.

In an optional implementation, that the first communication apparatus converts the full-wave radio frequency electrical signal into the half-wave radio frequency optical signal includes: The first communication apparatus converts the full-wave radio frequency electrical signal into a first half-wave radio frequency electrical signal. The first half-wave radio frequency electrical signal is a radio frequency electrical signal having a positive half-amplitude or a negative half-amplitude of the full-wave radio frequency electrical signal in analog domain. The first communication apparatus superimposes a third bias electrical signal on the first half-wave radio frequency electrical signal via a modulated laser, and performs optical modulation on the first half-wave radio frequency electrical signal superimposed with the third bias electrical signal, to obtain the half-wave radio frequency optical signal.

In an optional implementation, the first half-wave radio frequency electrical signal is a positive half-amplitude signal of the full-wave radio frequency electrical signal relative to the direct current component in analog domain, or the first half-wave radio frequency electrical signal is obtained by inverting a negative half-amplitude signal of the full-wave radio frequency electrical signal relative to the direct current component in analog domain.

In an optional implementation, the full-wave radio frequency electrical signal is an analog signal. That the first communication apparatus converts the full-wave radio frequency electrical signal into the first half-wave radio frequency electrical signal includes: The first communication apparatus converts the full-wave radio frequency electrical signal into the first half-wave radio frequency electrical signal via a low-noise power amplifier. The low-noise power amplifier is a class-B low-noise power amplifier, a class-C low-noise power amplifier, or a class-AB low-noise power amplifier.

In an optional implementation, the full-wave radio frequency electrical signal is a digital signal. That the first communication apparatus converts the full-wave radio frequency electrical signal into the first half-wave radio frequency electrical signal includes: The first communication apparatus converts the full-wave radio frequency electrical signal into a second half-wave radio frequency electrical signal. The second half-wave radio frequency electrical signal is a radio frequency electrical signal having a positive half-amplitude or a negative half-amplitude of the full-wave radio frequency electrical signal in digital domain. The first communication apparatus performs digital-to-analog conversion on the second half-wave radio frequency electrical signal to obtain the first half-wave radio frequency electrical signal.

In an optional implementation, the second half-wave radio frequency electrical signal is a positive half-amplitude signal of the full-wave radio frequency electrical signal relative to the direct current component in digital domain, or the second half-wave radio frequency electrical signal is obtained by inverting a negative half-amplitude signal of the full-wave radio frequency electrical signal relative to the direct current component in digital domain.

In an optional implementation, the method further includes: The first communication apparatus performs spectrum adjustment on the first half-wave radio frequency electrical signal by using a filtering function. That the first communication apparatus superimposes the third bias electrical signal on the first half-wave radio frequency electrical signal, and performs optical modulation on the first half-wave radio frequency electrical signal superimposed with the third bias electrical signal, to obtain the half-wave radio frequency optical signal includes: The first communication apparatus superimposes the third bias electrical signal on a spectrum-adjusted first half-wave radio frequency electrical signal, and performs optical modulation on the spectrum-adjusted first half-wave radio frequency electrical signal superimposed with the third bias electrical signal, to obtain the half-wave radio frequency optical signal.

In an optional implementation, the modulated laser is a directly modulated laser, the third bias electrical signal is a second bias current signal, and a current corresponding to the second bias current signal is greater than or equal to a threshold current of the directly modulated laser. Alternatively, the modulated laser is an electro-absorption modulated laser, the third bias electrical signal is a second bias voltage signal, and a voltage corresponding to the second bias voltage signal is greater than a first voltage.

In an optional implementation, the second bias current signal is a third bias current signal corresponding to a third optical signal with a largest signal-to-noise ratio in multiple third optical signals. The multiple third optical signals are in one-to-one correspondence with multiple third bias current signals. Each third optical signal in the multiple third optical signals is obtained by the first communication apparatus by performing optical modulation on the first half-wave radio frequency electrical signal superimposed with a third bias current signal corresponding to the third optical signal. Currents respectively corresponding to the multiple third bias current signals are different from each other, and the currents respectively corresponding to the multiple third bias current signals are all greater than or equal to the threshold current.

In an optional implementation, the second bias voltage signal is a third bias voltage signal corresponding to a fourth optical signal with a smallest adjacent channel leakage power ratio in multiple fourth optical signals. The multiple fourth optical signals are in one-to-one correspondence with multiple third bias voltage signals. Each fourth optical signal in the multiple fourth optical signals is obtained by performing optical modulation on the first half-wave radio frequency electrical signal superimposed with a third bias voltage signal corresponding to the fourth optical signal. Voltages respectively corresponding to the multiple third bias voltage signals are different from each other, and the voltages respectively corresponding to the multiple third bias voltage signals are all greater than or equal to the first voltage.

In an optional implementation, the full-wave radio frequency electrical signal generated by the first communication apparatus is a signal that undergoes digital pre-distortion processing performed by the first communication apparatus.

In an optional implementation, the full-wave radio frequency electrical signal obtained by the second communication apparatus by converting the half-wave radio frequency optical signal is a fundamental frequency signal in an electrical signal obtained by the second communication apparatus by performing optical-to-electrical conversion on the half-wave radio frequency optical signal.

In an optional implementation, that the second communication apparatus converts the half-wave radio frequency optical signal into the full-wave radio frequency electrical signal includes: The second communication apparatus performs optical-to-electrical conversion on the half-wave radio frequency optical signal via a photoelectric detector, to obtain a first electrical signal. A passband of the photoelectric detector covers a spectrum of the fundamental frequency signal. The second communication apparatus filters the first electrical signal via a bandpass filter, to obtain the full-wave radio frequency electrical signal. A passband of the bandpass filter includes only the spectrum of the fundamental frequency signal.

In an optional implementation, that the second communication apparatus converts the half-wave radio frequency optical signal into the full-wave radio frequency electrical signal includes: The second communication apparatus performs optical-to-electrical conversion on the half-wave radio frequency optical signal via a photoelectric detector, to obtain a first electrical signal, and determines the full-wave radio frequency electrical signal in the first electrical signal. A passband of the photoelectric detector includes only a spectrum of the fundamental frequency signal.

In addition, for beneficial effects of the foregoing optional implementations in this aspect, refer to beneficial effects of related implementations in the first aspect and the second aspect. Details are not described again.

According to a fourth aspect, an embodiment of this application provides a communication apparatus. The apparatus includes a radio frequency signal generation module, a bias point control module, and a modulated laser. The radio frequency signal generation module is configured to: generate a full-wave radio frequency electrical signal, and output the full-wave radio frequency electrical signal to the modulated laser. The bias point control module is configured to output a first bias electrical signal to the modulated laser. The modulated laser is configured to perform optical modulation on the full-wave radio frequency electrical signal superimposed with the first bias electrical signal, to obtain a half-wave radio frequency optical signal. The half-wave radio frequency optical signal is a radio frequency optical signal having a positive half-amplitude or a negative half-amplitude of the full-wave radio frequency electrical signal. The modulated laser is further configured to send the half-wave radio frequency optical signal.

It can be learned that a first communication apparatus can convert the full-wave radio frequency electrical signal into the half-wave radio frequency optical signal with low average optical power by superimposing the first bias electrical signal on the full-wave radio frequency electrical signal and performing optical modulation. This can reduce transmit optical power between the first communication apparatus and a second communication apparatus, to further help reduce power consumption of an optical component. In addition, in a scenario in which an optical signal is transmitted between the first communication apparatus and the second communication apparatus through an optical fiber, the reduction of the transmit optical power further helps reduce a non-linear effect of optical fiber transmission, to reduce signal distortion caused by the non-linear effect of optical fiber transmission.

In an optional implementation, the half-wave radio frequency optical signal is obtained by performing optical modulation on a positive half-amplitude signal of the full-wave radio frequency electrical signal relative to a direct current component, or the half-wave radio frequency optical signal is obtained by performing optical modulation on an inverted negative half-amplitude signal of the full-wave radio frequency electrical signal relative to the direct current component.

In an optional implementation, the modulated laser is an electro-absorption modulated laser, and the first bias electrical signal is a first bias voltage signal. Alternatively, the modulated laser is a directly modulated laser, and the first bias electrical signal is a first bias current signal.

In an optional implementation, the electro-absorption modulated laser includes a laser diode and an electro-absorption modulator. The electro-absorption modulated laser performs optical modulation on the full-wave radio frequency electrical signal superimposed with the first bias voltage signal, to obtain the half-wave radio frequency optical signal. The electro-absorption modulated laser is specifically configured to: generate a continuous light wave signal via the laser diode; and modulate, via the electro-absorption modulator, the full-wave radio frequency electrical signal superimposed with the first bias voltage signal onto the continuous light wave signal, to obtain the half-wave radio frequency optical signal.

In an optional implementation, a current corresponding to the first bias current signal is greater than or equal to a threshold current of the directly modulated laser, and a difference between the current corresponding to the first bias current signal and the threshold current is within a first range.

In an optional implementation, the first bias electrical signal satisfies: A ratio of coefficients of multiple spectral components corresponding to an electrical signal obtained by performing optical-to-electrical conversion on a first optical signal satisfies a first ratio. The first optical signal is an optical signal obtained by performing optical modulation on an electrical signal for bias point detection superimposed with the first bias electrical signal.

In an optional implementation, the electrical signal for bias point detection is a low-frequency sine wave signal. An error between 0.32:0.5:0.21:0 and a ratio of a coefficient corresponding to a direct current component, a coefficient corresponding to a first-order harmonic component, a coefficient corresponding to a second-order harmonic component, and a coefficient corresponding to a third-order harmonic component that are corresponding to the electrical signal obtained by performing optical-to-electrical conversion on the first optical signal is within a second range.

In an optional implementation, the bias point control module is further configured to: generate an electrical signal for bias point detection, and output the electrical signal for bias point detection to the modulated laser. The bias point control module is further configured to output a second bias electrical signal to the modulated laser. The modulated laser is further configured to: perform optical modulation on the electrical signal for bias point detection superimposed with the second bias electrical signal, to obtain a second optical signal, and output the second optical signal to the bias point control module. The bias point control module is further configured to: if a ratio of coefficients of multiple spectral components corresponding to an electrical signal obtained by performing optical-to-electrical conversion on the second optical signal satisfies the first ratio, determine the first bias electrical signal as the second bias electrical signal; or if a ratio of coefficients of multiple spectral components corresponding to an electrical signal obtained by performing optical-to-electrical conversion on the second optical signal does not satisfy the first ratio, adjust the second bias electrical signal, and output an adjusted second bias electrical signal to the modulated laser.

In an optional implementation, the radio frequency signal generation module includes a digital pre-distortion module. The full-wave radio frequency electrical signal is a signal that undergoes digital pre-distortion processing performed by the digital pre-distortion module.

In addition, for beneficial effects of the foregoing optional implementations in this aspect, refer to beneficial effects of related implementations in the first aspect. Details are not described again.

According to a fifth aspect, an embodiment of this application provides a communication apparatus. The apparatus includes a radio frequency signal generation module, a low-noise power amplifier, and a modulated laser. The radio frequency signal generation module is configured to: generate a full-wave radio frequency electrical signal, and output the full-wave radio frequency electrical signal to the low-noise power amplifier. The full-wave radio frequency electrical signal is an analog signal. The low-noise power amplifier is configured to: convert the full-wave radio frequency electrical signal into a first half-wave radio frequency electrical signal, and output the first half-wave radio frequency electrical signal to the modulated laser. The first half-wave radio frequency electrical signal is a radio frequency electrical signal having a positive half-amplitude or a negative half-amplitude of the full-wave radio frequency electrical signal in an analog domain. The low-noise power amplifier is a class-B low-noise power amplifier, a class-C low-noise power amplifier, or a class-AB low-noise power amplifier. The modulated laser is configured to: superimpose a third bias electrical signal on the first half-wave radio frequency electrical signal, and perform optical modulation on the first half-wave radio frequency electrical signal superimposed with the third bias electrical signal, to obtain a half-wave radio frequency optical signal. The half-wave radio frequency optical signal is a radio frequency optical signal having a positive half-amplitude or a negative half-amplitude of the full-wave radio frequency electrical signal. The modulated laser is further configured to send the half-wave radio frequency optical signal.

It can be learned that the low-noise power amplifier converts, in analog domain, the full-wave radio frequency electrical signal into the half-wave radio frequency electrical signal with lower power, and the modulated laser converts the half-wave radio frequency electrical signal into the half-wave radio frequency optical signal. Compared with a radio frequency optical signal having a full amplitude of the full-wave radio frequency electrical signal, average optical power of the half-wave radio frequency optical signal is lower, so that transmit optical power between a first communication apparatus and a second communication apparatus can be reduced, to further help reduce power consumption of an optical component. In addition, in a scenario in which an optical signal is transmitted between the first communication apparatus and the second communication apparatus through an optical fiber, the reduction of the transmit optical power further helps reduce a non-linear effect of optical fiber transmission, to reduce signal distortion caused by the non-linear effect of optical fiber transmission.

In an optional implementation, the radio frequency signal generation module includes a digital pre-distortion module. The full-wave radio frequency electrical signal is a signal that undergoes digital pre-distortion processing performed by the digital pre-distortion module.

In an optional implementation, the first half-wave radio frequency electrical signal is a positive half-amplitude signal of the full-wave radio frequency electrical signal relative to a direct current component in analog domain, or the first half-wave radio frequency electrical signal is obtained by inverting a negative half-amplitude signal of the full-wave radio frequency electrical signal relative to the direct current component in analog domain.

In an optional implementation, the half-wave radio frequency optical signal is obtained by performing optical modulation on a positive half-amplitude signal of the full-wave radio frequency electrical signal relative to the direct current component, or the half-wave radio frequency optical signal is obtained by performing optical modulation on an inverted negative half-amplitude signal of the full-wave radio frequency electrical signal relative to the direct current component.

In an optional implementation, the apparatus further includes a waveform adjustment module, configured to: perform spectrum adjustment on the first half-wave radio frequency electrical signal by using a filtering function, and output a spectrum-adjusted first half-wave radio frequency electrical signal to the modulated laser. The modulated laser superimposes the third bias electrical signal on the first half-wave radio frequency electrical signal, and performs optical modulation on the first half-wave radio frequency electrical signal superimposed with the third bias electrical signal, to obtain the half-wave radio frequency optical signal; and is specifically configured to: superimpose the third bias electrical signal on the spectrum-adjusted first half-wave radio frequency electrical signal, and performs optical modulation on the spectrum-adjusted first half-wave radio frequency electrical signal superimposed with the third bias electrical signal, to obtain the half-wave radio frequency optical signal.

In an optional implementation, the modulated laser is a directly modulated laser, the third bias electrical signal is a second bias current signal, and a current corresponding to the second bias current signal is greater than or equal to a threshold current of the directly modulated laser. Alternatively, the modulated laser is an electro-absorption modulated laser, the third bias electrical signal is a second bias voltage signal, and a voltage corresponding to the second bias voltage signal is greater than a first voltage.

In an optional implementation, the second bias current signal is a third bias current signal corresponding to a third optical signal with a largest signal-to-noise ratio in multiple third optical signals. The multiple third optical signals are in one-to-one correspondence with multiple third bias current signals. Each third optical signal in the multiple third optical signals is obtained by performing optical modulation on the first half-wave radio frequency electrical signal superimposed with a third bias current signal corresponding to the third optical signal. Currents respectively corresponding to the multiple third bias current signals are different from each other, and the currents respectively corresponding to the multiple third bias current signals are all greater than or equal to the threshold current.

In an optional implementation, the second bias voltage signal is a third bias voltage signal corresponding to a fourth optical signal with a smallest adjacent channel leakage power ratio in multiple fourth optical signals. The multiple fourth optical signals are in one-to-one correspondence with multiple third bias voltage signals. Each fourth optical signal in the multiple fourth optical signals is obtained by performing optical modulation on the first half-wave radio frequency electrical signal superimposed with a third bias voltage signal corresponding to the fourth optical signal. Voltages respectively corresponding to the multiple third bias voltage signals are different from each other, and the voltages respectively corresponding to the multiple third bias voltage signals are all greater than or equal to the first voltage.

In addition, for beneficial effects of the foregoing optional implementations in this aspect, refer to beneficial effects of related implementations in the first aspect. Details are not described again.

According to a sixth aspect, an embodiment of this application provides a communication apparatus. The apparatus includes a half-wave radio frequency signal generation module and a modulated laser. The half-wave radio frequency signal generation module is configured to: convert a full-wave radio frequency electrical signal into a second half-wave radio frequency electrical signal, and perform digital-to-analog conversion on the second half-wave radio frequency electrical signal to obtain a first half-wave radio frequency electrical signal. The full-wave radio frequency electrical signal and the second half-wave radio frequency electrical signal are digital signals. The second half-wave radio frequency electrical signal is a radio frequency electrical signal having a positive half-amplitude or a negative half-amplitude of the full-wave radio frequency electrical signal in digital domain. The first half-wave radio frequency electrical signal is a radio frequency electrical signal having a positive half-amplitude or a negative half-amplitude of the full-wave radio frequency electrical signal in an analog domain. The half-wave radio frequency signal generation module is further configured to output the first half-wave radio frequency electrical signal to the modulated laser. The modulated laser is configured to: superimpose a third bias electrical signal on the first half-wave radio frequency electrical signal, and perform optical modulation on the first half-wave radio frequency electrical signal superimposed with the third bias electrical signal, to obtain a half-wave radio frequency optical signal. The half-wave radio frequency optical signal is a radio frequency optical signal having a positive half-amplitude or a negative half-amplitude of the full-wave radio frequency electrical signal. The modulated laser is further configured to send the half-wave radio frequency optical signal.

It can be learned that the half-wave radio frequency signal generation module converts, in digital domain, the full-wave radio frequency electrical signal into the half-wave radio frequency electrical signal with low power, and the modulated laser converts the half-wave radio frequency electrical signal into the half-wave radio frequency optical signal. Compared with a radio frequency optical signal having a full amplitude of the full-wave radio frequency electrical signal, average optical power of the half-wave radio frequency optical signal is lower, so that transmit optical power between a first communication apparatus and a second communication apparatus can be reduced, to further help reduce power consumption of an optical component. In addition, in a scenario in which an optical signal is transmitted between the first communication apparatus and the second communication apparatus through an optical fiber, the reduction of the transmit optical power further helps reduce a non-linear effect of optical fiber transmission, to reduce signal distortion caused by the non-linear effect of optical fiber transmission.

In an optional implementation, the second half-wave radio frequency electrical signal is a positive half-amplitude signal of the full-wave radio frequency electrical signal relative to a direct current component in digital domain, or the second half-wave radio frequency electrical signal is obtained by inverting a negative half-amplitude signal of the full-wave radio frequency electrical signal relative to the direct current component in digital domain.

In an optional implementation, the half-wave radio frequency signal generation module includes a digital pre-distortion module. The full-wave radio frequency electrical signal is a signal that undergoes digital pre-distortion processing performed by the digital pre-distortion module.

In an optional implementation, the first half-wave radio frequency electrical signal is a positive half-amplitude signal of the full-wave radio frequency electrical signal relative to the direct current component in analog domain, or the first half-wave radio frequency electrical signal is obtained by inverting a negative half-amplitude signal of the full-wave radio frequency electrical signal relative to the direct current component in analog domain.

In an optional implementation, the half-wave radio frequency optical signal is obtained by performing optical modulation on a positive half-amplitude signal of the full-wave radio frequency electrical signal relative to the direct current component, or the half-wave radio frequency optical signal is obtained by performing optical modulation on an inverted negative half-amplitude signal of the full-wave radio frequency electrical signal relative to the direct current component.

In an optional implementation, the apparatus further includes a waveform adjustment module, configured to: perform spectrum adjustment on the first half-wave radio frequency electrical signal by using a filtering function, and output a spectrum-adjusted first half-wave radio frequency electrical signal to the modulated laser. The modulated laser superimposes the third bias electrical signal on the first half-wave radio frequency electrical signal, and performs optical modulation on the first half-wave radio frequency electrical signal superimposed with the third bias electrical signal, to obtain the half-wave radio frequency optical signal; and is specifically configured to: superimpose the third bias electrical signal on the spectrum-adjusted first half-wave radio frequency electrical signal, and performs optical modulation on the spectrum-adjusted first half-wave radio frequency electrical signal superimposed with the third bias electrical signal, to obtain the half-wave radio frequency optical signal.

In an optional implementation, the modulated laser is a directly modulated laser, the third bias electrical signal is a second bias current signal, and a current corresponding to the second bias current signal is greater than or equal to a threshold current of the directly modulated laser. Alternatively, the modulated laser is an electro-absorption modulated laser, the third bias electrical signal is a second bias voltage signal, and a voltage corresponding to the second bias voltage signal is greater than a first voltage.

In an optional implementation, the second bias current signal is a third bias current signal corresponding to a third optical signal with a largest signal-to-noise ratio in multiple third optical signals. The multiple third optical signals are in one-to-one correspondence with multiple third bias current signals. Each third optical signal in the multiple third optical signals is obtained by performing optical modulation on the first half-wave radio frequency electrical signal superimposed with a third bias current signal corresponding to the third optical signal. Currents respectively corresponding to the multiple third bias current signals are different from each other, and the currents respectively corresponding to the multiple third bias current signals are all greater than or equal to the threshold current.

In an optional implementation, the second bias voltage signal is a third bias voltage signal corresponding to a fourth optical signal with a smallest adjacent channel leakage power ratio in multiple fourth optical signals. The multiple fourth optical signals are in one-to-one correspondence with multiple third bias voltage signals. Each fourth optical signal in the multiple fourth optical signals is obtained by performing optical modulation on the first half-wave radio frequency electrical signal superimposed with a third bias voltage signal corresponding to the fourth optical signal. Voltages respectively corresponding to the multiple third bias voltage signals are different from each other, and the voltages respectively corresponding to the multiple third bias voltage signals are all greater than or equal to the first voltage.

In addition, for beneficial effects of the foregoing optional implementations in this aspect, refer to beneficial effects of related implementations in the first aspect. Details are not described again.

According to a seventh aspect, an embodiment of this application provides a communication apparatus. The apparatus includes a photoelectric detector and a bandpass filter. The photoelectric detector is configured to receive a half-wave radio frequency optical signal. The half-wave radio frequency optical signal is a radio frequency optical signal having a positive half-amplitude or a negative half-amplitude of a full-wave radio frequency electrical signal. The photoelectric detector is further configured to: perform optical-to-electrical conversion on the half-wave radio frequency optical signal to obtain a first electrical signal, and output the first electrical signal to the bandpass filter. A passband of the photoelectric detector covers a spectrum of a fundamental frequency signal. The bandpass filter is configured to filter the first electrical signal to obtain the full-wave radio frequency electrical signal. A passband of the bandpass filter includes only the spectrum of the fundamental frequency signal. The full-wave radio frequency electrical signal is the fundamental frequency signal in the first electrical signal.

It can be learned that the half-wave radio frequency optical signal transmitted between a first communication apparatus and a second communication apparatus has the positive half-amplitude or the negative half-amplitude of the full-wave radio frequency electrical signal. Compared with a radio frequency optical signal having a full amplitude of the full-wave radio frequency electrical signal, the half-wave radio frequency optical signal has lower average optical power, so that transmit optical power between the first communication apparatus and the second communication apparatus can be reduced, to further help reduce power consumption of an optical component. In a scenario in which an optical signal is transmitted between the first communication apparatus and the second communication apparatus through an optical fiber, the reduction of the transmit optical power further helps reduce a non-linear effect of optical fiber transmission, to reduce signal distortion caused by the non-linear effect of optical fiber transmission. In addition, the photoelectric detector and the bandpass filter restore the half-wave radio frequency optical signal with low average optical power to the full-wave radio frequency electrical signal with high power. This simplifies a manner of restoring the full-wave radio frequency electrical signal. In addition, in a scenario in which the second communication apparatus needs to output the full-wave radio frequency electrical signal to an antenna for signal radiation, high radio frequency radiation power of the antenna can be implemented at low transmit optical power.

In an optional implementation, the half-wave radio frequency optical signal is obtained by performing optical modulation on a positive half-amplitude signal of the full-wave radio frequency electrical signal relative to a direct current component, or the half-wave radio frequency optical signal is obtained by performing optical modulation on an inverted negative half-amplitude signal of the full-wave radio frequency electrical signal relative to the direct current component.

According to an eighth aspect, an embodiment of this application provides a communication apparatus. The apparatus includes a photoelectric detector. The photoelectric detector is configured to receive a half-wave radio frequency optical signal. The half-wave radio frequency optical signal is a radio frequency optical signal having a positive half-amplitude or a negative half-amplitude of a full-wave radio frequency electrical signal. The photoelectric detector is further configured to: perform optical-to-electrical conversion on the half-wave radio frequency optical signal to obtain a first electrical signal, and determine the full-wave radio frequency electrical signal in the first electrical signal. A passband of the photoelectric detector includes only a spectrum of a fundamental frequency signal in the first electrical signal. The full-wave radio frequency electrical signal is the fundamental frequency signal in the first electrical signal.

It can be learned that the half-wave radio frequency optical signal transmitted between a first communication apparatus and a second communication apparatus has the positive half-amplitude or the negative half-amplitude of the full-wave radio frequency electrical signal. Compared with a radio frequency optical signal having a full amplitude of the full-wave radio frequency electrical signal, the half-wave radio frequency optical signal has lower average optical power, so that transmit optical power between the first communication apparatus and the second communication apparatus can be reduced, to further help reduce power consumption of an optical component. In a scenario in which an optical signal is transmitted between the first communication apparatus and the second communication apparatus through an optical fiber, the reduction of the transmit optical power further helps reduce a non-linear effect of optical fiber transmission, to reduce signal distortion caused by the non-linear effect of optical fiber transmission. In addition, the photoelectric detector restores the half-wave radio frequency optical signal with low average optical power to the full-wave radio frequency electrical signal with high power. This simplifies a manner of restoring the full-wave radio frequency electrical signal. In addition, in a scenario in which the second communication apparatus needs to output the full-wave radio frequency electrical signal to an antenna for signal radiation, high radio frequency radiation power of the antenna can be implemented at low transmit optical power.

In an optional implementation, the half-wave radio frequency optical signal is obtained by performing optical modulation on a positive half-amplitude signal of the full-wave radio frequency electrical signal relative to a direct current component, or the half-wave radio frequency optical signal is obtained by performing optical modulation on an inverted negative half-amplitude signal of the full-wave radio frequency electrical signal relative to the direct current component.

According to a ninth aspect, this application further provides a communication apparatus. The communication apparatus may be a first communication apparatus or a first communication apparatus, or may be a chip in the first communication apparatus or in the first communication apparatus, or may be a logic module or software that can implement all or a part functions of the first communication apparatus or the first communication apparatus. The communication apparatus has a function of implementing a part or all of the implementations of the first aspect, or has a function of implementing a part or all of the function implementations of the second aspect. The function may be implemented by hardware, or may be implemented by hardware executing corresponding software. The hardware or the software includes one or more units or modules corresponding to the function.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes a processing unit and a communication unit. The processing unit is configured to control the communication unit to receive and send data/signaling.

The processing unit is configured to generate a full-wave radio frequency electrical signal.

The processing unit is further configured to convert the full-wave radio frequency electrical signal into a half-wave radio frequency optical signal. The half-wave radio frequency optical signal is a radio frequency optical signal having a positive half-amplitude or a negative half-amplitude of the full-wave radio frequency electrical signal.

The communication unit is configured to send the half-wave radio frequency optical signal.

In addition, for another optional implementation of the communication apparatus in this aspect, refer to the related content of the first aspect. Details are not described herein again.

In another implementation, the communication apparatus includes a communication unit and a processing unit. The processing unit is configured to control the communication unit to receive and send data/signaling.

The communication unit is configured to receive a half-wave radio frequency optical signal. The half-wave radio frequency optical signal is a radio frequency optical signal having a positive half-amplitude or a negative half-amplitude of a full-wave radio frequency electrical signal.

The processing unit is configured to convert the half-wave radio frequency optical signal into the full-wave radio frequency electrical signal.

In addition, for another optional implementation of the communication apparatus in this aspect, refer to the related content of the second aspect. Details are not described herein again.

For example, the communication unit may be a transceiver or a communication interface, the storage unit may be a memory, and the processing unit may be a processor. The processor is coupled to the memory. The memory is configured to store a program or an instruction processor. The processor may be configured to cause, when the program or instructions are executed by the processor, the communication apparatus to perform the method according to the first aspect or the second aspect. The transceiver or the communication interface may be configured to receive and send a signal and/or data.

In an implementation, the communication apparatus includes a processor and a transceiver.

The processor is configured to generate a full-wave radio frequency electrical signal.

The processor is further configured to convert the full-wave radio frequency electrical signal into a half-wave radio frequency optical signal. The half-wave radio frequency optical signal is a radio frequency optical signal having a positive half-amplitude or a negative half-amplitude of the full-wave radio frequency electrical signal.

The transceiver is configured to send the half-wave radio frequency optical signal.

In addition, for another optional implementation of the communication apparatus in this aspect, refer to the related content of the first aspect. Details are not described herein again.

In another implementation, the communication apparatus includes a processor and a transceiver.

The transceiver is configured to receive a half-wave radio frequency optical signal. The half-wave radio frequency optical signal is a radio frequency optical signal having a positive half-amplitude or a negative half-amplitude of a full-wave radio frequency electrical signal.

The processor is configured to convert the half-wave radio frequency optical signal into the full-wave radio frequency electrical signal.

In addition, for another optional implementation of the communication apparatus in this aspect, refer to the related content of the second aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing; and the transceiver or the communication interface may be configured to perform, for example, but not limited to, radio frequency receiving and sending. The foregoing components may be separately disposed on chips that are independent of each other, or at least a part or all of the components may be disposed on a same chip. For example, the processor may be further classified into an analog baseband processor and a digital baseband processor. The analog baseband processor and the transceiver (or the communication interface) may be integrated on a same chip, and the digital baseband processor may be disposed on an independent chip. With continuous development of an integrated circuit technology, increasingly more components may be integrated on a same chip. For example, the digital baseband processor and multiple application processors (for example, but not limited to, a graphics processing unit and a multimedia processor) may be integrated on a same chip. Such a chip may be referred to as a system on a chip (System on a Chip, SoC). Whether the components are separately disposed on different chips or integrated and disposed on one or more chips usually depends on a requirement of a product design. Implementation forms of the foregoing components are not limited in embodiments of this application.

According to a tenth aspect, this application further provides a processor, configured to perform the foregoing methods. In processes of performing these methods, a process of sending the foregoing signal and a process of receiving the foregoing signal in the foregoing methods may be understood as a process of outputting the foregoing signal by the processor and a process of inputting the foregoing signal by the processor. When outputting the foregoing signal, the processor outputs the foregoing signal to a transceiver, so that the transceiver (or a communication interface) transmits the signal. After the foregoing signal is output by the processor, other processing may further need to be performed on the signal, and the signal arrives at the transceiver (or the communication interface). Similarly, when the processor receives the foregoing input signal, the transceiver (or the communication interface) receives the signal, and inputs the signal into the processor. Further, after the transceiver (or the communication interface) receives the signal, other processing may further need to be performed on the signal, and the signal is input to the processor.

Unless otherwise specified, or if operations such as sending and receiving related to the processor do not contradict an actual function or internal logic of the operations in related descriptions, all the operations may be more generally understood as operations such as outputting, receiving, and inputting of the processor, instead of operations of sending and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in embodiments of this application.

According to an eleventh aspect, this application further provides a communication system. The system includes the first communication apparatus and the first communication apparatus in the foregoing aspects. In another possible design, the system may further include another device that interacts with the first communication apparatus and/or the first communication apparatus in the solutions provided in this application.

According to a twelfth aspect, this application provides a computer-readable storage medium. The computer-readable storage medium stores a computer program. When the computer program is run, the method according to the first aspect or the second aspect is performed.

According to a thirteenth aspect, this application further provides a computer program product including instructions. The computer program product includes computer program code. When the computer program code is run, the method according to the first aspect or the second aspect is performed.

According to a fourteenth aspect, this application provides a chip system. The chip system includes a processor and an interface. The interface is configured to obtain a program or instructions. The processor is configured to invoke the program or the instructions to implement a function in the first aspect, or is configured to invoke the program or the instructions to implement a function in the second aspect. In a possible design, the chip system further includes a memory. The memory is configured to store program instructions and data that are necessary for a terminal. The chip system may include a chip, or may include the chip and another discrete component.

### BRIEF DESCRIPTION OF DRAWINGS

FIG. 1 is a diagram of a system architecture according to an embodiment of this application;
FIG. 2 is a diagram of optical modulation of an EML according to an embodiment of this application;
FIG. 3 is a diagram of optical modulation of a DML according to an embodiment of this application;
FIG. 4 is a diagram of a radio frequency electrical signal according to an embodiment of this application;
FIG. 5 is a diagram of a structure of a communication system according to an embodiment of this application;
FIG. 6 is a schematic flowchart of a signal transmission method according to an embodiment of this application;
FIG. 7 is a diagram of a half-wave radio frequency optical signal according to an embodiment of this application;
FIG. 8 is a diagram of performing optical modulation by an electro-absorption modulated laser according to an embodiment of this application;
FIG. 9 is a diagram of performing optical modulation by a directly modulated laser according to an embodiment of this application;
FIG. 10 is a diagram of performing optical modulation by another directly modulated laser according to an embodiment of this application;
FIG. 11 is a diagram of performing optical modulation by another electro-absorption modulated laser according to an embodiment of this application;
FIG. 12 is a diagram of spectrum adjustment according to an embodiment of this application;
FIG. 13a is a diagram of performing spectrum adjustment on a first half-wave radio frequency electrical signal according to an embodiment of this application;
FIG. 13b is a diagram of performing optical modulation by another directly modulated laser according to an embodiment of this application;
FIG. 13c is a diagram of performing optical modulation by another directly modulated laser according to an embodiment of this application;
FIG. 14a is another diagram of performing spectrum adjustment on a first half-wave radio frequency electrical signal according to an embodiment of this application;
FIG. 14b is a diagram of performing optical modulation by another directly modulated laser according to an embodiment of this application;
FIG. 14c is a diagram of performing optical modulation by another directly modulated laser according to an embodiment of this application;
FIG. 15 is a diagram of filtering according to an embodiment of this application;
FIG. 16 is a diagram of a first communication apparatus 1600 according to an embodiment of this application;
FIG. 17 is a diagram of a bias point control module 1602 according to an embodiment of this application;
FIG. 18 is a diagram of another first communication apparatus 1600 according to an embodiment of this application;
FIG. 19 is a diagram of another first communication apparatus 1600 according to an embodiment of this application;
FIG. 20 is a diagram of a first communication apparatus 2000 according to an embodiment of this application;
FIG. 21 is a diagram of another first communication apparatus 2000 according to an embodiment of this application;
FIG. 22 is a diagram of another first communication apparatus 2000 according to an embodiment of this application;
FIG. 23 is a diagram of another first communication apparatus 2000 according to an embodiment of this application;
FIG. 24 is a diagram of another first communication apparatus 2000 according to an embodiment of this application;
FIG. 25 is a diagram of a first communication apparatus 2500 according to an embodiment of this application;
FIG. 26 is a diagram of another first communication apparatus 2500 according to an embodiment of this application;
FIG. 27 is a diagram of another first communication apparatus 2500 according to an embodiment of this application;
FIG. 28 is a diagram of another first communication apparatus 2500 according to an embodiment of this application;
FIG. 29 is a diagram of another first communication apparatus 2500 according to an embodiment of this application;
FIG. 30 is a diagram of a second communication apparatus 3000 according to an embodiment of this application;
FIG. 31 is a diagram of a second communication apparatus 3100 according to an embodiment of this application;
FIG. 32 is a diagram of a structure of a communication apparatus according to an embodiment of this application;
FIG. 33 is a diagram of a structure of another communication apparatus according to an embodiment of this application; and
FIG. 34 is a diagram of a structure of another communication apparatus according to an embodiment of this application.

### DESCRIPTION OF EMBODIMENTS

The following describes embodiments of this application with reference to accompanying drawings in embodiments of this application.

First, to better understand a signal transmission method disclosed in embodiments of this application, a communication system to which embodiments of this application are applicable is described.

Technical solutions in embodiments of this application may be applied to various communication systems, for example, a global system for mobile communications, a long term evolution (long term evolution, LTE) system, a universal mobile telecommunications system, a 4th generation (4th generation, 4G) mobile communication technology system, a next-generation radio access network (next-generation radio access network, NG-RAN), a new radio (new radio, NR) technology system, and a 5th generation mobile communication technology (5th generation mobile network, 5G) system. With continuous development of communication technologies, the technical solutions in embodiments of this application may be further applied to a subsequent evolved communication system, for example, a 6th generation mobile communication technology (6th generation mobile network, 6G) system or 7th generation mobile communication technology (7th generation mobile network, 7G) system.

The technical solutions in embodiments of this application may be applied to a radio access scenario based on radio frequency optical transmission, for example, may be applied to high optical power downlinks in a wireless fronthaul system, a wireless base station system, a wireless access point system, and a radio frequency optical transmission system. The technical solutions provided in embodiments of this application may be further applied to a centralized wireless fidelity (wireless fidelity, Wi-Fi) access network (centralized Wi-Fi access network, C-WAN) of fiber to the room (fiber to the room, FTTR) or a C-WAN of fiber to the radio (fiber to the radio). In addition, the technical solutions provided in embodiments of this application can support both radio frequency signal transmission for communication and radio frequency signal transmission for sensing.

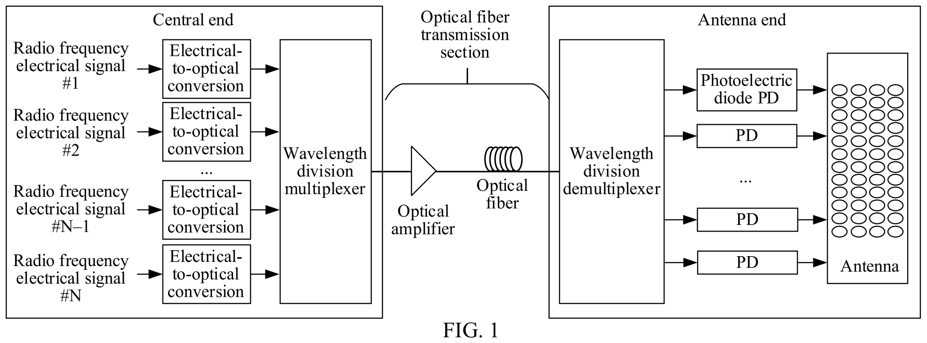

FIG. 1 is a diagram of a system architecture according to an embodiment of this application. The system architecture may include a central end, an optical fiber transmission section, and an antenna end. The central end may be configured to: generate a radio frequency electrical signal, convert the radio frequency electrical signal into a radio frequency optical signal, and perform wavelength division multiplexing on a radio frequency channel. The optical fiber transmission section may be configured to implement transmission and amplification of the radio frequency optical signal. The antenna end may be configured to: implement wavelength division demultiplexing, convert the radio frequency optical signal into the radio frequency electrical signal, and transmit the radio frequency electrical signal through an antenna.

For example, the central end may include an electrical-to-optical conversion component and a wavelength division multiplexer (wavelength division multiplexer, WDM), the optical fiber transmission section may include an optical amplifier (optical parametric amplifier, OPA) and an optical fiber, and the antenna end may include a wavelength division demultiplexer (dense wavelength division multiplexing, DWDM), a photoelectric diode (photoelectric diode, PD), and an antenna. The electrical-to-optical conversion component may be configured to convert the radio frequency electrical signal into the radio frequency optical signal. The electrical-to-optical conversion component may be, for example, a directly modulated laser (directly modulated laser, DML), an electro-absorption modulated laser (electro-absorption modulated laser, EML), or a Mach-Zehnder modulator (Mach-Zehnder modulator, MZM). The WDM may be configured to multiplex optical signals of different wavelengths, and the DWDM may be configured to demultiplex a multi-wavelength optical signal. The optical amplifier may be configured to amplify optical power of an optical signal. The optical fiber may be connected to the central end and the antenna end, and is configured to implement long-distance low-loss transmission of the radio frequency optical signal. The PD may be configured to convert the radio frequency optical signal into the radio frequency electrical signal. The antenna may be configured to implement spatial radiation and receiving of the radio frequency electrical signal.

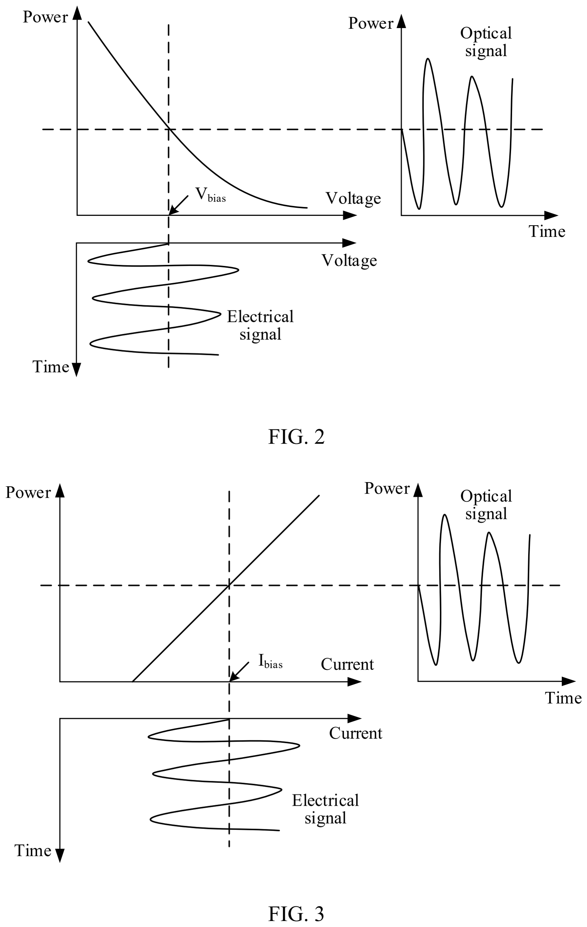

The EML implements optical modulation by changing a voltage, and the DML implements optical modulation by changing a current. For example, a direct current component of a radio frequency electrical signal input to the EML or the DML is 0. FIG. 2 is a diagram of optical modulation of an EML according to an embodiment of this application, and FIG. 3 is a diagram of optical modulation of a DML according to an embodiment of this application. In FIG. 2, a power-voltage curve represents a relationship between an operating voltage of the EML and optical power, a voltage-time curve represents an electrical signal obtained by superimposing a bias voltage signal (a voltage corresponding to the bias voltage signal is V_{bias}) on a radio frequency electrical signal input to the EML, and a power-time curve represents a radio frequency optical signal obtained by the EML by performing optical modulation on the radio frequency electrical signal superimposed with the bias voltage signal. In FIG. 3, a power-current curve represents a relationship between an operating current of the DML and optical power, a current-time curve represents an electrical signal obtained by superimposing a bias current signal (a current corresponding to the bias current signal is I_{bias}) on a radio frequency electrical signal input to the DML, and a power-time curve represents a radio frequency optical signal obtained by the DML by performing optical modulation on the radio frequency electrical signal superimposed with the bias current signal.

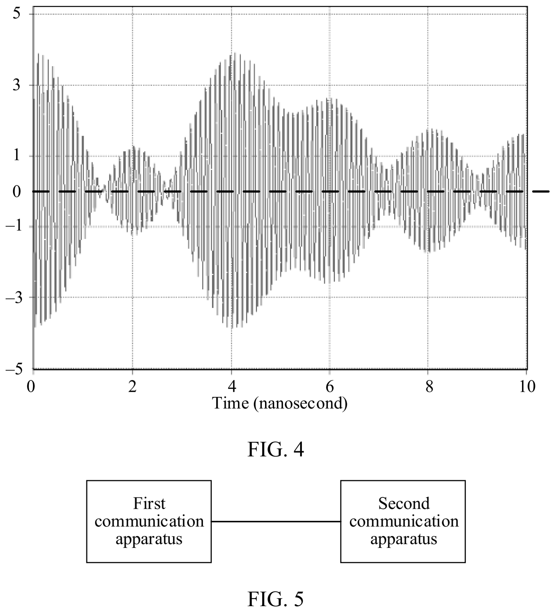

The optical modulation of the EML shown in FIG. 2 is used as an example below for description. The optical modulation of the DML is similar to the optical modulation of the EML, and details are not described again. With reference to FIG. 2, the bias voltage signal acts on the EML, so that a bias voltage of the EML is the voltage corresponding to the bias voltage signal. In this case, when the EML performs optical modulation, the operating voltage of the EML is set based on the electrical signal represented by the voltage-time curve in FIG. 2 (namely, the electrical signal obtained by superposing the bias voltage signal on the radio frequency electrical signal input to the EML), to obtain the radio frequency optical signal represented by the power-time curve in FIG. 2. If the voltage corresponding to the bias voltage signal is set to a proper value (that is, the bias voltage of the EML is set to the proper value), the operating voltage of the EML is located in a linear area within the power-voltage curve. In this case, the EML may perform linear optical modulation, and an optical signal obtained through optical modulation may have a same waveform as the complete radio frequency electrical signal input to the EML. For example, a radio frequency electrical signal shown in FIG. 4 is input to the EML, and the bias voltage of the EML is set to an intermediate voltage in the linear area within the power-voltage curve. In this case, the EML performs optical modulation to obtain a radio frequency optical signal whose waveform is the same as or basically the same as a complete waveform of the radio frequency electrical signal shown in FIG. 4.

FIG. 5 is a diagram of a structure of a communication system according to an embodiment of this application. The communication system includes a first communication apparatus and a second communication apparatus. The first communication apparatus may be configured to: convert a full-wave radio frequency electrical signal into a half-wave radio frequency optical signal, and send the half-wave radio frequency optical signal. The second communication apparatus may be configured to: receive the half-wave radio frequency optical signal, and convert the half-wave radio frequency optical signal into the full-wave radio frequency electrical signal. The communication system may further include a channel used for transmission of the half-wave radio frequency optical signal between the first communication apparatus and the second communication apparatus, for example, a transmission medium like an optical fiber or space. An optical fiber transmission link for transmitting an optical signal through an optical fiber may use single-wavelength transmission or wavelength division multiplexing transmission, and may include the optical fiber, an optical amplifier, a wavelength division multiplexer, a wavelength division demultiplexer, and the like. In addition, in embodiments of this application, the first communication apparatus may also be referred to as a half-wave radio frequency optical generation module, and the second communication apparatus may also be referred to as a waveform restoration module.

For example, the first communication apparatus may be mounted in a baseband processing unit (building baseband unit, BBU), a central unit (central unit, CU), or a distributed unit (distributed unit, DU), and the second communication apparatus may be mounted in a remote radio unit (remote radio unit, RRU) or a remote radio head (remote radio head, RRH). Alternatively, the first communication apparatus may be mounted in an RRU or an RRH, and the second communication apparatus may be mounted in a BBU, a DU, or a CU. Alternatively, the first communication apparatus may be mounted in a BBU, and the second communication apparatus may be mounted in an active antenna unit (active antenna unit, AAU). Alternatively, the first communication apparatus may be mounted in an AAU, and the second communication apparatus may be mounted in a BBU.

In embodiments of this application, a full-wave signal is a signal whose waveform is envelope-symmetric relative to a direct current component. For example, the signal shown in FIG. 4 is envelope-symmetric relative to a direct current component shown by a black dashed line. Therefore, the signal shown in FIG. 4 is a full-wave signal. A half-wave signal is a signal having a positive half-amplitude or a negative half-amplitude of the full-wave signal relative to the direct current component. The positive half-amplitude of the full-wave signal relative to the direct current component is an upper half-amplitude of the full-wave signal relative to the direct current component, and is greater than or equal to an amplitude of the direct current component. The negative half-amplitude of the full-wave signal relative to the direct current component is a lower half-amplitude of the full-wave signal relative to the direct current component, and is less than or equal to the amplitude of the direct current component. In embodiments of this application, the full-wave radio frequency electrical signal is a full-wave signal, and the half-wave radio frequency optical signal, a first half-wave radio frequency electrical signal, and a second half-wave radio frequency electrical signal are all half-wave signals.

Embodiments of this application are described below with reference to the accompanying drawings. In this application, a schematic flowchart shows a corresponding method by using an example in which the first communication apparatus and the second communication apparatus are used as execution bodies of interaction. However, the execution bodies of the interaction are not limited in this application. For example, the first communication apparatus in the figure may alternatively be a chip, a chip system, or a processor that supports the first communication apparatus in implementing the corresponding method, or may be a logic module or software that can implement all or a part of functions of the first communication apparatus. The second communication apparatus in the figure may alternatively be a chip, a chip system, or a processor that supports the second communication apparatus in implementing the corresponding method, or may be a logic module or software that can implement all or a part of functions of the second communication apparatus.

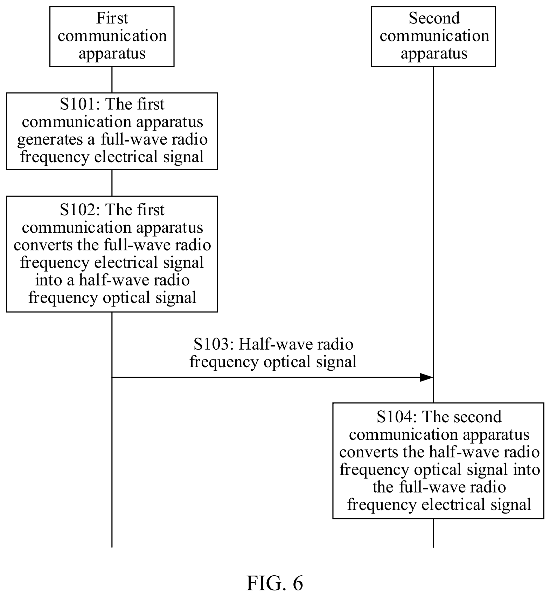

FIG. 6 is a schematic flowchart of a signal transmission method according to an embodiment of this application. The signal transmission method is described from a perspective of interaction between a first communication apparatus and a second communication apparatus. The signal transmission method includes the following steps.

S101: The first communication apparatus generates a full-wave radio frequency electrical signal. For example, the full-wave radio frequency electrical signal may be an alternating-current coupled radio frequency electrical signal whose direct current component is 0.

Optionally, the full-wave radio frequency electrical signal may be a signal that undergoes digital pre-distortion (digital pre-distortion, DPD) processing. The digital pre-distortion processing helps correct a non-linear effect caused by a subsequent optical modulation operation, to reduce signal distortion caused by the non-linear effect of the modulation. In addition, in a scenario in which an optical signal is transmitted between the first communication apparatus and the second communication apparatus through an optical fiber, the digital pre-distortion processing further helps correct a non-linear effect of the optical fiber, to reduce signal distortion caused by the non-linear effect of optical fiber transmission. The non-linear effect of the optical fiber transmission is, for example, stimulated Brillouin scattering (stimulated Brillouin scattering, SBS), self-phase modulation (self-phase modulation, SPM), cross-phase modulation (cross-phase modulation, XPM), or four-wave mixing (four-wave mixing, FWM).

In an optional implementation, the full-wave radio frequency electrical signal may be an analog signal obtained by performing baseband signal modulation, digital pre-distortion processing, digital-to-analog conversion, frequency mixing with a local oscillator, and amplification. In this implementation, that the first communication apparatus generates the full-wave radio frequency electrical signal may include: The first communication apparatus modulates a baseband signal, and performs digital pre-distortion processing on a modulated baseband signal; then performs digital-to-analog conversion on a digital signal obtained through digital pre-distortion processing, to obtain an intermediate-frequency analog signal; and performs frequency mixing on the analog signal and the local oscillator, and amplifies an electrical signal obtained through frequency mixing, to obtain the full-wave radio frequency electrical signal.

In another optional implementation, the full-wave radio frequency electrical signal may be an analog signal obtained by performing baseband signal modulation, digital pre-distortion processing, digital-to-analog conversion, and frequency mixing with a local oscillator. In this implementation, that the first communication apparatus generates the full-wave radio frequency electrical signal may include: The first communication apparatus modulates a baseband signal, and performs digital pre-distortion processing on a modulated baseband signal; then performs digital-to-analog conversion on a digital signal obtained through digital pre-distortion processing, to obtain an intermediate-frequency analog signal; and performs frequency mixing on the analog electrical signal and the local oscillator, to obtain the full-wave radio frequency electrical signal.

In still another optional implementation, the full-wave radio frequency electrical signal may be a digital signal obtained by performing baseband signal modulation, radio frequency modulation, and digital pre-distortion processing. In this implementation, that the first communication apparatus generates the full-wave radio frequency electrical signal may include: The first communication apparatus modulates a baseband signal, and performs radio frequency modulation on a modulated baseband signal; and performs digital pre-distortion processing on an electrical signal obtained through radio frequency modulation, to obtain the full-wave radio frequency electrical signal.

In still another optional implementation, the full-wave radio frequency electrical signal may be an electrical signal obtained by amplifying an analog signal received by the first communication apparatus through an antenna. In this implementation, the first communication apparatus may amplify the analog signal received through the antenna, to obtain the full-wave radio frequency electrical signal. For example, this implementation may be applied to a scenario in which the first communication apparatus is mounted in an RRU, an RRH, or an AAU.

In still another optional implementation, the full-wave radio frequency electrical signal may be an electrical signal obtained by performing amplification and frequency mixing with a local oscillator on an analog signal received by the first communication apparatus through an antenna. In this implementation, the first communication apparatus may amplify the analog signal received through the antenna, and performs frequency mixing on the local oscillator and the electrical signal obtained through amplification, to obtain the full-wave radio frequency electrical signal. For example, this implementation may be applied to a scenario in which the first communication apparatus is mounted in an RRU, an RRH, or an AAU.

S102: The first communication apparatus converts the full-wave radio frequency electrical signal into a half-wave radio frequency optical signal. The half-wave radio frequency optical signal is a radio frequency optical signal having a positive half-amplitude or a negative half-amplitude of the full-wave radio frequency electrical signal.

The positive half-amplitude of the full-wave radio frequency electrical signal refers to a positive half-amplitude of the full-wave radio frequency electrical signal relative to a direct current component, and is greater than or equal to an amplitude of the direct current component. The negative half-amplitude of the full-wave radio frequency electrical signal refers to a negative half-amplitude of the full-wave radio frequency electrical signal relative to the direct current component, and is less than or equal to the amplitude of the direct current component. It can be learned that, compared with a radio frequency optical signal having a full amplitude of the full-wave radio frequency electrical signal, average optical power of the half-wave radio frequency optical signal is lower, so that transmit optical power between the first communication apparatus and the second communication apparatus can be reduced, to further help reduce power consumption of an optical component. In addition, in the scenario in which the optical signal is transmitted between the first communication apparatus and the second communication apparatus through the optical fiber, the reduction of the transmit optical power further helps reduce the non-linear effect of the optical fiber transmission, to reduce the signal distortion caused by the non-linear effect of the optical fiber transmission.

In addition, in embodiments of this application, the half-wave radio frequency optical signal is not limited to having an absolute positive half-amplitude or an absolute negative half-amplitude of the full-wave radio frequency electrical signal relative to the direct current component. It may be understood that, in addition to having a full positive half-amplitude or a full negative half-amplitude of the full-wave radio frequency electrical signal relative to the direct current component, the half-wave radio frequency optical signal may alternatively have a large part of the positive half-amplitude or a large part of the negative half-amplitude of the full-wave radio frequency electrical signal relative to the direct current component; may alternatively have the full positive half-amplitude and a small part of the negative half-amplitude of the full-wave radio frequency electrical signal relative to the direct current component, or have the full negative half-amplitude and a small part of the positive half-amplitude of the full-wave radio frequency electrical signal relative to the direct current component; or may have a large part of the positive half-amplitude and a small part of the negative half-amplitude of the full-wave radio frequency electrical signal relative to the direct current component, or have a large part of the negative half-amplitude and a small part of the positive half-amplitude of the full-wave radio frequency electrical signal relative to the direct current component.

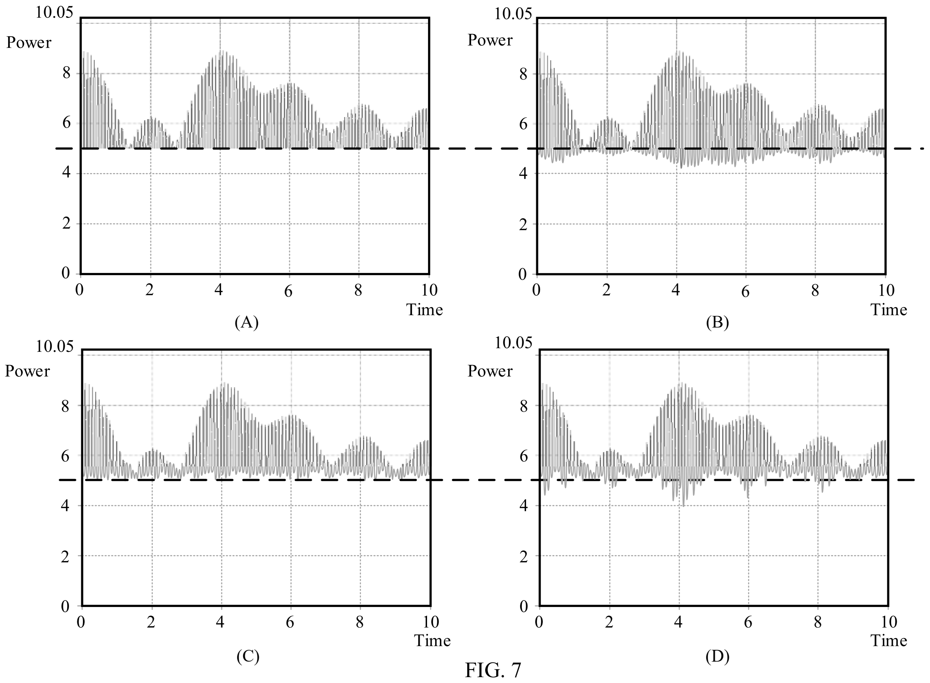

For example, the full-wave radio frequency electrical signal is the radio frequency electrical signal shown in FIG. 4. Possible waveforms of the half-wave radio frequency optical signal are shown in a part (A) to a part (D) in FIG. 7. Dashed lines in the part (A) to the part (D) in FIG. 7 represent power after optical modulation is performed on a direct current component corresponding to the radio frequency electrical signal shown in FIG. 4. In FIG. 7, the half-wave radio frequency optical signal shown in the part (A) has the full positive half-amplitude of the full-wave radio frequency electrical signal relative to the direct current component, the half-wave radio frequency optical signal shown in the part (B) has the full positive half-amplitude and a small part of the negative half-amplitude of the full-wave radio frequency electrical signal relative to the direct current component, the half-wave radio frequency optical signal shown in the part (C) has a large part of the positive half-amplitude of the full-wave radio frequency electrical signal relative to the direct current component, and the half-wave radio frequency optical signal in the part (D) has a large part of the positive half-amplitude and a small part of the negative half-amplitude of the full-wave radio frequency electrical signal relative to the direct current component.

Optionally, the half-wave radio frequency optical signal is obtained by performing optical modulation on a positive half-amplitude signal of the full-wave radio frequency electrical signal relative to the direct current component, or the half-wave radio frequency optical signal is obtained by performing optical modulation on an inverted negative half-amplitude signal of the full-wave radio frequency electrical signal relative to the direct current component. The positive half-amplitude signal of the full-wave radio frequency electrical signal relative to the direct current component is a radio frequency electrical signal having the positive half-amplitude of the full-wave radio frequency electrical signal relative to the direct current component. The negative half-amplitude signal of the full-wave radio frequency electrical signal relative to the direct current component is a radio frequency electrical signal having the negative half-amplitude of the full-wave radio frequency electrical signal relative to the direct current component.

In an optional implementation, that the first communication apparatus converts the full-wave radio frequency electrical signal into the half-wave radio frequency optical signal may include: The first communication apparatus superimposes a first bias electrical signal on the full-wave radio frequency electrical signal. The first bias electrical signal is a first bias voltage signal or a first bias current signal. The first communication apparatus performs optical modulation on the full-wave radio frequency electrical signal superimposed with the first bias electrical signal, to obtain the half-wave radio frequency optical signal. This implementation may be applied to a case in which the full-wave radio frequency electrical signal is the analog signal obtained by performing baseband signal modulation, digital pre-distortion processing, digital-to-analog conversion, frequency mixing with a local oscillator, and amplification, may also be applied to a case in which the full-wave radio frequency electrical signal is the electrical signal obtained by amplifying the analog signal received by the first communication apparatus through the antenna, and may also be applied to a case in which the full-wave radio frequency electrical signal is the electrical signal obtained by performing amplification and frequency mixing with the local oscillator on the analog signal received by the first communication apparatus through the antenna. Optionally, the first communication apparatus may superimpose the first bias electrical signal on the full-wave radio frequency electrical signal by using a coupler.

In two cases in which the first bias electrical signal is the first bias voltage signal and the first bias electrical signal is the first bias current signal, specific manners of the operation that the first communication apparatus performs optical modulation on the full-wave radio frequency electrical signal superimposed with the first bias electrical signal to obtain the half-wave radio frequency optical signal may be different. The following separately describes the two cases in which the first bias electrical signal is the first bias voltage signal and the first bias electrical signal is the first bias current signal, as described in the following optional implementation 1.1 and implementation 1.2.

Implementation 1.1: The first bias electrical signal is the first bias voltage signal. In this case, that the first communication apparatus performs optical modulation on the full-wave radio frequency electrical signal superimposed with the first bias electrical signal, to obtain the half-wave radio frequency optical signal may include: The first communication apparatus performs, via an electro-absorption modulated laser, optical modulation on the full-wave radio frequency electrical signal superimposed with the first bias voltage signal, to obtain the half-wave radio frequency optical signal.

It may be understood that the first bias voltage signal acts on the electro-absorption modulated laser, so that a bias voltage of the electro-absorption modulated laser is a voltage corresponding to the first bias voltage signal. The electro-absorption modulated laser performs optical modulation on the full-wave radio frequency electrical signal superimposed with the first bias voltage signal, in other words, the electro-absorption modulated laser whose bias voltage is the voltage corresponding to the first bias voltage signal performs optical modulation on the full-wave radio frequency electrical signal. In this optical modulation process, an operating voltage of the electro-absorption modulated laser is set based on the full-wave radio frequency electrical signal superimposed with the first bias voltage signal. The electro-absorption modulated laser is a laser that implements optical modulation by changing a voltage. For example, the electro-absorption modulated laser may be an EML.

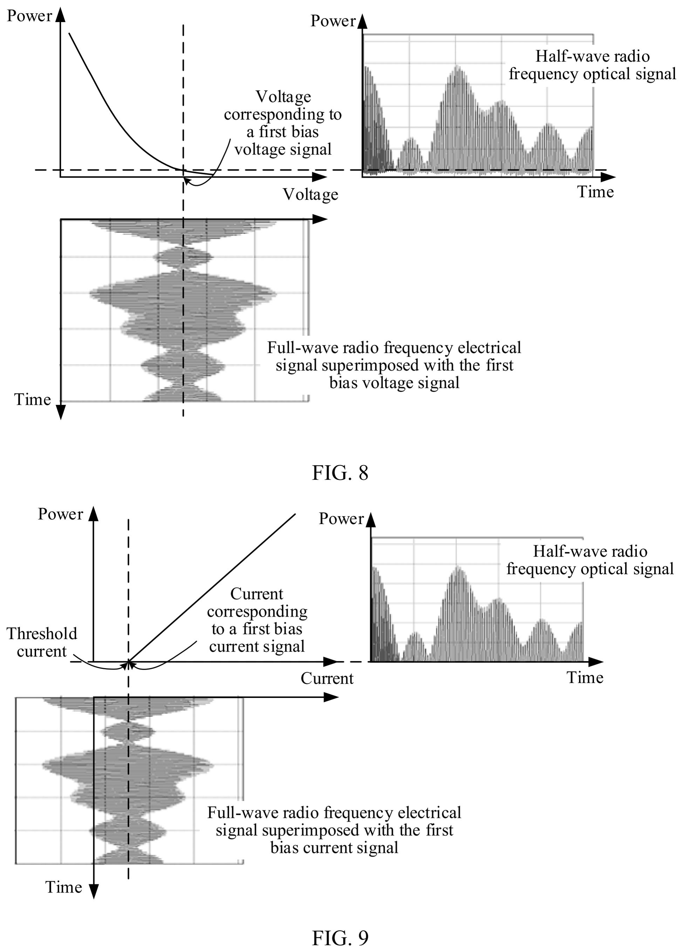

For example, the direct current component corresponding to the full-wave radio frequency electrical signal is 0. With reference to FIG. 8, in FIG. 8, a power-voltage curve represents a relationship between an operating voltage of an electro-absorption modulated laser and optical power, a voltage-time curve represents a full-wave radio frequency electrical signal superimposed with a first bias voltage signal, and a power-time curve represents a half-wave radio frequency optical signal. It can be learned that a smaller operating voltage of the electro-absorption modulated laser indicates larger optical power obtained by the electro-absorption modulated laser through optical modulation, and a larger operating voltage of the electro-absorption modulated laser indicates smaller optical power obtained by the electro-absorption modulated laser through optical modulation. Based on this feature of the electro-absorption modulated laser, the bias voltage of the electro-absorption modulated laser is set to a low output optical power point (a high voltage) corresponding to the first bias voltage signal, so that the operating voltage of the electro-absorption modulated laser is set based on the electrical signal obtained by superimposing the first bias voltage signal on the full-wave radio frequency electrical signal. In this way, the electro-absorption modulated laser performs optical modulation to obtain the half-wave radio frequency optical signal.

Optionally, the electro-absorption modulated laser may include a laser diode and an electro-absorption modulator. The first communication apparatus may generate a continuous light wave signal via the laser diode; and modulate, via the electro-absorption modulator, the full-wave radio frequency electrical signal superimposed with the first bias voltage signal onto the continuous light wave signal, to obtain the half-wave radio frequency optical signal. It can be learned that, the first communication apparatus can generate a light source via the laser diode, and implements optical modulation via the electro-absorption modulator. In other words, light source generation and optical modulation are decoupled. This helps reduce impact of light source bandwidth on high-frequency modulation when the voltage corresponding to the first bias voltage signal is high. In addition, the laser diode included in the electro-absorption modulated laser may be, for example, a laser diode (laser diode, LD) with a low relative intensity noise (relative intensity noise, RIN), and the electro-absorption modulator may be, for example, an electro-absorption modulator (electro-absorption modulated laser, EAM).

Implementation 1.2: The first bias electrical signal is the first bias current signal. In this case, that the first communication apparatus performs optical modulation on the full-wave radio frequency electrical signal superimposed with the first bias electrical signal, to obtain the half-wave radio frequency optical signal may include: The first communication apparatus performs, via a directly modulated laser, optical modulation on the full-wave radio frequency electrical signal superimposed with the first bias current signal, to obtain the half-wave radio frequency optical signal. A current corresponding to the first bias current signal is greater than or equal to a threshold current of the directly modulated laser, and a difference between the current corresponding to the first bias current signal and the threshold current is within a first range.

It may be understood that the first bias current signal acts on the directly modulated laser, so that a bias current of the directly modulated laser is a current corresponding to the first bias current signal. The directly modulated laser performs optical modulation on the full-wave radio frequency electrical signal superimposed with the first bias current signal, in other words, the directly modulated laser whose bias current is the current corresponding to the first bias current signal performs optical modulation on the full-wave radio frequency electrical signal. In this optical modulation process, an operating current of the directly modulated laser is set based on the full-wave radio frequency electrical signal superimposed with the first bias current signal. The directly modulated laser is a laser that implements optical modulation by changing a current. For example, the directly modulated laser may be a DML.

The first range satisfies: When the difference between the current corresponding to the first bias current signal and the threshold current is within the first range, a radio frequency electrical signal whose corresponding current is less than the threshold current is present in the full-wave radio frequency electrical signal superimposed with the first bias current signal. This can ensure that when a direct current laser performs optical modulation, the radio frequency electrical signal whose corresponding current is less than the threshold current can be truncated, to obtain the half-wave radio frequency optical signal. The first range may be predefined, or may be determined based on performance of the directly modulated laser. This is not limited. In addition, the first range may be set to be small, that is, the current corresponding to the first bias current signal is equal to the threshold current or slightly greater than the threshold current. This helps the first communication apparatus perform, via the directly modulated laser, optical modulation on the full-wave radio frequency electrical signal superimposed with the first bias current signal, so that the half-wave radio frequency optical signal with lower average optical power can be obtained.

For example, the direct current component corresponding to the full-wave radio frequency electrical signal is 0. With reference to FIG. 9, in FIG. 9, a power-current curve represents a relationship between an operating current of a directly modulated laser and optical power, a current-time curve represents a full-wave radio frequency electrical signal superimposed with a first bias current signal, and a power-time curve represents a half-wave radio frequency optical signal. It can be learned that, when the operating current of the directly modulated laser is less than or equal to the threshold current, optical power obtained by the directly modulated laser by performing optical modulation is zero. When the operating current of the directly modulated laser is greater than the threshold current, a larger operating current of the directly modulated laser indicates larger optical power obtained by the directly modulated laser by performing optical modulation. Based on this feature of the directly modulated laser, the first bias current signal whose difference between the corresponding current and the threshold current is within the first range is superimposed on the full-wave radio frequency electrical signal, so that the operating current of the directly modulated laser is set based on the electrical signal obtained by superimposing the first bias current signal on the full-wave radio frequency electrical signal. In this way, the directly modulated laser can truncate the radio frequency electrical signal whose corresponding current is less than the threshold current in the full-wave radio frequency electrical signal superimposed with the first bias current signal, and perform optical modulation on a radio frequency electrical signal whose corresponding current is greater than the threshold current in the full-wave radio frequency electrical signal superimposed with the first bias current signal, to obtain the half-wave radio frequency optical signal.

The following further describes the first bias electrical signal. The following descriptions of the first bias electrical signal are applicable to both the case in which the first bias electrical signal is the first bias voltage signal and the case in which the first bias electrical signal is the first bias current signal.

Optionally, the first bias electrical signal satisfies: A ratio of coefficients of multiple spectral components corresponding to an electrical signal obtained by performing optical-to-electrical conversion on a first optical signal satisfies a first ratio. The first optical signal is an optical signal obtained by performing optical modulation on an electrical signal for bias point detection superimposed with the first bias electrical signal. A coefficient of each of the multiple spectral components corresponding to the electrical signal obtained by performing optical-to-electrical conversion on the first optical signal may be obtained as follows: The first communication apparatus performs optical-to-electrical conversion on the first optical signal, and sequentially performs filtering, amplification, analog-to-digital conversion, and spectrum analysis on the electrical signal obtained through optical-to-electrical conversion, to obtain the coefficient. In addition, the first ratio may be determined based on a type of the electrical signal for bias point detection, and there may be different first ratios when different types of electrical signals for bias point detection are used.

For example, the electrical signal for bias point detection may be a low-frequency sine wave signal, and a frequency of the low-frequency sine wave signal is far less than a frequency of the full-wave radio frequency electrical signal. For example, the low-frequency sine wave signal may be a low-frequency single-frequency sine wave signal. When the electrical signal for bias point detection is the low-frequency sine wave signal, the first bias electrical signal satisfies: An error between 0.32:0.5:0.21:0 and a ratio of a coefficient corresponding to a direct current component, a coefficient corresponding to a first-order harmonic component, a coefficient corresponding to a second-order harmonic component, and a coefficient corresponding to a third-order harmonic component that are corresponding to the electrical signal obtained by performing optical-to-electrical conversion on the first optical signal is within a second range. In other words, the first communication apparatus may perform optical modulation on the low-frequency sine wave signal superimposed with the first bias electrical signal, to obtain the first optical signal; and perform optical-to-electrical conversion on the first optical signal, and sequentially perform filtering, amplification, analog-to-digital conversion, and spectrum analysis on the electrical signal obtained through optical-to-electrical conversion, to obtain the coefficient corresponding to each spectral component corresponding to the electrical signal obtained by performing optical-to-electrical conversion on the first optical signal. The error between 0.32:0.5:0.21:0 and the ratio of the coefficient corresponding to the direct current component, the coefficient corresponding to the first-order harmonic component, the coefficient corresponding to the second-order harmonic component, and the coefficient corresponding to the third-order harmonic component is within the second range.

The second range may be predefined, or may be determined based on a requirement on performance of the first communication apparatus. Optionally, the second range may be set to be small, so that the error between 0.32:0.5:0.21:0 and the ratio of the coefficient corresponding to the direct current component, the coefficient corresponding to the first-order harmonic component, the coefficient corresponding to the second-order harmonic component, and the coefficient corresponding to the third-order harmonic component that are corresponding to the electrical signal obtained by performing optical-to-electrical conversion on the first optical signal is small. A smaller error between 0.32:0.5:0.21:0 and the ratio of the coefficient corresponding to the direct current component, the coefficient corresponding to the first-order harmonic component, the coefficient corresponding to the second-order harmonic component, and the coefficient corresponding to the third-order harmonic component that are corresponding to the electrical signal obtained by performing optical-to-electrical conversion on the first optical signal indicates that the waveform of the half-wave radio frequency optical signal obtained based on the first bias current signal is closer to a waveform of the full positive half-amplitude or the full negative half-amplitude of the full-wave radio frequency electrical signal relative to the direct current component, and the half-wave radio frequency optical signal with lower average optical power can be obtained. In this case, the transmit optical power between the first communication apparatus and the second communication apparatus is lower. This can more effectively reduce the power consumption of the optical component, and more effectively reduce the non-linear effect of the optical fiber transmission in the scenario in which the optical signal is transmitted between the first communication apparatus and the second communication apparatus through the optical fiber.

Optionally, the first communication apparatus may determine the first bias electrical signal in the following operations: The first communication apparatus generates an electrical signal for bias point detection. The electrical signal for bias point detection is an analog signal that undergoes digital-to-analog conversion. The first communication apparatus superimposes a second bias electrical signal on the electrical signal for bias point detection, and performs optical modulation on the electrical signal for bias point detection superimposed with the second bias electrical signal, to obtain a second optical signal. If a ratio of coefficients of multiple spectral components corresponding to an electrical signal obtained by performing optical-to-electrical conversion on the second optical signal satisfies the first ratio, the first communication apparatus may determine the first bias electrical signal as the second bias electrical signal; or if a ratio of coefficients of multiple spectral components corresponding to an electrical signal obtained by performing optical-to-electrical conversion on the second optical signal does not satisfy the first ratio, the first communication apparatus may adjust the second bias electrical signal, superimpose an adjusted second bias electrical signal on the electrical signal for bias point detection, and perform optical modulation on the electrical signal for bias point detection superimposed with the adjusted second bias electrical signal. The first communication apparatus determines whether a ratio of coefficients of multiple spectral components corresponding to an electrical signal obtained by performing optical-to-electrical conversion on an optical signal obtained through optical modulation satisfies the first ratio. When the ratio satisfies the first ratio, the first communication apparatus may determine the first bias electrical signal as the adjusted second bias electrical signal.

When the ratio does not satisfy the first ratio, the first communication apparatus performs the operations again: adjusting the second bias electrical signal, superimposing an adjusted second bias electrical signal on the electrical signal for bias point detection, performing optical modulation on the electrical signal for bias point detection superimposed with the adjusted second bias electrical signal, and determining whether a ratio of coefficients of multiple spectral components corresponding to an electrical signal obtained by performing optical-to-electrical conversion on an optical signal obtained through optical modulation satisfies the first ratio. When the adjusted second bias electrical signal can satisfy that the ratio of the coefficients of the multiple spectral components corresponding to the electrical signal obtained by the first communication apparatus by performing optical-to-electrical conversion on the optical signal obtained through optical modulation satisfies the first ratio, the first communication apparatus determines the adjusted second bias electrical signal as the first bias electrical signal, and no longer performs the operations: adjusting the second bias electrical signal, superimposing an adjusted second bias electrical signal on the electrical signal for bias point detection, performing optical modulation on the electrical signal for bias point detection superimposed with the adjusted second bias electrical signal, and determining whether a ratio of coefficients of multiple spectral components corresponding to an electrical signal obtained by performing optical-to-electrical conversion on an optical signal obtained through optical modulation satisfies the first ratio.

In addition, in a time division duplex (time division duplexing, TDD) mode, a process in which the first communication apparatus determines the first bias electrical signal in the foregoing operations may be performed in idle time in which the first communication apparatus does not generate a full-wave radio frequency electrical signal. In the idle time, the first communication apparatus may continuously or periodically generate an electrical signal for bias point detection. The first communication apparatus may not stop generating an electrical signal for bias point detection until the first communication apparatus determines the first bias electrical signal or non-idle time in which the first communication apparatus generates the full-wave radio frequency electrical signal arrives.

In addition, the operations that the first communication apparatus performs optical modulation on the electrical signal for bias point detection superimposed with the second bias electrical signal, and the first communication apparatus performs optical modulation on the electrical signal for bias point detection superimposed with the adjusted second bias electrical signal are similar to the operation that the first communication apparatus performs optical modulation on the full-wave radio frequency electrical signal superimposed with the first bias electrical signal. For specific descriptions, refer to the foregoing related descriptions. Details are not described again.

The case in which the first bias electrical signal is the first bias voltage signal is used as an example below to describe how the first communication apparatus determines the first bias electrical signal. The case in which the first bias electrical signal is the first bias current signal is similar to the case in which the first bias electrical signal is the first bias voltage signal. Details are not described.

For example, the first communication apparatus generates an electrical signal for bias point detection. The first communication apparatus superimposes a voltage signal #1 (a voltage corresponding to the voltage signal #1 is V₁) on the electrical signal for bias point detection, and performs optical modulation on the electrical signal for bias point detection superimposed with the voltage signal #1, to obtain an optical signal #1. A ratio of coefficients of multiple spectral components corresponding to an electrical signal obtained by the first communication apparatus by performing optical-to-electrical conversion on the optical signal #1 does not satisfy the first ratio. Therefore, the first communication apparatus may adjust a bias voltage signal to be superimposed on the electrical signal for bias point detection to a voltage signal #2 (a voltage corresponding to the voltage signal #2 is V₂). Then, the first communication apparatus superimposes the voltage signal #2 on the electrical signal for bias point detection, and performs optical modulation on the electrical signal for bias point detection superimposed with the voltage signal #2, to obtain an optical signal #2. A ratio of coefficients of multiple spectral components corresponding to an electrical signal obtained by the first communication apparatus by performing optical-to-electrical conversion on the optical signal #2 still does not satisfy the first ratio. Therefore, the first communication apparatus may adjust a bias voltage signal to be superimposed on the electrical signal for bias point detection to a voltage signal #3 (a voltage corresponding to the voltage signal #3 is V₃). Then, the first communication apparatus superimposes the voltage signal #3 on the electrical signal for bias point detection, and performs optical modulation on the electrical signal for bias point detection superimposed with the voltage signal #3, to obtain an optical signal #3. If a ratio of coefficients of multiple spectral components corresponding to an electrical signal obtained by the first communication apparatus by performing optical-to-electrical conversion on the optical signal #3 satisfies the first ratio, the first communication apparatus may determine the voltage signal #3 as the first bias voltage signal.

In another optional implementation, that the first communication apparatus converts the full-wave radio frequency electrical signal into the half-wave radio frequency optical signal may include: The first communication apparatus converts the full-wave radio frequency electrical signal into a first half-wave radio frequency electrical signal. The first half-wave radio frequency electrical signal is a radio frequency electrical signal having a positive half-amplitude or a negative half-amplitude of the full-wave radio frequency electrical signal in analog domain. The first communication apparatus superimposes a third bias electrical signal on the first half-wave radio frequency electrical signal via a modulated laser, and performs optical modulation on a first half-wave radio frequency electrical signal superimposed with the third bias electrical signal, to obtain the half-wave radio frequency optical signal. It can be learned that the first communication apparatus may first convert the full-wave radio frequency electrical signal used as a full-wave signal into the first half-wave radio frequency electrical signal used as a half-wave signal, and convert the first half-wave radio frequency electrical signal used as the half-wave signal into a half-wave radio frequency optical signal used as a half-wave signal, to convert the full-wave radio frequency electrical signal into the half-wave radio frequency optical signal.

The positive half-amplitude of the full-wave radio frequency electrical signal in analog domain refers to a positive half-amplitude of the full-wave radio frequency electrical signal relative to the direct current component in analog domain, and the negative half-amplitude of the full-wave radio frequency electrical signal in analog domain refers to a negative half-amplitude of the full-wave radio frequency electrical signal relative to the direct current component in analog domain. In addition, in embodiments of this application, the first half-wave radio frequency electrical signal is not limited to having an absolute positive half-amplitude or an absolute negative half-amplitude of the full-wave radio frequency electrical signal relative to the direct current component in analog domain, which is similar to descriptions of the half-wave radio frequency optical signal. For specific descriptions, refer to the foregoing related descriptions of the half-wave radio frequency optical signal. Details are not described herein again.

Optionally, the first half-wave radio frequency electrical signal is a positive half-amplitude signal of the full-wave radio frequency electrical signal relative to the direct current component in analog domain, or the first half-wave radio frequency electrical signal is obtained by inverting a negative half-amplitude signal of the full-wave radio frequency electrical signal relative to the direct current component in analog domain.

For two cases in which the full-wave radio frequency electrical signal is an analog signal and the full-wave radio frequency electrical signal is a digital signal, the following separately describes an operation that the first communication apparatus converts the full-wave radio frequency electrical signal into the first half-wave radio frequency electrical signal, as described in the following optional Implementation 2.1 and Implementation 2.2.

Implementation 2.1: The full-wave radio frequency electrical signal is the analog signal. For example, the full-wave radio frequency electrical signal is the analog signal obtained by performing baseband signal modulation, digital pre-distortion processing, digital-to-analog conversion, and frequency mixing with a local oscillator, or the full-wave radio frequency electrical signal is the electrical signal obtained by amplifying the analog signal received by the first communication apparatus through the antenna, or the full-wave radio frequency electrical signal is the electrical signal obtained by performing amplification and frequency mixing with the local oscillator on the analog signal received by the first communication apparatus through the antenna. In this case, that the first communication apparatus converts the full-wave radio frequency electrical signal into the first half-wave radio frequency electrical signal may include: The first communication apparatus converts the full-wave radio frequency electrical signal into the first half-wave radio frequency electrical signal via a low-noise power amplifier. It can be learned that the first communication apparatus can convert, in analog domain via the low-noise power amplifier, the full-wave radio frequency electrical signal into the first half-wave radio frequency electrical signal. The low-noise power amplifier may be configured to process a radio frequency electrical signal used as a full-wave signal to obtain a radio frequency electrical signal used as a half-wave signal. The low-noise power amplifier may be, for example, a low noise amplifier (low noise amplifier, LNA).

For example, the low-noise power amplifier may be a class-B low-noise power amplifier (for example, a class-B LNA), and the class-B low-noise power amplifier has a small adjacent channel leakage power ratio (adjacent channel leakage power ratio, ACLR). A first half-wave radio frequency electrical signal generated by the class-B low-noise power amplifier may be obtained through accurate truncation to an amplitude midpoint of the full-wave radio frequency electrical signal (that is, a position of the direct current component corresponding to the full-wave radio frequency electrical signal). In other words, the first half-wave radio frequency electrical signal obtained by using the class-B low-noise power amplifier may have the full positive half-amplitude or the full negative half-amplitude of the full-wave radio frequency electrical signal relative to the direct current component. For another example, when an ACLR performance requirement is allowed, the low-noise power amplifier may be an AB-class low-noise power amplifier (for example, an AB-class LNA) or a C-class low-noise power amplifier (for example, a C-class LNA). Both an ACLR of the AB-class low-noise power amplifier and an ACLR of the C-class low-noise power amplifier are slightly higher than an ACLR of a B-class low-noise power amplifier.

Implementation 2.2: The full-wave radio frequency electrical signal is the digital signal. For example, the full-wave radio frequency electrical signal is the digital signal obtained by performing baseband signal modulation, radio frequency modulation, and digital pre-distortion processing. In this case, that the first communication apparatus converts the full-wave radio frequency electrical signal into the first half-wave radio frequency electrical signal may include: The first communication apparatus converts the full-wave radio frequency electrical signal into a second half-wave radio frequency electrical signal. The second half-wave radio frequency electrical signal is a radio frequency electrical signal having a positive half-amplitude or a negative half-amplitude of the full-wave radio frequency electrical signal in digital domain. The first communication apparatus performs digital-to-analog conversion on the second half-wave radio frequency electrical signal to obtain the first half-wave radio frequency electrical signal. It can be learned that the second half-wave radio frequency electrical signal is a digital signal. The first communication apparatus may convert the full-wave radio frequency electrical signal into the second half-wave radio frequency electrical signal in digital domain, and perform digital-to-analog conversion on the second half-wave radio frequency electrical signal used as the digital signal, to obtain the first half-wave radio frequency electrical signal used as an analog signal.

The positive half-amplitude of the full-wave radio frequency electrical signal in digital domain refers to a positive half-amplitude of the full-wave radio frequency electrical signal relative to the direct current component in digital domain, and the negative half-amplitude of the full-wave radio frequency electrical signal in digital domain refers to a negative half-amplitude of the full-wave radio frequency electrical signal relative to the direct current component in digital domain. In addition, in embodiments of this application, the second half-wave radio frequency electrical signal is not limited to having an absolute positive half-amplitude or an absolute negative half-amplitude of the full-wave radio frequency electrical signal relative to the direct current component in digital domain, which is similar to descriptions of the half-wave radio frequency optical signal. For specific descriptions, refer to the foregoing related descriptions of the half-wave radio frequency optical signal. Details are not described herein again.

Optionally, the second half-wave radio frequency electrical signal is a positive half-amplitude signal of the full-wave radio frequency electrical signal relative to the direct current component in digital domain, or the second half-wave radio frequency electrical signal is obtained by inverting a negative half-amplitude signal of the full-wave radio frequency electrical signal relative to the direct current component in digital domain.

For two cases in which the modulated laser is a directly modulated laser and the modulated laser is an electro-absorption modulated laser, the following separately describes an operation that the first communication apparatus superimposes the third bias electrical signal on the first half-wave radio frequency electrical signal via the modulated laser, and performs optical modulation on the first half-wave radio frequency electrical signal superimposed with the third bias electrical signal, to obtain the half-wave radio frequency optical signal, as described in the following optional Implementation 3.1 and Implementation 3.2.

Implementation 3.1: The modulated laser is a directly modulated laser. In this case, the third bias electrical signal is a second bias current signal, and a current corresponding to the second bias current signal is greater than or equal to the threshold current of the directly modulated laser. The first communication apparatus may superimpose the second bias current signal on the first half-wave radio frequency electrical signal via the directly modulated laser, and perform optical modulation on a first half-wave radio frequency electrical signal superimposed with the second bias current signal, to obtain the half-wave radio frequency optical signal.

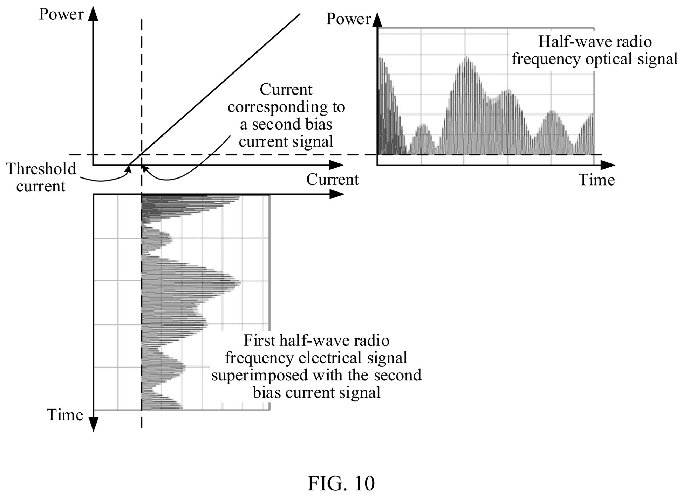

For example, the direct current component corresponding to the full-wave radio frequency electrical signal is 0. With reference to FIG. 10, in FIG. 10, a power-current curve represents a relationship between an operating current of a directly modulated laser and optical power. For the relationship between the operating current of the directly modulated laser and the optical power, refer to the foregoing related descriptions of the directly modulated laser. Details are not described herein again. A current-time curve represents a first half-wave radio frequency electrical signal superimposed with a second bias current signal, and a power-time curve represents a half-wave radio frequency optical signal. Based on the relationship between the operating current of the directly modulated laser and the optical power, the second bias current signal whose corresponding current is greater than or equal to the threshold current is superimposed on the first half-wave radio frequency electrical signal, so that the operating current of the directly modulated laser is set based on the first half-wave radio frequency electrical signal superimposed with the second bias current signal. In this way, the directly modulated laser performs optical modulation to obtain the half-wave radio frequency optical signal.

Optionally, the second bias current signal is a third bias current signal corresponding to a third optical signal with a largest signal-to-noise ratio in multiple third optical signals. The multiple third optical signals are in one-to-one correspondence with multiple third bias current signals, and each third optical signal in the multiple third optical signals is obtained by performing optical modulation on a first half-wave radio frequency electrical signal superimposed with a third bias current signal corresponding to the third optical signal. Currents respectively corresponding to the multiple third bias current signals are different from each other, and the currents respectively corresponding to the multiple third bias current signals are all greater than or equal to the threshold current. It may be understood that the first communication apparatus can set multiple third bias current signals corresponding to different currents. For each third bias current signal in the multiple third bias current signals, the first communication apparatus performs optical modulation on a first half-wave radio frequency electrical signal superimposed with the third bias current signal, to obtain multiple third optical signals. A third bias current signal used for a third optical signal with a largest signal-to-noise ratio in the multiple third optical signals may be used as the second bias current signal.

Optionally, the currents respectively corresponding to the multiple third bias current signals are all greater than or equal to the threshold current, and are also less than or equal to a first current. Correspondingly, average optical power of all the multiple third optical signals is less than or equal to optical power obtained by performing optical modulation when the operating current of the directly modulated laser is the first current. The first current may be predefined, or may be determined based on predefined optical power (the first current may be an operating current needed by the directly modulated laser to perform optical modulation to obtain the predefined optical power).

For example, the second bias current signal may be determined based on characteristics of relative intensity noise and modulation bandwidth of the directly modulated laser. Specifically, sweeping for the bias current of the directly modulated laser may start from the threshold current in an increasing direction. Because the bias current keeps changing, a third bias current signal corresponding to the bias current also keeps changing. The directly modulated laser continuously performs optical modulation on the first half-wave radio frequency electrical signal superimposed with the third bias current signal, to obtain the third optical signal. When the obtained third optical signal has the largest signal-to-noise ratio, a third bias current signal corresponding to a present bias current of the directly modulated laser may be the second bias current signal. Optionally, when the first current is determined, sweeping for the bias current of the directly modulated laser may start within a range from the threshold current to the first current in the increasing direction.

In addition, if a signal-to-noise ratio performance requirement is allowed, the second bias current signal may alternatively be a third bias current signal corresponding to a third optical signal whose signal-to-noise ratio is greater than a first value in the multiple third optical signals. The first value may be predefined based on the signal-to-noise ratio performance requirement.

Implementation 3.2: The modulated laser is an electro-absorption modulated laser. In this case, the third bias electrical signal is a second bias voltage signal, and a voltage corresponding to the second bias voltage signal is greater than a first voltage. The first communication apparatus may superimpose the second bias voltage signal on the first half-wave radio frequency electrical signal via the electro-absorption modulated laser, and perform optical modulation on the first half-wave radio frequency electrical signal superimposed with the second bias voltage signal, to obtain the half-wave radio frequency optical signal.

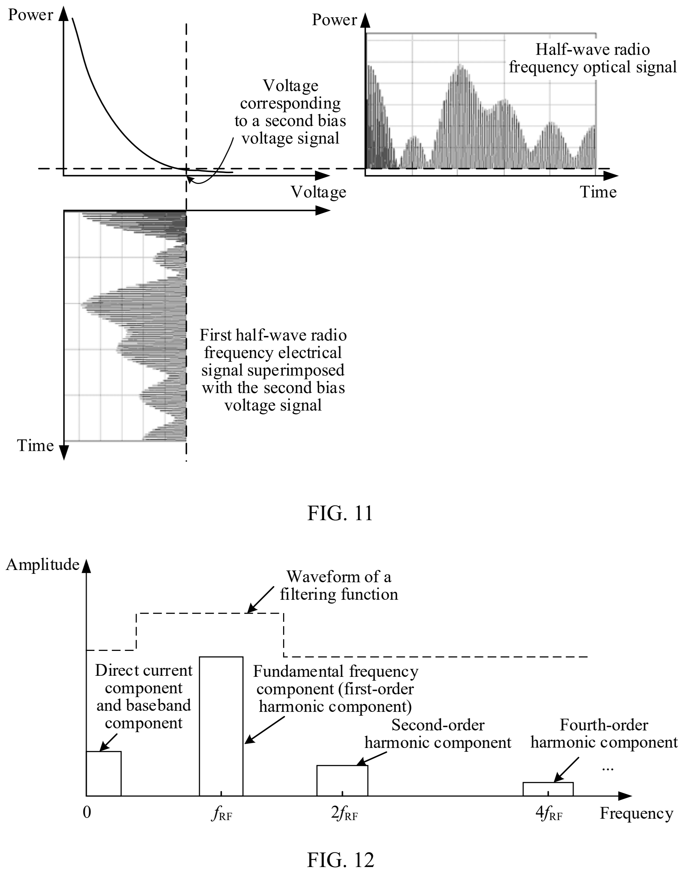

For example, the direct current component corresponding to the full-wave radio frequency electrical signal is 0. With reference to FIG. 11, in FIG. 11, a power-voltage curve represents a relationship between an operating voltage of an electro-absorption modulated laser and optical power. For the relationship between the operating voltage of the electro-absorption modulated laser and the optical power, refer to the foregoing related descriptions of the electro-absorption modulated laser. A voltage-time curve represents a first half-wave radio frequency electrical signal superimposed with a second bias voltage signal, and a power-time curve represents a half-wave radio frequency optical signal. Based on the relationship between the operating voltage of the electro-absorption modulated laser and the optical power, the second bias voltage signal whose corresponding voltage is greater than the first voltage is superimposed on the first half-wave radio frequency electrical signal, so that the operating voltage of the electro-absorption modulated laser is set based on the first half-wave radio frequency electrical signal superimposed with the second bias voltage signal. In this way, the electro-absorption modulated laser performs optical modulation to obtain the half-wave radio frequency optical signal.

The first voltage may be predefined, or may be determined based on predefined optical power (the first voltage may be an operating voltage needed by the electro-absorption modulated laser to perform optical modulation to obtain the predefined optical power). For example, the first voltage is greater than an intermediate voltage in a linear area within the power-voltage curve. In addition, the voltage corresponding to the second bias voltage signal may be set at a low output optical power point (high voltage). This helps obtain a half-wave radio frequency optical signal with lower average optical power, to reduce the power consumption of the optical component more effectively, and reduce the non-linear effect of optical fiber transmission more effectively in a scenario in which the optical signal is transmitted between the first communication apparatus and the second communication apparatus through the optical fiber.

Optionally, the second bias voltage signal is a third bias voltage signal corresponding to a fourth optical signal with a smallest adjacent channel leakage power ratio in multiple fourth optical signals. The multiple fourth optical signals are in one-to-one correspondence with multiple third bias voltage signals. Each fourth optical signal in the multiple fourth optical signals is obtained by performing optical modulation on the first half-wave radio frequency electrical signal superimposed with a third bias voltage signal corresponding to the fourth optical signal. Voltages respectively corresponding to the multiple third bias voltage signals are different from each other, and the voltages respectively corresponding to the multiple third bias voltage signals are all greater than or equal to the first voltage. Correspondingly, average optical power of all the multiple fourth optical signals is less than or equal to optical power obtained by performing optical modulation when the operating voltage of the electro-absorption modulated laser is the first voltage. It may be understood that the first communication apparatus can set multiple third bias voltage signals corresponding to different voltages. For each third bias voltage signal in the multiple third bias voltage signals, the first communication apparatus performs optical modulation on the first half-wave radio frequency electrical signal superimposed with the third bias voltage signal, to obtain multiple fourth optical signals. A third bias voltage signal used for a fourth optical signal with a smallest ACLR in the multiple fourth optical signals may be used as the second bias voltage signal.

For example, sweeping for the bias voltage of the electro-absorption modulated laser may start from the first voltage in an increasing direction. Because the bias voltage keeps changing, a third bias voltage signal corresponding to the bias voltage also keeps changing. The electro-absorption modulated laser continuously performs optical modulation on the first half-wave radio frequency electrical signal superimposed with the third bias voltage signal, to obtain the fourth optical signal. When the obtained fourth optical signal has the smallest ACLR, a third bias voltage signal corresponding to a present bias voltage of the electro-absorption modulated laser may be the second bias voltage signal.

In addition, if an ACLR performance requirement is allowed, the second bias voltage signal may alternatively be a third bias voltage signal corresponding to a fourth optical signal whose adjacent channel leakage power ratio is less than a second value in the multiple fourth optical signals. The second value may be predefined based on the ACLR performance requirement.

In addition, Implementation 3.1 and Implementation 3.2 may be randomly combined with Implementation 2.1 and Implementation 2.2. For example, the first communication apparatus may convert the full-wave radio frequency electrical signal into the first half-wave radio frequency electrical signal according to Implementation 2.1, and obtain the half-wave radio frequency optical signal according to Implementation 3.1; or the first communication apparatus may convert the full-wave radio frequency electrical signal into the first half-wave radio frequency electrical signal according to Implementation 2.1, and obtain the half-wave radio frequency optical signal according to Implementation 3.2; or the first communication apparatus may convert the full-wave radio frequency electrical signal into the first half-wave radio frequency electrical signal according to Implementation 2.2, and obtain the half-wave radio frequency optical signal according to Implementation 3.1; or the first communication apparatus may convert the full-wave radio frequency electrical signal into the first half-wave radio frequency electrical signal according to Implementation 2.2, and obtain the half-wave radio frequency optical signal according to Implementation 3.2.

Optionally, the method may further include: The first communication apparatus performs spectrum adjustment on the first half-wave radio frequency electrical signal by using a filtering function. In this case, the first communication apparatus may superimpose the third bias electrical signal on a spectrum-adjusted first half-wave radio frequency electrical signal via the modulated laser, and perform optical modulation on a spectrum-adjusted first half-wave radio frequency electrical signal superimposed with the third bias electrical signal, to obtain the half-wave radio frequency optical signal. In this implementation, spectrum adjustment is performed on the first half-wave radio frequency electrical signal, so that amplitudes of spectral components (such as a direct current component, a baseband component, and a harmonic component) in the first half-wave radio frequency electrical signal can be adjusted, as shown in FIG. 12, to optimize a waveform of the first half-wave radio frequency electrical signal. Optionally, the filtering function may be implemented by a bandpass filter whose fundamental frequency is a center frequency of the full-wave radio frequency electrical signal (namely, a carrier frequency of the full-wave radio frequency electrical signal). The first communication apparatus may perform spectrum adjustment on the first half-wave radio frequency electrical signal via the bandpass filter whose fundamental frequency is the center frequency. For example, the first communication apparatus may adjust a ratio of the amplitudes of the direct current component, the baseband component, and the harmonic component in the first half-wave radio frequency electrical signal by designing a roll-off coefficient of the bandpass filter, to perform spectrum adjustment on the first half-wave radio frequency electrical signal.

For example, for a part that is of the first half-wave radio frequency electrical signal and whose amplitude is less than the amplitude corresponding to the direct current component, when a difference between the amplitude of the part of the signal and the amplitude corresponding to the direct current component is large, the first communication apparatus may adjust amplitudes of the baseband component and the harmonic component in the first half-wave radio frequency electrical signal by using the filtering function, to reduce the difference between the amplitude of the part of the signal and the amplitude corresponding to the direct current component. When the modulated laser is the directly modulated laser, in this manner, a signal whose corresponding current is less than the threshold current in the first half-wave radio frequency electrical signal superimposed with the second bias current signal can be reduced, thereby reducing the signal whose corresponding current is less than the threshold current and that is truncated by the direct current laser during optical modulation, to reduce degradation impact of signal truncation by the direct current laser on the ACLR.

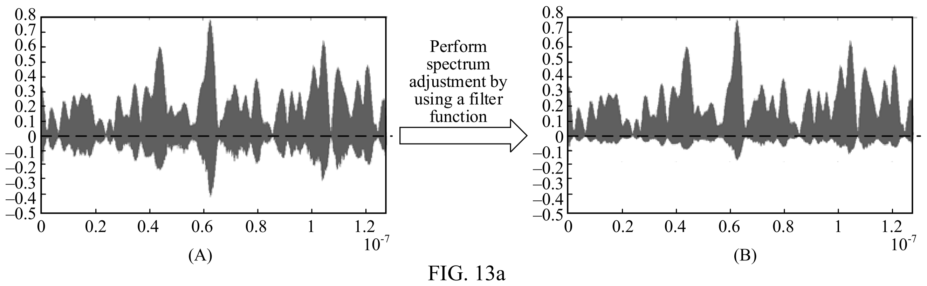

For example, the direct current component corresponding to the full-wave radio frequency electrical signal is 0. As shown in FIG. 13a, a part (A) in FIG. 13a shows a first half-wave radio frequency electrical signal obtained by the first communication apparatus by converting the full-wave radio frequency electrical signal. A part of the first half-wave radio frequency electrical signal has an amplitude less than an amplitude corresponding to the direct current component by a large difference. The first communication apparatus may perform spectrum adjustment on the first half-wave radio frequency electrical signal by using a filtering function, to obtain a spectrum-adjusted first half-wave radio frequency electrical signal shown in a part (B) in FIG. 13a. It can be learned that, for the part that is of the first half-wave radio frequency electrical signal and whose amplitude is less than the amplitude corresponding to the direct current component, a difference between the amplitude of the part of the spectrum-adjusted first half-wave radio frequency electrical signal shown in the part (B) in FIG. 13a and the amplitude corresponding to the direct current component is less than the difference between the amplitude of the part of the first half-wave radio frequency electrical signal before the spectrum adjustment shown in the part (A) and the amplitude corresponding to the direct current component.

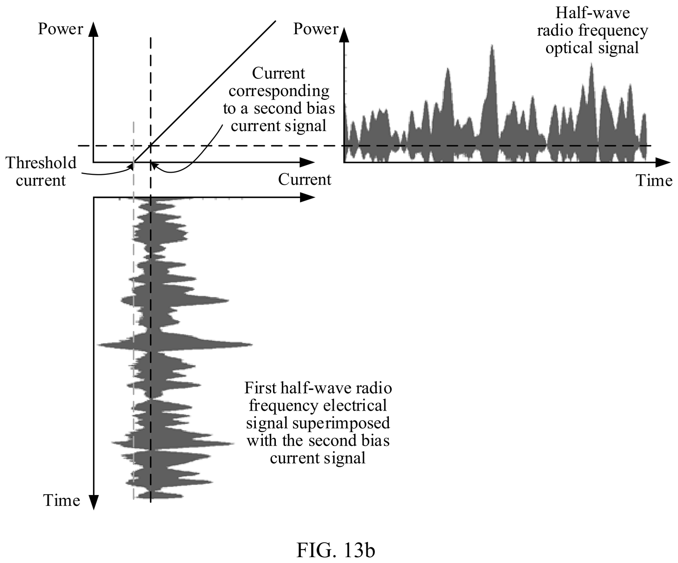

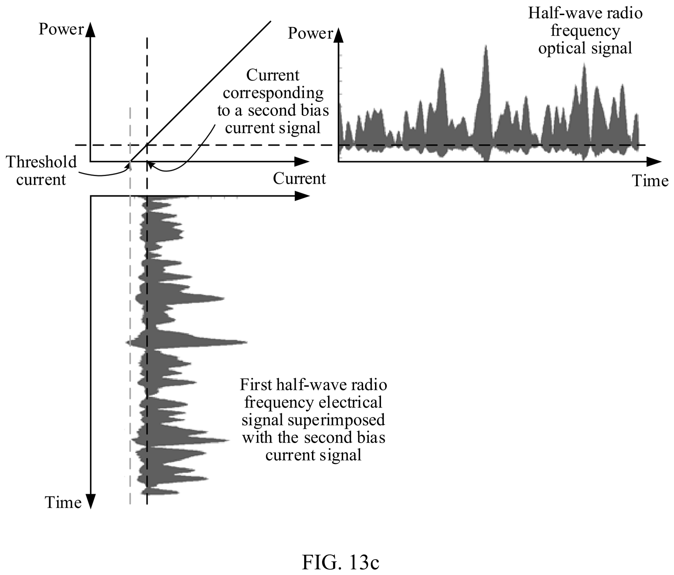

In FIG. 13b, a current-time curve represents an electrical signal obtained by superimposing a second bias current signal on the first half-wave radio frequency electrical signal shown in the part (A) in FIG. 13a, and a power-time curve represents an optical signal obtained by the directly modulated laser by performing optical modulation on the electrical signal shown by the current-time curve in FIG. 13b. In FIG. 13c, a current-time curve represents an electrical signal obtained by superimposing a second bias current signal on the spectrum-adjusted first half-wave radio frequency electrical signal shown in the part (B) in FIG. 13a, and a power-time curve represents an optical signal obtained by the directly modulated laser by performing optical modulation on the electrical signal shown by the current-time curve in FIG. 13c. It can be learned that, compared with FIG. 13b, when the directly modulated laser performs optical modulation based on FIG. 13c, fewer signals are truncated, and signal truncation by the direct current laser has smaller deterioration impact on the ACLR.

For example, in a scenario in which the modulated laser is a directly modulated laser, and the current corresponding to the second bias current signal is greater than the threshold current to increase modulation bandwidth of the directly modulated laser and reduce RIN noise, the first communication apparatus may use the filtering function to reduce the amplitudes of the baseband component and the harmonic component in the first half-wave radio frequency electrical signal, to adjust a part of the amplitude of the first half-wave radio frequency electrical signal to be less than the amplitude corresponding to the direct current component, so that a waveform of the spectrum-adjusted first half-wave radio frequency electrical signal better adapts to the power-current curve of the directly modulated laser. This helps increase utilization of a current between the threshold current and the current corresponding to the second bias current signal.

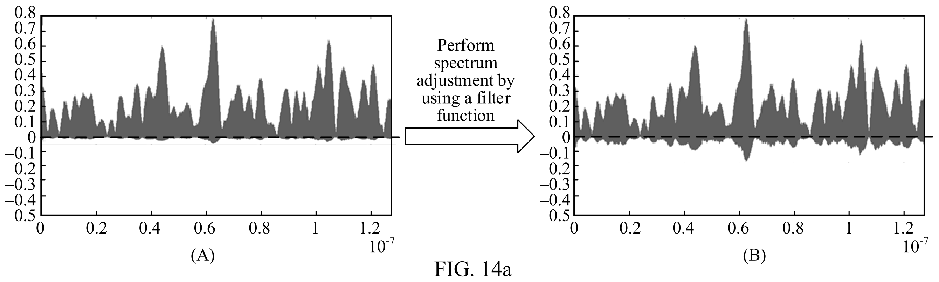

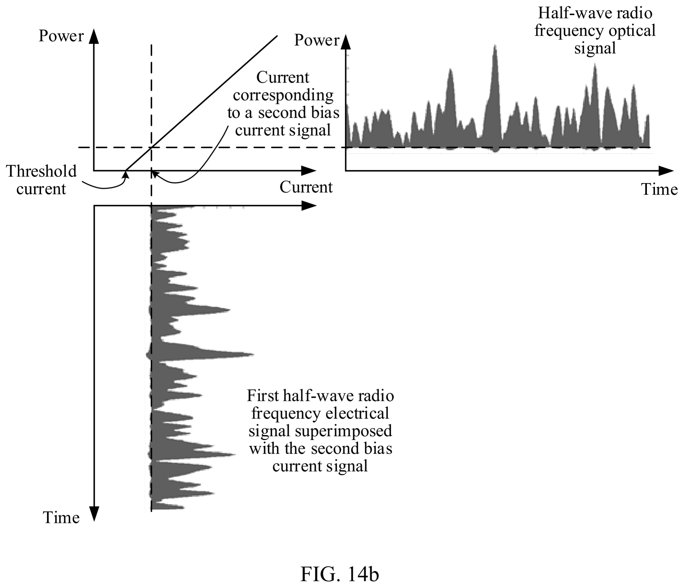

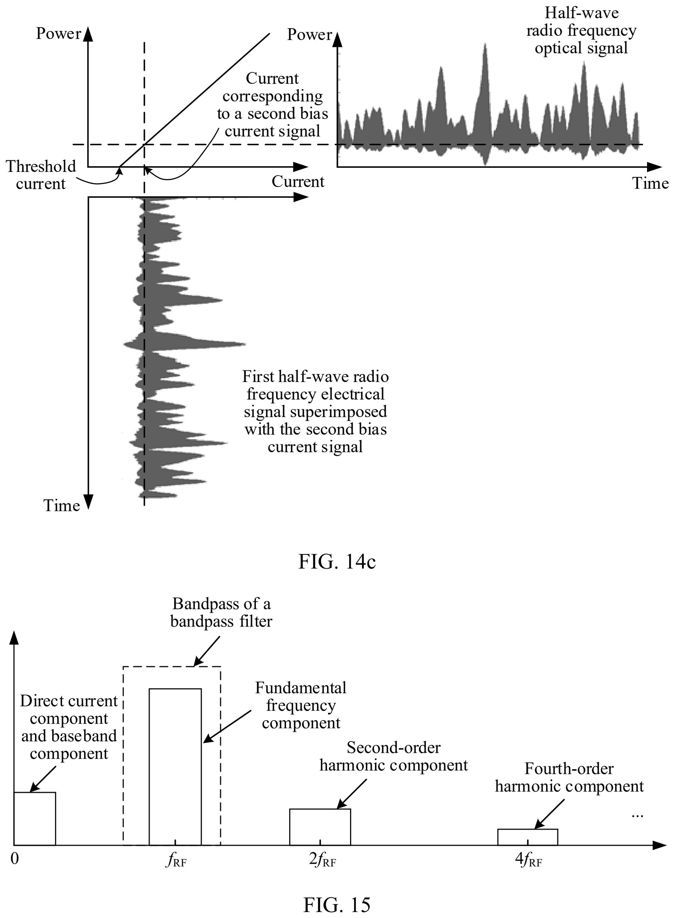

For example, the direct current component corresponding to the full-wave radio frequency electrical signal is 0. As shown in FIG. 14a, a part (A) in FIG. 14a shows a first half-wave radio frequency electrical signal obtained by the first communication apparatus by converting a full-wave radio frequency electrical signal, and a part (B) shows a first half-wave radio frequency electrical signal obtained by the first communication apparatus by reducing amplitudes of a baseband component and a harmonic component in the first half-wave radio frequency electrical signal by using a filtering function. A current-time curve in FIG. 14b represents an electrical signal obtained by superimposing a second bias current signal on the first half-wave radio frequency electrical signal shown in the part (A) in FIG. 14a. It can be learned that, in a process of performing optical modulation by the directly modulated laser, the operating current of the directly modulated laser is between the threshold current and the current corresponding to the second bias current signal for a short period of time, in other words, in the optical modulation process, the current between the threshold current and the current corresponding to the second bias current signal is less used. A current-time curve in FIG. 14c represents an electrical signal obtained by superimposing a second bias current signal on the spectrum-adjusted first half-wave radio frequency electrical signal shown in the part (B) in FIG. 14a. It can be learned that the first communication apparatus uses the filtering function to reduce the amplitudes of the baseband component and the harmonic component in the first half-wave radio frequency electrical signal, so that time in which the operating current of the directly modulated laser is between the threshold current and the current, corresponding to the second bias current signal, in the process of performing optical modulation by the directly modulated laser can be increased. In this way, use of the current between the threshold current and the current corresponding to the second bias current signal in the optical modulation process is increased, in other words, utilization of the current between the threshold current and the current corresponding to the second bias current signal is increased.

S103: The first communication apparatus sends the half-wave radio frequency optical signal. Correspondingly, the second communication apparatus receives the half-wave radio frequency optical signal.

S104: The second communication apparatus converts the half-wave radio frequency optical signal into the full-wave radio frequency electrical signal.

In an optional implementation, the full-wave radio frequency electrical signal obtained by the second communication apparatus by converting the half-wave radio frequency optical signal is a fundamental frequency signal in an electrical signal obtained by performing optical-to-electrical conversion on the half-wave radio frequency optical signal. A center frequency of the fundamental frequency signal is the same as a carrier frequency of the full-wave radio frequency electrical signal generated by the first communication apparatus. Optionally, the carrier frequency of the full-wave radio frequency electrical signal generated by the first communication apparatus may be sent by the first communication apparatus to the second communication apparatus.

In an optional manner, that the second communication apparatus converts the half-wave radio frequency optical signal into the full-wave radio frequency electrical signal may include: The second communication apparatus performs optical-to-electrical conversion on the half-wave radio frequency optical signal via a photoelectric detector, to obtain a first electrical signal. A passband of the photoelectric detector covers a spectrum of the fundamental frequency signal. The second communication apparatus filters the first electrical signal via a bandpass filter, to obtain the full-wave radio frequency electrical signal. A passband of the bandpass filter includes only a spectrum of the fundamental frequency signal. The photoelectric detector may be, for example, a PD. It can be learned that the second communication apparatus can convert the half-wave radio frequency optical signal into the full-wave radio frequency electrical signal via the photoelectric detector and the bandpass filter, without using a complex algorithm. This simplifies a manner of restoring the full-wave radio frequency electrical signal.

That the passband of the bandpass filter includes only the spectrum of the fundamental frequency signal indicates that the passband of the bandpass filter includes only a radio frequency spectrum of the fundamental frequency signal, and does not include radio frequency spectra of the direct current component, the baseband component, and the second-order and higher-order harmonic components. Similarly, a passband of the photoelectric detector in the following includes only the spectrum of the fundamental signal. Details are not described again.

It may be understood that, as shown in FIG. 15, the first electrical signal obtained by performing optical-to-electrical conversion on the half-wave radio frequency optical signal via the photoelectric detector may include: a direct current component, a baseband component, a fundamental frequency component, and second-order and higher-order harmonic components. Because the passband of the bandpass filter includes only the spectrum of the fundamental frequency signal, and does not include that of the direct current component, the baseband component, or the second-order and higher-order harmonic components, the bandpass filter can sift out the fundamental frequency signal in the first electrical signal, to obtain the full-wave radio frequency electrical signal.

In another optional manner, that the second communication apparatus converts the half-wave radio frequency optical signal into the full-wave radio frequency electrical signal may include: The second communication apparatus performs optical-to-electrical conversion on the half-wave radio frequency optical signal via a photoelectric detector, to obtain a first electrical signal, and determines the full-wave radio frequency electrical signal in the first electrical signal. A passband of the photoelectric detector includes only a spectrum of the fundamental frequency signal. The photoelectric detector may be, for example, a PD. It can be learned that, in addition to having an optical-to-electrical conversion function, the photoelectric detector can further sift out the fundamental frequency signal in the first electrical signal, to obtain the full-wave radio frequency electrical signal. The second communication apparatus can convert the half-wave radio frequency optical signal into the full-wave radio frequency electrical signal directly via the photoelectric detector, without using a complex algorithm. This simplifies a manner of restoring the full-wave radio frequency electrical signal.

In conclusion, in the signal transmission method, the first communication apparatus generates the full-wave radio frequency electrical signal, and converts the full-wave radio frequency electrical signal into the half-wave radio frequency optical signal. The half-wave radio frequency optical signal is the radio frequency optical signal having the positive half-amplitude or the negative half-amplitude of the full-wave radio frequency electrical signal. The first communication apparatus sends the half-wave radio frequency optical signal. The second communication apparatus receives the half-wave radio frequency optical signal, and converts the half-wave radio frequency optical signal into the full-wave radio frequency electrical signal. It can be learned that the half-wave radio frequency optical signal transmitted between the first communication apparatus and the second communication apparatus has the positive half-amplitude or the negative half-amplitude of the full-wave radio frequency electrical signal. Compared with a radio frequency optical signal having a full amplitude of the full-wave radio frequency electrical signal, the half-wave radio frequency optical signal has lower average optical power, so that the transmit optical power between the first communication apparatus and the second communication apparatus can be reduced, to further help reduce the power consumption of the optical component, and improve power conversion efficiency.

For example, in the scenario in which the optical signal is transmitted between the second communication apparatus and the first communication apparatus through the optical fiber, and an optical fiber transmission link between the first communication apparatus and the second communication apparatus includes an optical amplifier, the reduction of the transmit optical power between the second communication apparatus and the first communication apparatus helps reduce power consumption of the optical amplifier, and further helps reduce signal distortion caused because the optical amplifier is likely to enter a gain saturation area. For another example, in the scenario in which the second communication apparatus performs optical-to-electrical conversion on the half-wave radio frequency optical signal via the photoelectric detector, the reduction of the transmit optical power between the second communication apparatus and the first communication apparatus helps reduce a direct current of the photoelectric detector, to reduce power consumption of the photoelectric detector and improving power conversion efficiency of the photoelectric detector.

In the scenario in which the optical signal is transmitted between the first communication apparatus and the second communication apparatus through the optical fiber, the reduction of the transmit optical power further helps reduce the non-linear effect of optical fiber transmission, to reduce signal distortion caused by the non-linear effect of optical fiber transmission. In a scenario in which the second communication apparatus further needs to output the full-wave radio frequency electrical signal to the antenna for signal radiation, the half-wave radio frequency optical signal with lower average optical power further helps make the transmit optical power of the optical fiber be lower than a power threshold causing a non-linear effect of optical fiber transmission. In this case, a range between the average optical power of the half-wave radio frequency optical signal and the power threshold may be used as space for amplifying the transmit optical power. This helps obtain an optical signal with a larger optical modulation amplitude while reducing the non-linear effect of optical fiber transmission, to help improve radio frequency radiation power and signal quality of the antenna.

In addition, the second communication apparatus further restores the half-wave radio frequency optical signal with low average optical power to the full-wave radio frequency electrical signal with high power. In the scenario in which the second communication apparatus needs to output the full-wave radio frequency electrical signal to the antenna for signal radiation, in the signal transmission method, high radio frequency radiation power of the antenna can be implemented at low transmit optical power.

It may be understood that, to implement functions in the foregoing method, the first communication apparatus or the second communication apparatus includes corresponding hardware structures and/or software modules for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

The following describes possible structures of the first communication apparatus and the second communication apparatus provided in embodiments of this application with reference to the accompanying drawings.

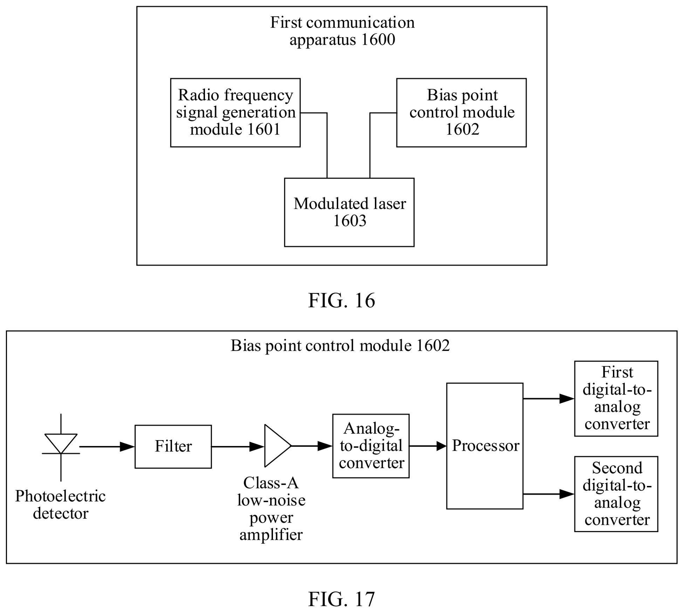

FIG. 16 is a diagram of a structure of a first communication apparatus 1600 according to an embodiment of this application. The first communication apparatus 1600 includes a radio frequency signal generation module 1601, a bias point control module 1602, and a modulated laser 1603.

The radio frequency signal generation module 1601 is configured to: generate a full-wave radio frequency electrical signal, and output the full-wave radio frequency electrical signal to the modulated laser 1603. The bias point control module 1602 is configured to output a first bias electrical signal to the modulated laser 1603. The modulated laser 1603 is configured to perform optical modulation on the full-wave radio frequency electrical signal superimposed with the first bias electrical signal, to obtain a half-wave radio frequency optical signal. The half-wave radio frequency optical signal is a radio frequency optical signal having a positive half-amplitude or a negative half-amplitude of the full-wave radio frequency electrical signal. The modulated laser 1603 is further configured to send the half-wave radio frequency optical signal.

In an optional implementation, the radio frequency signal generation module 1601 may include: a baseband signal modulation module, a digital pre-distortion module, a digital-to-analog converter, a frequency mixer, and a class-A low-noise power amplifier (for example, a class-A LNA). The baseband signal modulation module may be configured to: modulate a baseband signal, and output a modulated baseband signal to the digital pre-distortion module. The digital pre-distortion module may be configured to: perform digital pre-distortion processing on the modulated baseband signal, and output, to the digital-to-analog converter, a digital signal obtained through digital pre-distortion processing. The digital-to-analog converter may be configured to: convert the digital signal obtained through digital pre-distortion processing into an analog signal, and output the analog signal to the frequency mixer. The digital-to-analog converter may be, for example, a digital to analog converter (digital to analog converter, DAC). The frequency mixer may be configured to perform frequency mixing on the received analog signal and a local oscillator, and output an electrical signal obtained through frequency mixing to the class-A low-noise power amplifier. The class-A low-noise power amplifier may be configured to amplify the received electrical signal, to obtain a full-wave radio frequency electrical signal. It can be learned that, in this implementation, the full-wave radio frequency electrical signal generated by the radio frequency signal generation module 1601 is an analog signal obtained by performing baseband signal modulation, digital pre-distortion processing, digital-to-analog conversion, frequency mixing with the local oscillator, and amplification.

In another optional implementation, the radio frequency signal generation module 1601 may include a class-A low-noise power amplifier (for example, a class-A LNA), and the first communication apparatus 1600 may further include an antenna. The antenna may be configured to: receive an analog signal, and output the analog signal to the class-A low-noise power amplifier in the radio frequency signal generation module 1601. The class-A low-noise power amplifier may be configured to amplify the analog signal from the antenna, to obtain a full-wave radio frequency electrical signal. It can be learned that, in this implementation, the full-wave radio frequency electrical signal generated by the radio frequency signal generation module 1601 is an electrical signal obtained by amplifying the analog signal received by the antenna.

In still another optional implementation, the radio frequency signal generation module 1601 may include a class-A low-noise power amplifier (for example, a class-A LNA) and a frequency mixer, and the first communication apparatus 1600 may further include an antenna. The antenna may be configured to: receive an analog signal, and output the analog signal to the class-A low-noise power amplifier in the radio frequency signal generation module 1601. The class-A low-noise power amplifier may be configured to: amplify the analog signal from the antenna, and output an electrical signal obtained through amplification to the frequency mixer. The frequency mixer may be configured to perform frequency mixing on a local oscillator and the electrical signal obtained through amplification, to obtain a full-wave radio frequency electrical signal. It can be learned that, in this implementation, the full-wave radio frequency electrical signal generated by the radio frequency signal generation module 1601 is an electrical signal obtained by performing amplification and frequency mixing with the local oscillator on the analog signal received by the antenna.

In an optional implementation, the modulated laser 1603 may be an electro-absorption modulated laser (for example, an EML). Correspondingly, the first bias electrical signal is a first bias voltage signal. Optionally, in this case, the modulated laser 1603 may include a laser diode (for example, an LD) and an electro-absorption modulator (for example, an EAM). The laser diode may be configured to: generate a continuous light wave signal, and output the continuous light wave signal to the electro-absorption modulator. The electro-absorption modulator may be configured to modulate the full-wave radio frequency electrical signal superimposed with the first bias voltage signal onto the continuous light wave signal, to obtain the half-wave radio frequency optical signal. That the radio frequency signal generation module 1601 outputs the first bias electrical signal to the modulated laser 1603 is specifically: The radio frequency signal generation module 1601 outputs the first bias electrical signal to the electro-absorption modulator in the modulated laser 1603.

In another optional implementation, the modulated laser 1603 may be a directly modulated laser (for example, a DML). Correspondingly, the first bias electrical signal is a first bias current signal. Optionally, in this case, the modulated laser 1603 may include a laser diode (for example, an LD). The laser diode may be configured to perform optical modulation on the full-wave radio frequency electrical signal superimposed with the first bias current signal, to obtain the half-wave radio frequency optical signal. That the radio frequency signal generation module 1601 outputs the first bias electrical signal to the modulated laser 1603 is specifically: The radio frequency signal generation module 1601 outputs the first bias electrical signal to the laser diode in the modulated laser 1603.

In an optional implementation, the bias point control module 1602 is further configured to: generate an electrical signal for bias point detection, and output the electrical signal for bias point detection to the modulated laser 1603. The bias point control module 1602 is further configured to output a second bias electrical signal to the modulated laser 1603. The modulated laser 1603 is further configured to: perform optical modulation on the electrical signal for bias point detection superimposed with the second bias electrical signal, to obtain a second optical signal, and output the second optical signal to the bias point control module 1602. The bias point control module 1602 is further configured to: if a ratio of coefficients of multiple spectral components corresponding to an electrical signal obtained by performing optical-to-electrical conversion on the second optical signal satisfies a first ratio, determine the first bias electrical signal as the second bias electrical signal; or if a ratio of coefficients of multiple spectral components corresponding to an electrical signal obtained by performing optical-to-electrical conversion on the second optical signal does not satisfy a first ratio, adjust the second bias electrical signal, and output an adjusted second bias electrical signal to the modulated laser 1603.

The modulated laser 1603 is further configured to: after receiving the adjusted second bias electrical signal from the bias point control module 1602, perform optical modulation on the electrical signal for bias point detection superimposed with the adjusted second bias electrical signal, and output an optical signal obtained through optical modulation to the bias point control module 1602. The bias point control module 1602 is further configured to determine whether a ratio of coefficients of multiple spectral components corresponding to an electrical signal obtained by performing optical-to-electrical conversion on the received optical signal satisfies the first ratio. When the ratio satisfies the first ratio, the bias point control module 1602 is further configured to determine the adjusted second bias electrical signal as the first bias electrical signal.

When the ratio does not satisfy the first ratio, the bias point control module 1602 is further configured to perform these operations again: adjusting the second bias electrical signal, superimposing an adjusted second bias electrical signal on the electrical signal for bias point detection, and outputting the electrical signal for bias point detection superimposed with the adjusted second bias electrical signal to the modulated laser 1603. The modulated laser 1603 is further configured to perform these operations again: performing optical modulation on the electrical signal for bias point detection superimposed with an adjusted second bias electrical signal, and outputting an optical signal obtained through optical modulation to the bias point control module 1602. After determining that a ratio of coefficients of multiple spectral components corresponding to an electrical signal obtained by performing optical-to-electrical conversion on the received optical signal satisfies the first ratio, the bias point control module 1602 determines the present adjusted second bias electrical signal as the first bias electrical signal, and no longer perform these operations: adjusting the second bias electrical signal, superimposing the electrical signal for bias point detection on an adjusted second bias electrical signal, and outputting the electrical signal for bias point detection superimposed with the second bias electrical signal to the modulated laser 1603.

Optionally, in a TDD mode, the operation of sending, by the bias point control module 1602, the electrical signal for bias point detection to the modulated laser 1603 is performed in idle time in which the radio frequency signal generation module 1601 sends no full-wave radio frequency electrical signal to the modulated laser 1603. In other words, within time in which the radio frequency signal generation module 1601 sends a full-wave radio frequency electrical signal to the modulated laser 1603, the bias point control module 1602 sends no electrical signal for bias point detection to the modulated laser 1603. In the time in which the radio frequency signal generation module 1601 sends no full-wave radio frequency electrical signal to the modulated laser 1603, the bias point control module 1602 may send an electrical signal for bias point detection to the modulated laser 1603. The bias point control module 1602 may not stop sending an electrical signal for bias point detection to the modulated laser 1603 until the radio frequency signal generation module 1601 starts to send a full-wave radio frequency electrical signal to the modulated laser 1603 or the bias point control module 1602 determines the first bias electrical signal.

Optionally, as shown in FIG. 17, the bias point control module 1602 may include: a photoelectric diode (for example, a PD), a filter, a class-A low-noise power amplifier (for example, a class-A LNA), an analog-to-digital converter, a processor, a first digital-to-analog converter (for example, a DAC), and a second digital-to-analog converter (for example, a DAC). The analog-to-digital converter may be, for example, an analog to digital converter (analog to digital converter, ADC). The photoelectric diode may be configured to: perform optical-to-electrical conversion on an optical signal input into the photoelectric diode, and output an electrical signal obtained through optical-to-electrical conversion to the filter. The filter may be configured to: filter the electrical signal obtained through optical-to-electrical conversion, and output an electrical signal obtained through filtering to the class-A low-noise power amplifier. The class-A low-noise power amplifier may be configured to: amplify the electrical signal obtained through filtering, and output an electrical signal obtained through amplification to the analog-to-digital converter. The analog-to-digital converter may be configured to: convert the electrical signal (an analog signal) obtained through filtering into a digital signal, and output the digital signal to the processor.

The processor may be configured to: perform spectrum analysis on the received digital signal, and determine whether a ratio of coefficients of multiple spectral components obtained through spectrum analysis satisfies the first ratio. The processor may be further configured to: when the ratio does not satisfy the first ratio, adjust the second bias electrical signal and output an adjusted second bias electrical signal to the first digital-to-analog converter; and when the ratio satisfies the first ratio, determine the second bias electrical signal (or the adjusted second bias electrical signal) as the first bias electrical signal, and output the first bias electrical signal to the first digital-to-analog converter. In addition, the processor may be further configured to: generate an electrical signal for bias point detection in digital domain, and output the electrical signal for bias point detection in digital domain to the second digital-to-analog converter.

The first digital-to-analog converter may be configured to: convert the second bias electrical signal (or the adjusted second bias electrical signal) in digital domain into a second bias electrical signal (or an adjusted second bias electrical signal) in an analog domain, and output the second bias electrical signal (or the adjusted second bias electrical signal) in analog domain to the modulated laser 1603. The first digital-to-analog converter may be further configured to: convert the first bias electrical signal in digital domain into a first bias electrical signal in analog domain, and output the first bias electrical signal in analog domain to the modulated laser 1603. The second digital-to-analog converter may be configured to: convert the electrical signal for bias point detection in digital domain into an electrical signal for bias point detection in analog domain, and output the electrical signal for bias point detection in analog domain to the modulated laser 1603.

In an optional implementation, the first communication apparatus 1600 may further include a component (for example, a coupler) having two input ends and one output end. One input end of the component is connected to an output end of the radio frequency signal generation module 1601, and may be configured to receive the full-wave radio frequency electrical signal from the radio frequency signal generation module 1601. The other input end is connected to an output end of the bias point control module 1602, and may be configured to receive the electrical signal for bias point detection from the bias point control module 1602. The output end of the component is connected to an input end of the modulated laser 1603, and may be configured to output the full-wave radio frequency electrical signal or the electrical signal for bias point detection to the modulated laser 1603.

Optionally, if the operation of outputting the electrical signal for bias point detection by the bias point control module 1602 is performed within the idle time in which the radio frequency signal generation module 1601 outputs no full-wave radio frequency electrical signal, the component can receive the full-wave radio frequency electrical signal or the electrical signal for bias point detection at the same time, but cannot receive the full-wave radio frequency electrical signal and the electrical signal for bias point detection at the same time. Correspondingly, the component outputs the full-wave radio frequency electrical signal or the electrical signal for bias point detection to the modulated laser 1603 at the same time, but cannot output the full-wave radio frequency electrical signal and the electrical signal for bias point detection to the modulated laser 1603 at the same time.

In an optional implementation, the first communication apparatus 1600 may further include a component (for example, an optical branching device) having one input end and two output ends. The input end of the component is connected to the modulated laser 1603, and may be configured to receive, from the modulated laser 1603, the half-wave radio frequency optical signal, or the second optical signal, or the optical signal obtained by performing optical modulation on the electrical signal for bias point detection superimposed with the adjusted second bias electrical signal. One output end of the component may be configured to output the half-wave radio frequency optical signal to send the half-wave radio frequency optical signal to a second communication apparatus. The other output end is connected to the bias point control module 1602, and may be configured to output the second optical signal to the bias point control module 1602, or may be configured to output, to the bias point control module 1602, the optical signal obtained by performing optical modulation on the electrical signal for bias point detection superimposed with the adjusted second bias electrical signal.

Optionally, when the operation of outputting the electrical signal for bias point detection by the bias point control module 1602 is performed within the idle time in which the radio frequency signal generation module 1601 outputs no full-wave radio frequency electrical signal, the modulated laser 1603 neither performs optical modulation on the full-wave radio frequency electrical signal superimposed with the first bias electrical signal and optical modulation on the electrical signal for bias point detection superimposed with the second bias electrical signal at the same time, nor performs optical modulation on the full-wave radio frequency electrical signal superimposed with the first bias electrical signal and optical modulation on the electrical signal for bias point detection superimposed with the adjusted second bias electrical signal at the same time. Therefore, the modulated laser 1603 neither outputs the half-wave radio frequency optical signal and the second optical signal at the same time, nor outputs the half-wave radio frequency optical signal and the optical signal obtained by performing optical modulation on the electrical signal for bias point detection superimposed with the adjusted second bias electrical signal at the same time. When receiving the half-wave radio frequency optical signal, the component having one input end and two output ends outputs the half-wave radio frequency optical signal through one output end; and when receiving the second optical signal or the optical signal obtained by performing optical modulation on the electrical signal for bias point detection superimposed with the adjusted second bias electrical signal, outputs the optical signal to the bias point control module 1602 through the other output end.

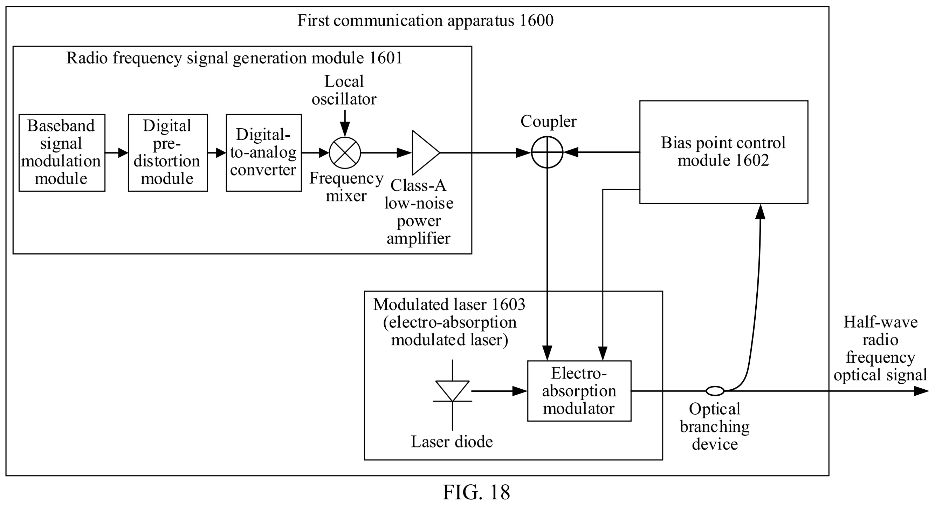

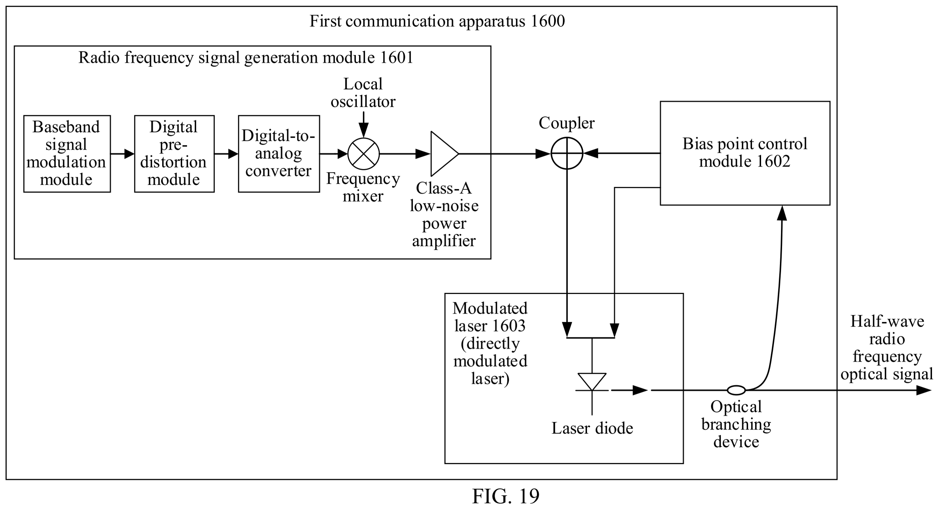

For example, based on the first communication apparatus 1600 shown in FIG. 16, for a case in which the modulated laser 1603 is an electro-absorption modulated laser, an embodiment of this application provides another first communication apparatus 1600, as shown in FIG. 18. For a case in which the modulated laser 1603 is a directly modulated laser, an embodiment of this application provides another first communication apparatus 1600, as shown in FIG. 19. The first communication apparatus 1600 shown in each of FIG. 18 and FIG. 19 includes a radio frequency signal generation module 1601, a bias point control module 1602, a modulated laser 1603, a coupler, and an optical branching device.

The radio frequency signal generation module 1601 in the first communication apparatus 1600 shown in each of FIG. 18 and FIG. 19 includes: a baseband signal modulation module, a digital pre-distortion module, a digital-to-analog converter, a frequency mixer, and a class-A low-noise power amplifier. In the coupler, an input end connected to the radio frequency signal generation module 1601 is configured to receive a full-wave radio frequency electrical signal from the radio frequency signal generation module 1601, an input end connected to the bias point control module 1602 is configured to receive an electrical signal for bias point detection from the bias point control module 1602, and an output end connected to the modulated laser 1603 is configured to output the full-wave radio frequency electrical signal or the electrical signal for bias point detection to the modulated laser 1603. In the optical branching device, an input end connected to the modulated laser 1603 is configured to receive, from the modulated laser 1603, a half-wave radio frequency optical signal, or a second optical signal, or an optical signal obtained by performing optical modulation on the electrical signal for bias point detection superimposed with an adjusted second bias electrical signal, an output end connected to the bias point control module 1602 is configured to output, to the bias point control module 1602, the second optical signal or the optical signal obtained by performing optical modulation on the electrical signal for bias point detection superimposed with the adjusted second bias electrical signal, and another output end is configured to output the half-wave radio frequency optical signal.

The modulated laser 1603 in the first communication apparatus 1600 shown in FIG. 18 is an electro-absorption modulated laser including a laser diode and an electro-absorption modulator. The output end that is of the coupler and that is connected to the modulated laser 1603 is specifically connected to the electro-absorption modulator. The input end that is of the optical branching device and that is connected to the modulated laser 1603 is specifically connected to the electro-absorption modulator. Another output end in the bias point control module 1602 other than an output end connected to the coupler is connected to the electro-absorption modulator in the modulated laser 1603, to output the second bias electrical signal or the adjusted second bias electrical signal to the electro-absorption modulator in the modulated laser 1603.

The modulated laser 1603 in the first communication apparatus 1600 shown in FIG. 19 is a directly modulated laser including a laser diode. The output end that is of the coupler and that is connected to the modulated laser 1603 is specifically connected to the laser diode. The input end that is of the optical branching device and that is connected to the modulated laser 1603 is specifically connected to the laser diode. Another output end in the bias point control module 1602 other than an output end connected to the coupler is connected to laser diode in the modulated laser 1603, to output the second bias electrical signal or the adjusted second bias electrical signal to the laser diode in the modulated laser 1603.

For specific descriptions of the modules/components in FIG. 18 and FIG. 19, refer to the foregoing related descriptions. Details are not described again.

In addition, for specific descriptions of the foregoing implementations, refer to the related descriptions in the foregoing signal transmission method. The first communication apparatuses 1600 shown in FIG. 16, FIG. 18, and FIG. 19 may be further configured to implement functions of the first communication apparatus in the foregoing signal transmission method, and also have corresponding beneficial effects. Details are not described herein again.

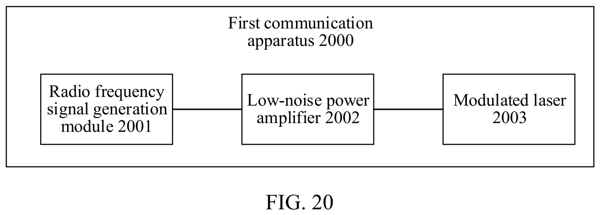

FIG. 20 is a diagram of a structure of a first communication apparatus 2000 according to an embodiment of this application. The first communication apparatus 2000 includes a radio frequency signal generation module 2001, a low-noise power amplifier 2002, and a modulated laser 2003.

The radio frequency signal generation module 2001 is configured to: generate a full-wave radio frequency electrical signal, and output the full-wave radio frequency electrical signal to the low-noise power amplifier 2002. The full-wave radio frequency electrical signal is an analog signal.

The low-noise power amplifier 2002 is configured to: convert the full-wave radio frequency electrical signal into a first half-wave radio frequency electrical signal, and output the first half-wave radio frequency electrical signal to the modulated laser 2003. The first half-wave radio frequency electrical signal is a radio frequency electrical signal having a positive half-amplitude or a negative half-amplitude of the full-wave radio frequency electrical signal in an analog domain. The low-noise power amplifier is a class-B low-noise power amplifier, a class-C low-noise power amplifier, or a class-AB low-noise power amplifier.

The modulated laser 2003 is configured to: superimpose a third bias electrical signal on the first half-wave radio frequency electrical signal, and perform optical modulation on the first half-wave radio frequency electrical signal superimposed with the third bias electrical signal, to obtain a half-wave radio frequency optical signal. The half-wave radio frequency optical signal is a radio frequency optical signal having the positive half-amplitude or the negative half-amplitude of the full-wave radio frequency electrical signal. The modulated laser 2003 is further configured to send the half-wave radio frequency optical signal.

In an optional implementation, the radio frequency signal generation module 2001 may include: a baseband signal modulation module, a digital pre-distortion module, a digital-to-analog converter (for example, a DAC) and a frequency mixer. The baseband signal modulation module may be configured to: modulate a baseband signal, and output a modulated baseband signal to the digital pre-distortion module. The digital pre-distortion module may be configured to: perform digital pre-distortion processing on the modulated baseband signal, and output, to the digital-to-analog converter, a digital signal obtained through digital pre-distortion processing. The digital-to-analog converter may be configured to perform digital-to-analog conversion on the digital signal obtained through digital pre-distortion processing, and output, to the frequency mixer, an analog signal obtained through digital-to-analog conversion. The frequency mixer may be configured to perform frequency mixing on a local oscillator and the received analog signal, to obtain the full-wave radio frequency electrical signal. It can be learned that, in this implementation, the full-wave radio frequency electrical signal generated by the radio frequency signal generation module 2001 is an analog signal obtained by performing baseband signal modulation, digital pre-distortion processing, digital-to-analog conversion and frequency mixing with the local oscillator.

In another optional implementation, the radio frequency signal generation module 2001 may include a class-A low-noise power amplifier (for example, a class-A LNA), and the first communication apparatus 2000 may further include an antenna. The antenna may be configured to: receive an analog signal, and output the analog signal to the class-A low-noise power amplifier in the radio frequency signal generation module 2001. The class-A low-noise power amplifier may be configured to amplify the analog signal from the antenna, to obtain a full-wave radio frequency electrical signal. It can be learned that, in this implementation, the full-wave radio frequency electrical signal generated by the radio frequency signal generation module 2001 is an electrical signal obtained by amplifying the analog signal received by the antenna.

In still another optional implementation, the radio frequency signal generation module 2001 may include a class-A low-noise power amplifier (for example, a class-A LNA) and a frequency mixer, and the first communication apparatus 2000 may further include an antenna. The antenna may be configured to: receive an analog signal, and output the analog signal to the class-A low-noise power amplifier in the radio frequency signal generation module 2001. The class-A low-noise power amplifier may be configured to: amplify the analog signal from the antenna, and output an electrical signal obtained through amplification to the frequency mixer. The frequency mixer may be configured to perform frequency mixing on a local oscillator and the electrical signal obtained through amplification, to obtain the full-wave radio frequency electrical signal. It can be learned that, in this implementation, the full-wave radio frequency electrical signal generated by the radio frequency signal generation module 2001 is an electrical signal obtained by performing amplification and frequency mixing with the local oscillator on the analog signal received by the antenna.

In an optional implementation, the modulated laser 2003 is a directly modulated laser (for example, a DML), the third bias electrical signal is a second bias current signal, and a current corresponding to the second bias current signal is greater than or equal to a threshold current of the directly modulated laser. In this case, the modulated laser 2003 may include a laser diode (for example, an LD). The laser diode may be configured to superimpose the second bias current signal on the first half-wave radio frequency electrical signal, and perform optical modulation on the first half-wave radio frequency electrical signal superimposed with the second bias current signal, to obtain the half-wave radio frequency optical signal. That the low-noise power amplifier 2002 outputs the first half-wave radio frequency electrical signal to the modulated laser 2003 is specifically: The low-noise power amplifier 2002 outputs the first half-wave radio frequency electrical signal to the laser diode in the modulated laser 2003.

In another optional implementation, the modulated laser 2003 is an electro-absorption modulated laser (for example, an EML), the third bias electrical signal is a second bias voltage signal, and a voltage corresponding to the second bias voltage signal is greater than a first voltage. In this case, the modulated laser 2003 may include a laser diode (for example, an LD) and an electro-absorption modulator (for example, an EAM). The laser diode may be configured to: generate a continuous light wave signal, and output the continuous light wave signal to the electro-absorption modulator. The electro-absorption modulator may be configured to modulate the first half-wave radio frequency electrical signal superimposed with the second bias voltage signal onto the continuous light wave signal, to obtain the half-wave radio frequency optical signal. That the low-noise power amplifier 2002 outputs the first half-wave radio frequency electrical signal to the modulated laser 2003 is specifically: The low-noise power amplifier 2002 outputs the first half-wave radio frequency electrical signal to the electro-absorption modulator in the modulated laser 2003.

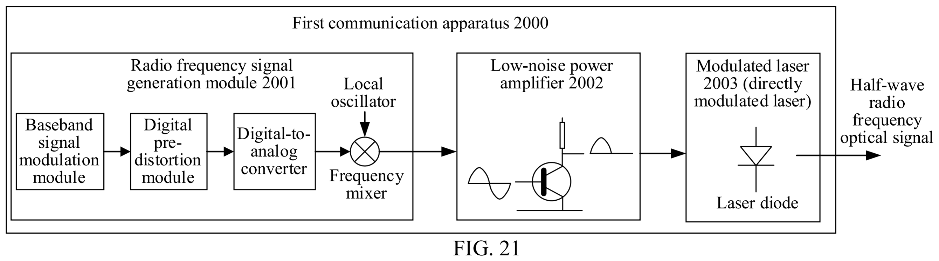

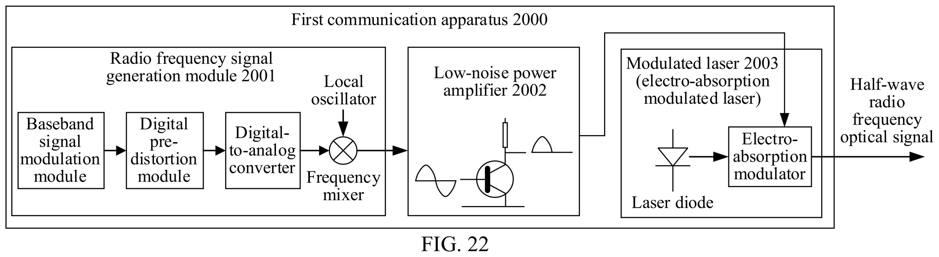

For example, based on the first communication apparatus 2000 shown in FIG. 20, for a case in which the modulated laser 2003 is a directly modulated laser, an embodiment of this application provides another first communication apparatus 2000, as shown in FIG. 21. For a case in which the modulated laser 2003 is an electro-absorption modulated laser, an embodiment of this application provides another first communication apparatus 2000, as shown in FIG. 22. The first communication apparatus 2000 shown in each of FIG. 21 and FIG. 22 includes a radio frequency signal generation module 2001, a low-noise power amplifier 2002, and a modulated laser 2003. The radio frequency signal generation module 2001 in the first communication apparatus 2000 shown in each of FIG. 21 and FIG. 22 includes: a baseband signal modulation module, a digital pre-distortion module, a digital-to-analog converter, and a frequency mixer. The modulated laser 2003 in the first communication apparatus 2000 shown in FIG. 21 includes a laser diode. The modulated laser 2003 in the first communication apparatus 2000 shown in FIG. 22 includes a laser diode and an electro-absorption modulator. For specific descriptions of the modules/components in FIG. 21 and FIG. 22, refer to the foregoing related descriptions. Details are not described again.

In an optional implementation, the first communication apparatus 2000 may further include a waveform adjustment module 2004. The waveform adjustment module 2004 may be configured to perform spectrum adjustment on the first half-wave radio frequency electrical signal by using a filtering function. In other words, after converting the full-wave radio frequency electrical signal into the first half-wave radio frequency electrical signal, the low-noise power amplifier 2002 may output the first half-wave radio frequency electrical signal to the waveform adjustment module 2004. After performing spectrum adjustment on the first half-wave radio frequency electrical signal by using the filtering function, the waveform adjustment module 2004 outputs a spectrum-adjusted first half-wave radio frequency electrical signal to the modulated laser 2003. In this case, the modulated laser 2003 may be configured to: superimpose the third bias electrical signal on the spectrum-adjusted first half-wave radio frequency electrical signal, and perform optical modulation on the spectrum-adjusted first half-wave radio frequency electrical signal superimposed with the third bias electrical signal, to obtain the half-wave radio frequency optical signal.

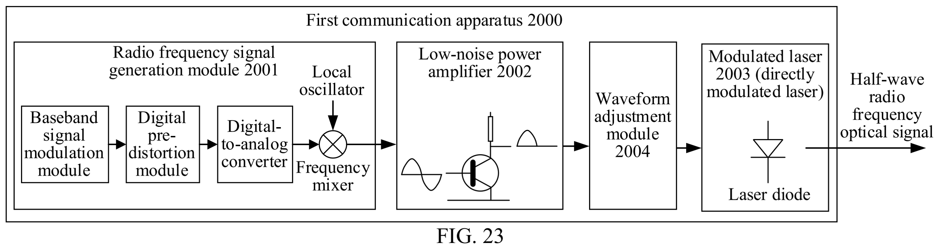

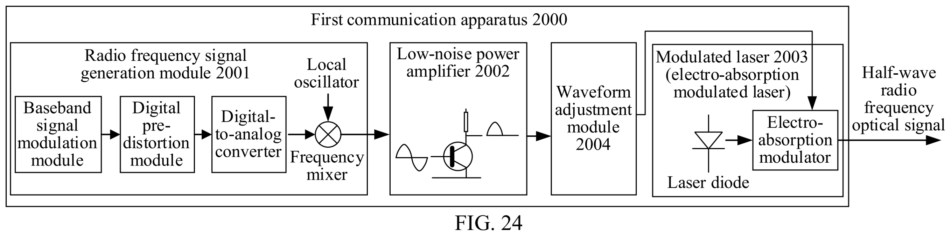

For example, for a case in which the modulated laser 2003 is a directly modulated laser, an embodiment of this application provides another first communication apparatus 2000, as shown in FIG. 23. For a case in which the modulated laser 2003 is an electro-absorption modulated laser, an embodiment of this application provides another first communication apparatus 2000, as shown in FIG. 24. Compared with the first communication apparatus 2000 shown in FIG. 21, the first communication apparatus 2000 shown in FIG. 23 further includes a waveform adjustment module 2004. Compared with the first communication apparatus 2000 shown in FIG. 22, the first communication apparatus 2000 shown in FIG. 24 further includes a waveform adjustment module 2004.

In addition, for specific descriptions of the foregoing implementations, refer to the related descriptions in the foregoing signal transmission method. The first communication apparatuses 2000 shown in FIG. 20 to FIG. 24 may be further configured to implement functions of the first communication apparatus in the foregoing signal transmission method, and also have corresponding beneficial effects. Details are not described herein again.

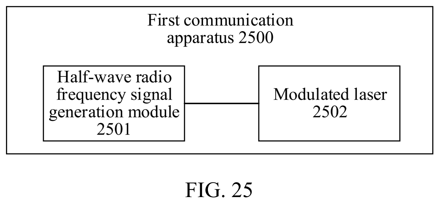

FIG. 25 is a diagram of a structure of a first communication apparatus 2500 according to an embodiment of this application. The first communication apparatus 2500 includes a half-wave radio frequency signal generation module 2501 and a modulated laser 2502.

The half-wave radio frequency signal generation module 2501 is configured to: convert a full-wave radio frequency electrical signal into a second half-wave radio frequency electrical signal, and perform digital-to-analog conversion on the second half-wave radio frequency electrical signal to obtain a first half-wave radio frequency electrical signal. The full-wave radio frequency electrical signal and the second half-wave radio frequency electrical signal are digital signals. The second half-wave radio frequency electrical signal is a radio frequency electrical signal having a positive half-amplitude or a negative half-amplitude of the full-wave radio frequency electrical signal in digital domain. The first half-wave radio frequency electrical signal is a radio frequency electrical signal having a positive half-amplitude or a negative half-amplitude of the full-wave radio frequency electrical signal in an analog domain. The half-wave radio frequency signal generation module 2501 is further configured to output the first half-wave radio frequency electrical signal to the modulated laser 2502.

The modulated laser 2502 is configured to: superimpose a third bias electrical signal on the first half-wave radio frequency electrical signal, and perform optical modulation on the first half-wave radio frequency electrical signal superimposed with the third bias electrical signal, to obtain a half-wave radio frequency optical signal. The half-wave radio frequency optical signal is a radio frequency optical signal having the positive half-amplitude or the negative half-amplitude of the full-wave radio frequency electrical signal. The modulated laser 2502 is further configured to send the half-wave radio frequency optical signal.

In an optional implementation, the half-wave radio frequency signal generation module 2501 may include: a baseband signal modulation module, a radio frequency modulation module, a digital pre-distortion module, a half-wave processing module, and a digital-to-analog converter (for example, a DAC). The baseband signal modulation module may be configured to: modulate a baseband signal, and output a modulated baseband signal to the radio frequency modulation module. The radio frequency modulation module may be configured to: perform radio frequency modulation on the modulated baseband signal, and output, to the digital pre-distortion module, an electrical signal obtained through radio frequency modulation. The digital pre-distortion module may be configured to perform digital pre-distortion processing on the electrical signal obtained through radio frequency modulation, to obtain the full-wave radio frequency electrical signal, and output the full-wave radio frequency electrical signal to the half-wave processing module. The half-wave processing module may be configured to: convert the full-wave radio frequency electrical signal into the second half-wave radio frequency electrical signal, and output the second radio frequency electrical signal to the digital-to-analog converter. The digital-to-analog converter may be configured to: perform digital-to-analog conversion on the second half-wave radio frequency electrical signal to obtain the first half-wave radio frequency electrical signal, and output the first half-wave radio frequency electrical signal to the modulated laser 2502. It can be learned that, in this implementation, the full-wave radio frequency electrical signal is a digital signal obtained by performing baseband signal modulation, radio frequency modulation, digital pre-distortion processing, and digital-to-analog conversion.

In an optional implementation, the modulated laser 2502 is a directly modulated laser (for example, a DML), the third bias electrical signal is a second bias current signal, and a current corresponding to the second bias current signal is greater than or equal to a threshold current of the directly modulated laser. In this case, the modulated laser 2502 may include a laser diode (for example, an LD). The laser diode may be configured to superimpose the second bias current signal on the first half-wave radio frequency electrical signal, and perform optical modulation on the first half-wave radio frequency electrical signal superimposed with the second bias current signal, to obtain the half-wave radio frequency optical signal. That the half-wave radio frequency signal generation module 2501 outputs the first bias electrical signal to the modulated laser 2502 is specifically: The half-wave radio frequency signal generation module 2501 outputs the first bias electrical signal to the laser diode in the modulated laser 2502.

In another optional implementation, the modulated laser 2502 is an electro-absorption modulated laser (for example, an EML), the third bias electrical signal is a second bias voltage signal, and a voltage corresponding to the second bias voltage signal is greater than a first voltage. In this case, the modulated laser 2502 may include a laser diode (for example, an LD) and an electro-absorption modulator (for example, an EAM). The laser diode may be configured to: generate a continuous light wave signal, and output the continuous light wave signal to the electro-absorption modulator. The electro-absorption modulator may be configured to: superimpose the second bias voltage signal on the first half-wave radio frequency electrical signal, and perform optical modulation on the first half-wave radio frequency electrical signal superimposed with the second bias voltage signal, to obtain the half-wave radio frequency optical signal. That the half-wave radio frequency signal generation module 2501 outputs the first bias electrical signal to the modulated laser 2502 is specifically: The half-wave radio frequency signal generation module 2501 outputs the first bias electrical signal to the electro-absorption modulator in the modulated laser 2502.

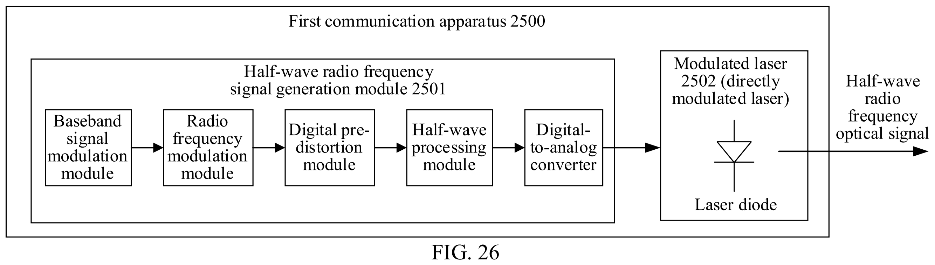

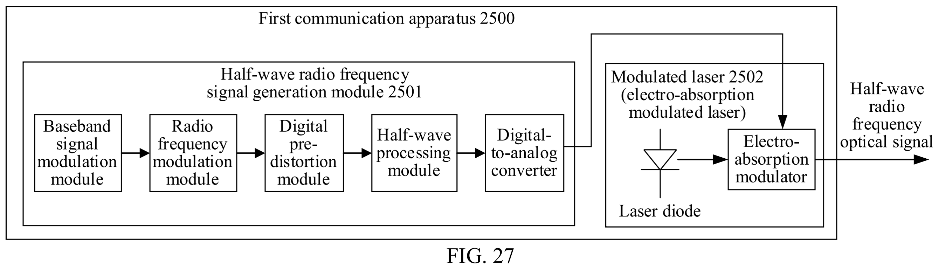

For example, based on the first communication apparatus 2500 shown in FIG. 25, for a case in which the modulated laser 2502 is a directly modulated laser, an embodiment of this application provides another first communication apparatus 2500, as shown in FIG. 26. For a case in which the modulated laser 2502 is an electro-absorption modulated laser, an embodiment of this application provides another first communication apparatus 2500, as shown in FIG. 27. The first communication apparatus 2500 shown in each of FIG. 26 and FIG. 27 includes a half-wave radio frequency signal generation module 2501 and a modulated laser 2502. The half-wave radio frequency signal generation module 2501 in the first communication apparatus 2500 shown in each of FIG. 26 and FIG. 27 includes: a baseband signal modulation module, a radio frequency modulation module, a digital pre-distortion module, a half-wave processing module, and a digital-to-analog converter. The modulated laser 2502 in the first communication apparatus 2500 shown in FIG. 26 includes a laser diode. The modulated laser 2502 in the first communication apparatus 2500 shown in FIG. 27 includes a laser diode and an electro-absorption modulator. For specific descriptions of the modules/components in FIG. 26 and FIG. 27, refer to the foregoing related descriptions. Details are not described again.

In an optional implementation, the first communication apparatus 2500 may further include a waveform adjustment module 2503. The waveform adjustment module 2503 may be configured to perform spectrum adjustment on the first half-wave radio frequency electrical signal by using a filtering function. In other words, after converting the full-wave radio frequency electrical signal into the first half-wave radio frequency electrical signal, the half-wave radio frequency signal generation module 2501 may output the first half-wave radio frequency electrical signal to the waveform adjustment module 2503. The waveform adjustment module 2503 performs spectrum adjustment on the first half-wave radio frequency electrical signal by using the filtering function, and outputs a spectrum-adjusted first half-wave radio frequency electrical signal to the modulated laser 2502. In this case, the modulated laser 2502 may be configured to: superimpose the third bias electrical signal on the spectrum-adjusted first half-wave radio frequency electrical signal, and perform optical modulation on the spectrum-adjusted first half-wave radio frequency electrical signal superimposed with the third bias electrical signal, to obtain the half-wave radio frequency optical signal.

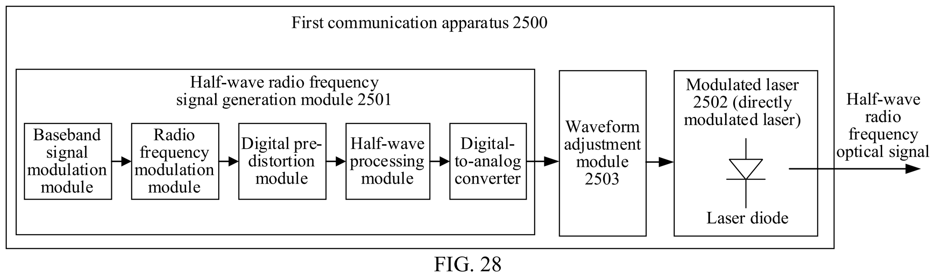

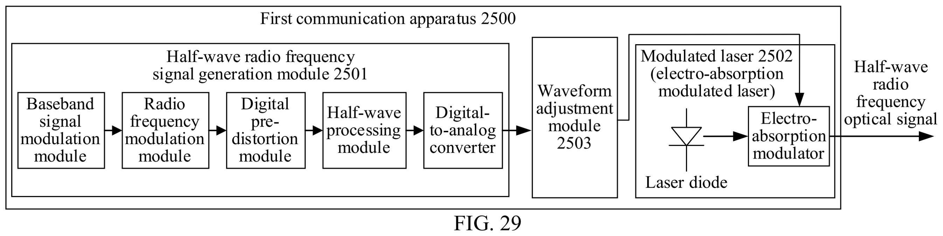

For example, for a case in which the modulated laser 2502 is a directly modulated laser, an embodiment of this application provides another first communication apparatus 2500, as shown in FIG. 28. For a case in which the modulated laser 2502 is an electro-absorption modulated laser, an embodiment of this application provides another first communication apparatus 2500, as shown in FIG. 29. Compared with the first communication apparatus 2500 shown in FIG. 26, the first communication apparatus 2500 shown in FIG. 28 further includes a waveform adjustment module 2503. Compared with the first communication apparatus 2500 shown in FIG. 27, the first communication apparatus 2500 shown in FIG. 29 further includes a waveform adjustment module 2503.

In addition, for specific descriptions of the foregoing implementations, refer to the related descriptions in the foregoing signal transmission method. The first communication apparatuses 2500 shown in FIG. 25 to FIG. 29 may be further configured to implement functions of the first communication apparatus in the foregoing signal transmission method, and also have corresponding beneficial effects. Details are not described herein again.

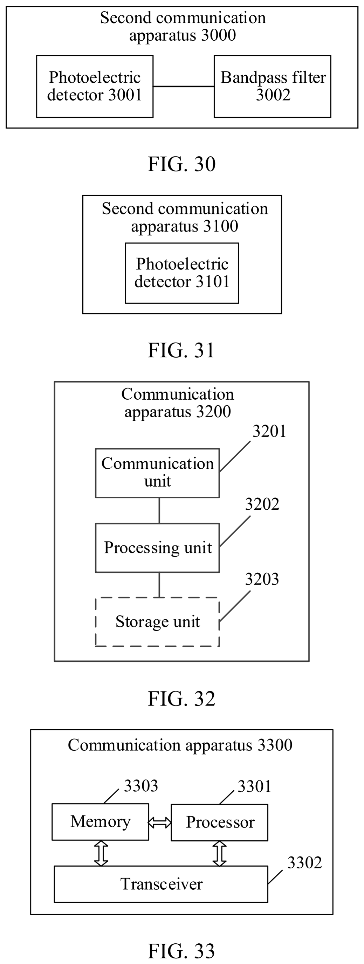

FIG. 30 is a diagram of a structure of a second communication apparatus 3000 according to an embodiment of this application. The second communication apparatus 3000 includes a photoelectric detector 3001 and a bandpass filter 3002. The photoelectric detector 3001 is configured to receive a half-wave radio frequency optical signal. The half-wave radio frequency optical signal is a radio frequency optical signal having a positive half-amplitude or a negative half-amplitude of a full-wave radio frequency electrical signal. The photoelectric detector 3001 is further configured to: perform optical-to-electrical conversion on the half-wave radio frequency optical signal to obtain a first electrical signal, and output the first electrical signal to the bandpass filter. A passband of the photoelectric detector covers a spectrum of a fundamental frequency signal. The bandpass filter 3002 is configured to filter the first electrical signal to obtain the full-wave radio frequency electrical signal. A passband of the bandpass filter includes only the spectrum of the fundamental frequency signal. The full-wave radio frequency electrical signal is the fundamental frequency signal in the first electrical signal.

FIG. 31 is a diagram of a structure of a second communication apparatus 3100 according to an embodiment of this application. The second communication apparatus 3100 includes a photoelectric detector 3001. The photoelectric detector 3101 is configured to receive a half-wave radio frequency optical signal. The half-wave radio frequency optical signal is a radio frequency optical signal having a positive half-amplitude or a negative half-amplitude of a full-wave radio frequency electrical signal. The photoelectric detector 3101 is further configured to: perform optical-to-electrical conversion on the half-wave radio frequency optical signal to obtain a first electrical signal, and determine the full-wave radio frequency electrical signal in the first electrical signal. A passband of the photoelectric detector includes only a spectrum of a fundamental frequency signal in the first electrical signal. The full-wave radio frequency electrical signal is the fundamental frequency signal in the first electrical signal.

Optionally, the second communication apparatus 3000 or the second communication apparatus 3100 may further include an antenna, and the antenna may be configured to radiate the full-wave radio frequency electrical signal.

In addition, the second communication apparatuses shown in FIG. 30 and FIG. 31 may be configured to implement functions of the second communication apparatus in the foregoing signal transmission method, and also have corresponding beneficial effects. For specific descriptions, refer to the foregoing related descriptions. Details are not described herein again.

The first communication apparatus may have the structure shown in any one of FIG. 16 and FIG. 18 to FIG. 29, and the second communication apparatus may have the structure shown in FIG. 30 or FIG. 31. In addition, the first communication apparatus and the second communication apparatus may alternatively have the structure shown in any one of FIG. 32 to FIG. 34.

As shown in FIG. 32, an embodiment of this application provides a communication apparatus 3200. The communication apparatus 3200 may be a first communication apparatus or a second communication apparatus; or the communication apparatus 3200 may be a part (for example, an integrated circuit or a chip) of the first communication apparatus or a part (for example, an integrated circuit or a chip) of the second communication apparatus, and is configured to implement the method in the method embodiments of this application. The communication apparatus 3200 may include a communication unit 3201 and a processing unit 3202. The processing unit 3202 is configured to control the communication unit 3201 to receive and send data/signaling. Optionally, the communication apparatus 3200 may further include a storage unit 3203.

In a possible design, the communication apparatus 3200 is configured to implement a function of the first communication apparatus in embodiments of this application.

The communication unit 3201 may have a function of sending a half-wave radio frequency optical signal by the modulated laser 1603 in the first communication apparatus 1600 shown in any one of FIG. 16, FIG. 18, and FIG. 19. The processing unit 3202 may have a function of the radio frequency signal generation module 1601, a function of the bias point control module 1602, and another function of the modulated laser 1603 other than sending the half-wave radio frequency optical signal, in the first communication apparatus 1600 shown in any one of FIG. 16, FIG. 18, and FIG. 19.

Alternatively, the communication unit 3201 may have a function of sending a half-wave radio frequency optical signal by the modulated laser 2003 in the first communication apparatus 2000 shown in any one of FIG. 20 to FIG. 24. The processing unit 3202 may have a function of the radio frequency signal generation module 2001, a function of the low-noise power amplifier 2002, and another function of the modulated laser 2003 other than sending the half-wave radio frequency optical signal, in the first communication apparatus 2000 shown in any one of FIG. 20 to FIG. 24.

Alternatively, the communication unit 3201 may have a function of sending a half-wave radio frequency optical signal by the modulated laser 2502 in the first communication apparatus 2500 shown in any one of FIG. 25 to FIG. 29. The processing unit 3202 may have a function of the half-wave radio frequency signal generation module 2501 and another function of the modulated laser 2502 other than sending the half-wave radio frequency optical signal, in the first communication apparatus 2500 shown in any one of FIG. 25 to FIG. 29.

In another possible design, the communication apparatus 3200 is configured to implement a function of the second communication apparatus in embodiments of this application.

The communication unit 3201 may have a function of receiving a half-wave radio frequency optical signal by the photoelectric detector 3101 in FIG. 30. The processing unit 3202 may have a function of the bandpass filter 3002 and another function of the photoelectric detector 3001 other than receiving the half-wave radio frequency optical signal, in the second communication apparatus 3000 shown in FIG. 30.

Alternatively, the communication unit 3201 may have a function of receiving a half-wave radio frequency optical signal by the photoelectric detector 3101 in FIG. 31. The processing unit 3202 may have another function of the photoelectric detector 3101 other than receiving the half-wave radio frequency optical signal in the second communication apparatus 3100 shown in FIG. 31.

In another possible design, the communication apparatus 3200 is configured to implement a function of the first communication apparatus in embodiments of this application.

The processing unit 3202 is configured to generate a full-wave radio frequency electrical signal. The processing unit 3202 is further configured to convert the full-wave radio frequency electrical signal into a half-wave radio frequency optical signal. The half-wave radio frequency optical signal is a radio frequency optical signal having a positive half-amplitude or a negative half-amplitude of the full-wave radio frequency electrical signal. The communication unit 3201 is configured to send the half-wave radio frequency optical signal.

In an optional implementation, the half-wave radio frequency optical signal is obtained by performing optical modulation on a positive half-amplitude signal of the full-wave radio frequency electrical signal relative to a direct current component, or the half-wave radio frequency optical signal is obtained by performing optical modulation on an inverted negative half-amplitude signal of the full-wave radio frequency electrical signal relative to the direct current component.

In an optional implementation, the processing unit 3202 converts the full-wave radio frequency electrical signal into the half-wave radio frequency optical signal, and is specifically configured to: superimpose a first bias electrical signal on the full-wave radio frequency electrical signal, where the first bias electrical signal is a first bias voltage signal or a first bias current signal; and perform optical modulation on the full-wave radio frequency electrical signal superimposed with the first bias electrical signal, to obtain the half-wave radio frequency optical signal.

In an optional implementation, the first bias electrical signal is the first bias voltage signal. The processing unit 3202 performs optical modulation on the full-wave radio frequency electrical signal superimposed with the first bias electrical signal, to obtain the half-wave radio frequency optical signal, and is specifically configured to: perform, via an electro-absorption modulated laser, optical modulation on the full-wave radio frequency electrical signal superimposed with the first bias voltage signal, to obtain the half-wave radio frequency optical signal.

In an optional implementation, the electro-absorption modulated laser includes a laser diode and an electro-absorption modulator. The processing unit 3202 performs, via the electro-absorption modulated laser, optical modulation on the full-wave radio frequency electrical signal superimposed with the first bias voltage signal, to obtain the half-wave radio frequency optical signal, and is specifically configured to: generate a continuous light wave signal via the laser diode; and modulate, via the electro-absorption modulator, the full-wave radio frequency electrical signal superimposed with the first bias voltage signal onto the continuous light wave signal, to obtain the half-wave radio frequency optical signal.

In an optional implementation, the first bias electrical signal is the first bias current signal. The processing unit 3202 performs optical modulation on the full-wave radio frequency electrical signal superimposed with the first bias electrical signal, to obtain the half-wave radio frequency optical signal, and is specifically configured to: perform, via a directly modulated laser, optical modulation on the full-wave radio frequency electrical signal superimposed with the first bias current signal, to obtain the half-wave radio frequency optical signal. A current corresponding to the first bias current signal is greater than or equal to a threshold current of the directly modulated laser, and a difference between the current corresponding to the first bias current signal and the threshold current is within a first range.

In an optional implementation, the first bias electrical signal satisfies: A ratio of coefficients of multiple spectral components corresponding to an electrical signal obtained by performing optical-to-electrical conversion on a first optical signal satisfies a first ratio. The first optical signal is an optical signal obtained by performing optical modulation on an electrical signal for bias point detection superimposed with the first bias electrical signal.

In an optional implementation, the electrical signal for bias point detection is a low-frequency sine wave signal. An error between 0.32:0.5:0.21:0 and a ratio of a coefficient corresponding to a direct current component, a coefficient corresponding to a first-order harmonic component, a coefficient corresponding to a second-order harmonic component, and a coefficient corresponding to a third-order harmonic component that are corresponding to the electrical signal obtained by performing optical-to-electrical conversion on the first optical signal is within a second range.

In an optional implementation, the processing unit 3202 is further configured to generate an electrical signal for bias point detection. The processing unit 3202 is further configured to superimpose a second bias electrical signal on the electrical signal for bias point detection. The processing unit 3202 is further configured to perform optical modulation on the electrical signal for bias point detection superimposed with the second bias electrical signal, to obtain a second optical signal. The processing unit 3202 is further configured to: if a ratio of coefficients of multiple spectral components corresponding to an electrical signal obtained by performing optical-to-electrical conversion on the second optical signal satisfies a first ratio, determine the first bias electrical signal as the second bias electrical signal; or if a ratio of coefficients of multiple spectral components corresponding to an electrical signal obtained by performing optical-to-electrical conversion on the second optical signal does not satisfy a first ratio, adjust the second bias electrical signal, and superimpose an adjusted second bias electrical signal on the electrical signal for bias point detection.

In an optional implementation, the processing unit 3202 converts the full-wave radio frequency electrical signal into the half-wave radio frequency optical signal, and is specifically configured to: convert the full-wave radio frequency electrical signal into a first half-wave radio frequency electrical signal, where the first half-wave radio frequency electrical signal is a radio frequency electrical signal having a positive half-amplitude or a negative half-amplitude of the full-wave radio frequency electrical signal in analog domain; and superimpose a third bias electrical signal on the first half-wave radio frequency electrical signal via a modulated laser, and perform optical modulation on the first half-wave radio frequency electrical signal superimposed with the third bias electrical signal, to obtain the half-wave radio frequency optical signal.

In an optional implementation, the first half-wave radio frequency electrical signal is a positive half-amplitude signal of the full-wave radio frequency electrical signal relative to the direct current component in analog domain, or the first half-wave radio frequency electrical signal is obtained by inverting a negative half-amplitude signal of the full-wave radio frequency electrical signal relative to the direct current component in analog domain.

In an optional implementation, the full-wave radio frequency electrical signal is an analog signal. The processing unit 3202 converts the full-wave radio frequency electrical signal into the first half-wave radio frequency electrical signal, and is specifically configured to convert the full-wave radio frequency electrical signal into the first half-wave radio frequency electrical signal via a low-noise power amplifier. The low-noise power amplifier is a class-B low-noise power amplifier, a class-C low-noise power amplifier, or a class-AB low-noise power amplifier.

In an optional implementation, the full-wave radio frequency electrical signal is a digital signal. The processing unit 3202 converts the full-wave radio frequency electrical signal into the first half-wave radio frequency electrical signal, and is specifically configured to: convert the full-wave radio frequency electrical signal into a second half-wave radio frequency electrical signal, where the second half-wave radio frequency electrical signal is a radio frequency electrical signal having a positive half-amplitude or a negative half-amplitude of the full-wave radio frequency electrical signal in digital domain; and perform digital-to-analog conversion on the second half-wave radio frequency electrical signal to obtain the first half-wave radio frequency electrical signal.

In an optional implementation, the second half-wave radio frequency electrical signal is a positive half-amplitude signal of the full-wave radio frequency electrical signal relative to a direct current component in digital domain, or the second half-wave radio frequency electrical signal is obtained by inverting a negative half-amplitude signal of the full-wave radio frequency electrical signal relative to the direct current component in digital domain.

In an optional implementation, the processing unit 3202 is further configured to perform spectrum adjustment on the first half-wave radio frequency electrical signal by using a filtering function. The processing unit 3202 superimposes the third bias electrical signal on the first half-wave radio frequency electrical signal, and performs optical modulation on the first half-wave radio frequency electrical signal superimposed with the third bias electrical signal, to obtain the half-wave radio frequency optical signal; and is specifically configured to: superimpose the third bias electrical signal on the spectrum-adjusted first half-wave radio frequency electrical signal, and perform optical modulation on the spectrum-adjusted first half-wave radio frequency electrical signal superimposed with the third bias electrical signal, to obtain the half-wave radio frequency optical signal.

In an optional implementation, the modulated laser is a directly modulated laser, the third bias electrical signal is a second bias current signal, and a current corresponding to the second bias current signal is greater than or equal to a threshold current of the directly modulated laser. Alternatively, the modulated laser is an electro-absorption modulated laser, the third bias electrical signal is a second bias voltage signal, and a voltage corresponding to the second bias voltage signal is greater than a first voltage.

In an optional implementation, the second bias current signal is a third bias current signal corresponding to a third optical signal with a largest signal-to-noise ratio in multiple third optical signals. The multiple third optical signals are in one-to-one correspondence with multiple third bias current signals. Each third optical signal in the multiple third optical signals is obtained by the processing unit 3202 by performing optical modulation on the first half-wave radio frequency electrical signal superimposed with a third bias current signal corresponding to the third optical signal. Currents respectively corresponding to the multiple third bias current signals are different from each other, and the currents respectively corresponding to the multiple third bias current signals are all greater than or equal to the threshold current.

In an optional implementation, the second bias voltage signal is a third bias voltage signal corresponding to a fourth optical signal with a smallest adjacent channel leakage power ratio in multiple fourth optical signals. The multiple fourth optical signals are in one-to-one correspondence with multiple third bias voltage signals. Each fourth optical signal in the multiple fourth optical signals is obtained by performing optical modulation on the first half-wave radio frequency electrical signal superimposed with a third bias voltage signal corresponding to the fourth optical signal. Voltages respectively corresponding to the multiple third bias voltage signals are different from each other, and the voltages respectively corresponding to the multiple third bias voltage signals are all greater than or equal to the first voltage.

In an optional implementation, the full-wave radio frequency electrical signal is a signal that undergoes digital pre-distortion processing.

In another possible design, the communication apparatus 3200 is configured to implement a function of the second communication apparatus in embodiments of this application.

The communication unit 3201 is configured to receive a half-wave radio frequency optical signal. The half-wave radio frequency optical signal is a radio frequency optical signal having a positive half-amplitude or a negative half-amplitude of a full-wave radio frequency electrical signal. The processing unit 3202 is configured to convert the half-wave radio frequency optical signal into the full-wave radio frequency electrical signal.

In an optional implementation, the half-wave radio frequency optical signal is obtained by performing optical modulation on a positive half-amplitude signal of the full-wave radio frequency electrical signal relative to a direct current component, or the half-wave radio frequency optical signal is obtained by performing optical modulation on an inverted negative half-amplitude signal of the full-wave radio frequency electrical signal relative to the direct current component.

In an optional implementation, the full-wave radio frequency electrical signal obtained by converting the half-wave radio frequency optical signal is a fundamental frequency signal in an electrical signal obtained by performing optical-to-electrical conversion on the half-wave radio frequency optical signal.

In an optional implementation, the processing unit 3202 converts the half-wave radio frequency optical signal into the full-wave radio frequency electrical signal, and is specifically configured to: perform optical-to-electrical conversion on the half-wave radio frequency optical signal via a photoelectric detector, to obtain a first electrical signal, where a passband of the photoelectric detector covers a spectrum of the fundamental frequency signal; and filter the first electrical signal via a bandpass filter, to obtain the full-wave radio frequency electrical signal, where a passband of the bandpass filter includes only the spectrum of the fundamental frequency signal.

In an optional implementation, the processing unit 3202 converts the half-wave radio frequency optical signal into the full-wave radio frequency electrical signal, and is specifically configured to: perform optical-to-electrical conversion on the half-wave radio frequency optical signal via a photoelectric detector, to obtain a first electrical signal, and determine the full-wave radio frequency electrical signal in the first electrical signal. A passband of the photoelectric detector includes only a spectrum of the fundamental frequency signal.

This embodiment of this application and the foregoing method embodiments are based on a same concept, and bring same technical effects. For a specific principle, refer to the descriptions of the foregoing embodiments. Details are not described again.

An embodiment of this application further provides a communication apparatus 3300, as shown in FIG. 33. The communication apparatus 3300 may be a first communication apparatus or a second communication apparatus, or may be a chip, a chip system, a processor, or the like that supports the first communication apparatus in implementing the foregoing method, or may be a chip, a chip system, a processor, or the like that supports the second communication apparatus in implementing the foregoing method. The apparatus may be configured to implement the method described in the foregoing method embodiments. For details, refer to the descriptions in the foregoing method embodiments.

The communication apparatus 3300 may include a processor 3301. The processor 3301 may be a general-purpose processor, a dedicated processor, or the like. For example, the processor 3301 may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to: control a communication apparatus (for example, a base station, a baseband chip, a terminal, a terminal chip, a DU, or a CU), execute a software program, and process data of the software program. The communication apparatus 3300 may further include a transceiver 3302. The transceiver 3302 may include a communication interface, or the transceiver 3302 may include the communication interface and a radio frequency processing module. The communication interface may be an input/output interface, an input interface, or an output interface. The communication apparatus 3300 may further include a memory 3303.

In a possible design, the communication apparatus 3300 is configured to implement a function of the first communication apparatus shown in FIG. 18 or FIG. 19 in embodiments of this application.

The processor 3301 has functions of the baseband signal modulation module, the digital pre-distortion module, and the digital-to-analog converter in the radio frequency signal generation module 1601. The transceiver 3302 includes the radio frequency processing module and the communication interface. The radio frequency processing module has functions of the frequency mixer and the class-A low-noise power amplifier in the radio frequency signal generation module 1601. The communication interface has functions of the coupler, the bias point control module 1602, the modulated laser 1603, and the optical branching device.

In another possible design, the communication apparatus 3300 is configured to implement a function of the first communication apparatus shown in any one of FIG. 21 to FIG. 24 in embodiments of this application.

The processor 3301 has functions of the baseband signal modulation module, the digital pre-distortion module, and the digital-to-analog converter in the radio frequency signal generation module 2001. The transceiver 3302 includes the radio frequency processing module and the communication interface. The radio frequency processing module has functions of the frequency mixer and the low-noise power amplifier 2002 in the radio frequency signal generation module 2001. The communication interface has a function of the modulated laser 2003. In addition, when the communication apparatus 3300 is configured to implement the function of the first communication apparatus shown in FIG. 23 or FIG. 24 in embodiments of this application, the radio frequency processing module further has a function of the waveform adjustment module 2004.

In another possible design, the communication apparatus 3300 is configured to implement a function of the first communication apparatus shown in any one of FIG. 26 to FIG. 29 in embodiments of this application.

The processor 3301 has a function of the half-wave radio frequency signal generation module 2501. The transceiver 3302 includes the communication interface, and the communication interface has a function of the modulated laser 2502. In addition, when the communication apparatus 3300 is configured to implement the function of the first communication apparatus shown in FIG. 28 or FIG. 29 in embodiments of this application, the transceiver 3302 further includes a radio frequency processing module, and the radio frequency processing module has a function of the waveform adjustment module 2503.

In another possible design, the communication apparatus 3300 is configured to implement a function of the second communication apparatus shown in FIG. 30 in embodiments of this application. The transceiver 3302 includes the communication interface and the radio frequency processing module. The communication interface has a function of the photoelectric detector 3001, and the radio frequency processing module has a function of the bandpass filter 3002.

In another possible design, the communication apparatus 3300 is configured to implement a function of the second communication apparatus shown in FIG. 31 in embodiments of this application. The transceiver 3302 includes the communication interface. The communication interface has a function of the photoelectric detector 3001.

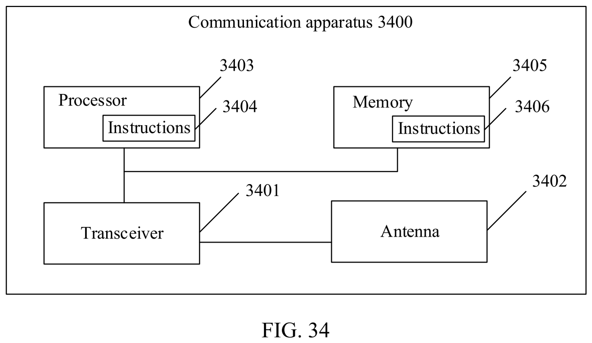

An embodiment of this application further provides a communication apparatus 3400, as shown in FIG. 34. The communication apparatus 3400 may include a transceiver 3401 and an antenna 3402. The communication apparatus 3400 may have a function of the first communication apparatus or the second communication apparatus in the foregoing method embodiments.

In a possible design, the communication apparatus 3400 is configured to implement a function of the first communication apparatus shown in FIG. 16 or FIG. 20 in embodiments of this application.

The antenna 3402 may be configured to receive an analog signal. The transceiver 3401 includes a radio frequency processing module and a communication interface. The antenna 3402 may be connected to the radio frequency processing module. The radio frequency processing module may have a function of a class-A low-noise power amplifier A in a radio frequency signal generation module, and is configured to amplify an analog signal received by the antenna 3402, to obtain a full-wave radio frequency electrical signal. Alternatively, the radio frequency processing module may have functions of a class-A low-noise power amplifier and a frequency mixer in a radio frequency signal generation module, and is configured to: amplify an analog signal received by the antenna 3402, and perform frequency mixing on a local oscillator and an electrical signal obtained through amplification, to obtain a full-wave radio frequency electrical signal.

When the communication apparatus 3400 is configured to implement the function of the first communication apparatus shown in FIG. 16 in embodiments of this application, the communication interface has functions of the bias point control module 1602 and the modulated laser 1603. When the communication apparatus 3400 is configured to implement the function of the first communication apparatus shown in FIG. 20 in embodiments of this application, the radio frequency processing module further has a function of the low-noise power amplifier 2002, and the communication interface has a function of the modulated laser 2003.

In another possible design, the communication apparatus 3400 is configured to implement a function of the second communication apparatus shown in FIG. 30 in embodiments of this application. The transceiver 3401 includes a communication interface and a radio frequency processing module. The communication interface has a function of the photoelectric detector 3001, and the radio frequency processing module has a function of the bandpass filter 3002. The transceiver 3401 may be further configured to output an obtained full-wave radio frequency electrical signal to the antenna 3402.

In another possible design, the communication apparatus 3400 is configured to implement a function of the second communication apparatus shown in FIG. 31 in embodiments of this application. The transceiver 3401 includes a communication interface. The communication interface has a function of the photoelectric detector 3001. Optionally, the transceiver 3401 may be further configured to output an obtained full-wave radio frequency electrical signal to the antenna 3402.

In addition, the communication apparatus 3400 may further include a processor 3403. The processor 3403 may store instructions 3404. The instructions 3404 may be run, to cause the communication apparatus 3400 to perform the method described in the foregoing method embodiments. The instructions 3404 may be built into the processor 3403. In this case, the processor 3403 may be implemented by hardware.

Optionally, the communication apparatus 3400 may further include one or more memories 3405. The memory 3405 may store instructions 3406. The instructions may be run, to cause the communication apparatus 3400 to perform the method described in the foregoing method embodiments. Optionally, the memory 3405 may further store data. The processor 3403 and the memory 3405 may be separately disposed, or may be integrated together.

The memory 3405 may include but is not limited to a non-volatile memory, for example, a hard disk drive (hard disk drive, HDD) or a solid-state drive (solid-state drive, SSD), a random access memory (random access memory, RAM), an erasable programmable read-only memory (erasable programmable ROM, EPROM), a ROM, a compact disc read-only memory (compact disc read-only memory, CD-ROM), or the like.

Optionally, the communication apparatus 3300 or the communication apparatus 3400 may further include a circuit, and the circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-channel metal-oxide-semiconductor (nMetal-oxide-semiconductor, NMOS), a P-channel metal-oxide-semiconductor (positive channel metal-oxide-semiconductor, PMOS), a bipolar junction transistor (bipolar junction transistor, BJT), a bipolar CMOS (BiCMOS), silicon germanium (SiGe), and gallium arsenide (GaAs).

A person skilled in the art may further understand that various illustrative logical blocks (illustrative logical blocks) and steps (steps) that are listed in embodiments of this application may be implemented by using electronic hardware, computer software, or a combination thereof. Whether the functions are implemented by using the hardware or the software depends on particular applications and a design requirement of the entire system. A person skilled in the art may use various methods to implement the described functions for each particular application, but it should not be considered that the implementation goes beyond the scope of embodiments of this application.

This embodiment of this application and the foregoing signal transmission method are based on a same concept, and bring same technical effects. For a specific principle, refer to the descriptions in the foregoing signal transmission method. Details are not described again.

A person skilled in the art may further understand that various illustrative logical blocks (illustrative logical blocks) and steps (steps) that are listed in embodiments of this application may be implemented by using electronic hardware, computer software, or a combination thereof. Whether the functions are implemented by using the hardware or the software depends on particular applications and a design requirement of the entire system. A person skilled in the art may use various methods to implement the described functions for each particular application, but it should not be considered that the implementation goes beyond the scope of embodiments of this application.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

This application further provides a communication system. The system includes the first communication apparatus and the second communication apparatus in the foregoing aspects. In another possible design, the system may further include another device that interacts with the first communication apparatus and/or the second communication apparatus in the solutions provided in this application.

All or a part of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "multiple" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A signal transmission method, wherein the method comprises:
generating a full-wave radio frequency electrical signal;
converting the full-wave radio frequency electrical signal into a half-wave radio frequency optical signal, wherein the half-wave radio frequency optical signal is a radio frequency optical signal having a positive half-amplitude or a negative half-amplitude of the full-wave radio frequency electrical signal; and
sending the half-wave radio frequency optical signal.

2. The method according to claim 1, wherein the half-wave radio frequency optical signal is obtained by performing optical modulation on a positive half-amplitude signal of the full-wave radio frequency electrical signal relative to a direct current component, or the half-wave radio frequency optical signal is obtained by performing optical modulation on an inverted negative half-amplitude signal of the full-wave radio frequency electrical signal relative to the direct current component.

3. The method according to claim 1 or 2, wherein the converting the full-wave radio frequency electrical signal into the half-wave radio frequency optical signal comprises:
superimposing a first bias electrical signal on the full-wave radio frequency electrical signal, wherein the first bias electrical signal is a first bias voltage signal or a first bias current signal; and
performing optical modulation on the full-wave radio frequency electrical signal superimposed with the first bias electrical signal, to obtain the half-wave radio frequency optical signal.

4. The method according to claim 3, wherein the first bias electrical signal is the first bias voltage signal; and the performing optical modulation on the full-wave radio frequency electrical signal superimposed with the first bias electrical signal, to obtain the half-wave radio frequency optical signal comprises:
performing, via an electro-absorption modulated laser, optical modulation on the full-wave radio frequency electrical signal superimposed with the first bias voltage signal, to obtain the half-wave radio frequency optical signal.

5. The method according to claim 4, wherein the electro-absorption modulated laser comprises a laser diode and an electro-absorption modulator; and the performing, via the electro-absorption modulated laser, optical modulation on the full-wave radio frequency electrical signal superimposed with the first bias voltage signal, to obtain the half-wave radio frequency optical signal comprises:
generating a continuous light wave signal via the laser diode; and
modulating, via the electro-absorption modulator, the full-wave radio frequency electrical signal superimposed with the first bias voltage signal onto the continuous light wave signal, to obtain the half-wave radio frequency optical signal.

6. The method according to claim 3, wherein the first bias electrical signal is the first bias current signal; and the performing optical modulation on the full-wave radio frequency electrical signal superimposed with the first bias electrical signal, to obtain the half-wave radio frequency optical signal comprises:
performing, via a directly modulated laser, optical modulation on the full-wave radio frequency electrical signal superimposed with the first bias current signal, to obtain the half-wave radio frequency optical signal, wherein
a current corresponding to the first bias current signal is greater than or equal to a threshold current of the directly modulated laser, and a difference between the current corresponding to the first bias current signal and the threshold current is within a first range.

7. The method according to any one of claims 3 to 6, wherein
the first bias electrical signal satisfies: a ratio of coefficients of multiple spectral components corresponding to an electrical signal obtained by performing optical-to-electrical conversion on a first optical signal satisfies a first ratio, wherein the first optical signal is an optical signal obtained by performing optical modulation on an electrical signal for bias point detection superimposed with the first bias electrical signal.

8. The method according to claim 7, wherein the electrical signal for bias point detection is a low-frequency sine wave signal; and
an error between 0.32:0.5:0.21:0 and a ratio of a coefficient corresponding to a direct current component, a coefficient corresponding to a first-order harmonic component, a coefficient corresponding to a second-order harmonic component, and a coefficient corresponding to a third-order harmonic component that are corresponding to the electrical signal obtained by performing optical-to-electrical conversion on the first optical signal is within a second range.

9. The method according to any one of claims 3 to 8, wherein the method further comprises:
generating an electrical signal for bias point detection;
superimposing a second bias electrical signal on the electrical signal for bias point detection;
performing optical modulation on the electrical signal for bias point detection superimposed with the second bias electrical signal, to obtain a second optical signal; and
if a ratio of coefficients of multiple spectral components corresponding to an electrical signal obtained by performing optical-to-electrical conversion on the second optical signal satisfies the first ratio, determining the first bias electrical signal as the second bias electrical signal; or
if a ratio of coefficients of multiple spectral components corresponding to an electrical signal obtained by performing optical-to-electrical conversion on the second optical signal does not satisfy the first ratio, adjusting the second bias electrical signal, and superimposing the adjusted second bias electrical signal on the electrical signal for bias point detection.

10. The method according to claim 1 or 2, wherein the converting the full-wave radio frequency electrical signal into the half-wave radio frequency optical signal comprises:
converting the full-wave radio frequency electrical signal into a first half-wave radio frequency electrical signal, wherein the first half-wave radio frequency electrical signal is a radio frequency electrical signal having a positive half-amplitude or a negative half-amplitude of the full-wave radio frequency electrical signal in analog domain; and
superimposing a third bias electrical signal on the first half-wave radio frequency electrical signal via a modulated laser, and performing optical modulation on the first half-wave radio frequency electrical signal superimposed with the third bias electrical signal, to obtain the half-wave radio frequency optical signal.

11. The method according to claim 10, wherein the first half-wave radio frequency electrical signal is a positive half-amplitude signal of the full-wave radio frequency electrical signal relative to the direct current component in analog domain, or the first half-wave radio frequency electrical signal is obtained by inverting a negative half-amplitude signal of the full-wave radio frequency electrical signal relative to the direct current component in analog domain.

12. The method according to claim 10 or 11, wherein the full-wave radio frequency electrical signal is an analog signal, and the converting the full-wave radio frequency electrical signal into the first half-wave radio frequency electrical signal comprises:
converting the full-wave radio frequency electrical signal into the first half-wave radio frequency electrical signal via a low-noise power amplifier, wherein
the low-noise power amplifier is a class-B low-noise power amplifier, a class-C low-noise power amplifier, or a class-AB low-noise power amplifier.

13. The method according to claim 10 or 11, wherein the full-wave radio frequency electrical signal is a digital signal, and the converting the full-wave radio frequency electrical signal into the first half-wave radio frequency electrical signal comprises:
converting the full-wave radio frequency electrical signal into a second half-wave radio frequency electrical signal, wherein the second half-wave radio frequency electrical signal is a radio frequency electrical signal having a positive half-amplitude or a negative half-amplitude of the full-wave radio frequency electrical signal in digital domain; and
performing digital-to-analog conversion on the second half-wave radio frequency electrical signal to obtain the first half-wave radio frequency electrical signal.

14. The method according to claim 13, wherein the second half-wave radio frequency electrical signal is a positive half-amplitude signal of the full-wave radio frequency electrical signal relative to the direct current component in digital domain, or the second half-wave radio frequency electrical signal is obtained by inverting a negative half-amplitude signal of the full-wave radio frequency electrical signal relative to the direct current component in digital domain.

15. The method according to any one of claims 10 to 14, wherein the method further comprises: performing spectrum adjustment on the first half-wave radio frequency electrical signal by using a filtering function; and
the superimposing the third bias electrical signal on the first half-wave radio frequency electrical signal, and performing optical modulation on the first half-wave radio frequency electrical signal superimposed with the third bias electrical signal, to obtain the half-wave radio frequency optical signal comprises:
superimposing the third bias electrical signal on the spectrum-adjusted first half-wave radio frequency electrical signal, and performing optical modulation on the spectrum-adjusted first half-wave radio frequency electrical signal superimposed with the third bias electrical signal, to obtain the half-wave radio frequency optical signal.

16. The method according to any one of claims 10 to 15, wherein
the modulated laser is a directly modulated laser, the third bias electrical signal is a second bias current signal, and a current corresponding to the second bias current signal is greater than or equal to a threshold current of the directly modulated laser; or
the modulated laser is an electro-absorption modulated laser, the third bias electrical signal is a second bias voltage signal, and a voltage corresponding to the second bias voltage signal is greater than a first voltage.

17. The method according to claim 16, wherein
the second bias current signal is a third bias current signal corresponding to a third optical signal with a largest signal-to-noise ratio in multiple third optical signals;
the multiple third optical signals are in one-to-one correspondence with multiple third bias current signals, and each third optical signal in the multiple third optical signals is obtained by performing optical modulation on the first half-wave radio frequency electrical signal superimposed with a third bias current signal corresponding to the third optical signal; and
currents respectively corresponding to the multiple third bias current signals are different from each other, and the currents respectively corresponding to the multiple third bias current signals are all greater than or equal to the threshold current.

18. The method according to claim 16, wherein
the second bias voltage signal is a third bias voltage signal corresponding to a fourth optical signal with a smallest adjacent channel leakage power ratio in multiple fourth optical signals;
the multiple fourth optical signals are in one-to-one correspondence with multiple third bias voltage signals, and each fourth optical signal in the multiple fourth optical signals is obtained by performing optical modulation on the first half-wave radio frequency electrical signal superimposed with a third bias voltage signal corresponding to the fourth optical signal; and
voltages respectively corresponding to the multiple third bias voltage signals are different from each other, and the voltages respectively corresponding to the multiple third bias voltage signals are all greater than or equal to the first voltage.

19. The method according to any one of claims 1 to 18, wherein
the full-wave radio frequency electrical signal is a signal that undergoes digital pre-distortion processing.

20. A signal transmission method, wherein the method comprises:
receiving a half-wave radio frequency optical signal, wherein the half-wave radio frequency optical signal is a radio frequency optical signal having a positive half-amplitude or a negative half-amplitude of a full-wave radio frequency electrical signal; and
converting the half-wave radio frequency optical signal into the full-wave radio frequency electrical signal.

21. The method according to claim 20, wherein the half-wave radio frequency optical signal is obtained by performing optical modulation on a positive half-amplitude signal of the full-wave radio frequency electrical signal relative to a direct current component, or the half-wave radio frequency optical signal is obtained by performing optical modulation on an inverted negative half-amplitude signal of the full-wave radio frequency electrical signal relative to the direct current component.

22. The method according to claim 20 or 21, wherein
the full-wave radio frequency electrical signal obtained by converting the half-wave radio frequency optical signal is a fundamental frequency signal in an electrical signal obtained by performing optical-to-electrical conversion on the half-wave radio frequency optical signal.

23. The method according to claim 22, wherein the converting the half-wave radio frequency optical signal into the full-wave radio frequency electrical signal comprises:
performing optical-to-electrical conversion on the half-wave radio frequency optical signal via a photoelectric detector, to obtain a first electrical signal, wherein a passband of the photoelectric detector covers a spectrum of the fundamental frequency signal; and
filtering the first electrical signal via a bandpass filter, to obtain the full-wave radio frequency electrical signal, wherein a passband of the bandpass filter comprises only the spectrum of the fundamental frequency signal.

24. The method according to claim 22, wherein the converting the half-wave radio frequency optical signal into the full-wave radio frequency electrical signal comprises:
performing optical-to-electrical conversion on the half-wave radio frequency optical signal via a photoelectric detector, to obtain a first electrical signal, and determining the full-wave radio frequency electrical signal in the first electrical signal, wherein a passband of the photoelectric detector comprises only a spectrum of the fundamental frequency signal.

25. A signal transmission method, wherein the method comprises:
generating, by a first communication apparatus, a full-wave radio frequency electrical signal;
converting, by the first communication apparatus, the full-wave radio frequency electrical signal into a half-wave radio frequency optical signal, wherein the half-wave radio frequency optical signal is a radio frequency optical signal having a positive half-amplitude or a negative half-amplitude of the full-wave radio frequency electrical signal;
sending, by the first communication apparatus, the half-wave radio frequency optical signal;
receiving, by a second communication apparatus, the half-wave radio frequency optical signal; and
converting, by the second communication apparatus, the half-wave radio frequency optical signal into the full-wave radio frequency electrical signal.

26. The method according to claim 25, wherein the half-wave radio frequency optical signal is obtained by the first communication apparatus by performing optical modulation on a positive half-amplitude signal of the full-wave radio frequency electrical signal relative to a direct current component, or the half-wave radio frequency optical signal is obtained by the first communication apparatus by performing optical modulation on an inverted negative half-amplitude signal of the full-wave radio frequency electrical signal relative to the direct current component.

27. The method according to claim 25 or 26, wherein the converting, by the first communication apparatus, the full-wave radio frequency electrical signal into the half-wave radio frequency optical signal comprises:
superimposing, by the first communication apparatus, a first bias electrical signal on the full-wave radio frequency electrical signal, wherein the first bias electrical signal is a first bias voltage signal or a first bias current signal; and
performing, by the first communication apparatus, optical modulation on the full-wave radio frequency electrical signal superimposed with the first bias electrical signal, to obtain the half-wave radio frequency optical signal.

28. The method according to claim 27, wherein the first bias electrical signal is the first bias voltage signal; and performing, by the first communication apparatus, optical modulation on the full-wave radio frequency electrical signal superimposed with the first bias electrical signal, to obtain the half-wave radio frequency optical signal comprises:
performing, by the first communication apparatus via an electro-absorption modulated laser, optical modulation on the full-wave radio frequency electrical signal superimposed with the first bias voltage signal, to obtain the half-wave radio frequency optical signal.

29. The method according to claim 28, wherein the electro-absorption modulated laser comprises a laser diode and an electro-absorption modulator; and performing, by the first communication apparatus via the electro-absorption modulated laser, optical modulation on the full-wave radio frequency electrical signal superimposed with the first bias voltage signal, to obtain the half-wave radio frequency optical signal comprises:
generating, by the first communication apparatus, a continuous light wave signal via the laser diode; and
modulating, by the first communication apparatus via the electro-absorption modulator, the full-wave radio frequency electrical signal superimposed with the first bias voltage signal onto the continuous light wave signal, to obtain the half-wave radio frequency optical signal.

30. The method according to claim 27, wherein the first bias electrical signal is the first bias current signal; and performing, by the first communication apparatus, optical modulation on the full-wave radio frequency electrical signal superimposed with the first bias electrical signal, to obtain the half-wave radio frequency optical signal comprises:
performing, by the first communication apparatus via a directly modulated laser, optical modulation on the full-wave radio frequency electrical signal superimposed with the first bias current signal, to obtain the half-wave radio frequency optical signal, wherein
a current corresponding to the first bias current signal is greater than or equal to a threshold current of the directly modulated laser, and a difference between the current corresponding to the first bias current signal and the threshold current is within a first range.

31. The method according to any one of claims 27 to 30, wherein
the first bias electrical signal satisfies: a ratio of coefficients of multiple spectral components corresponding to an electrical signal obtained by the first communication apparatus by performing optical-to-electrical conversion on a first optical signal satisfies a first ratio, wherein the first optical signal is an optical signal obtained by the first communication apparatus by performing optical modulation on an electrical signal for bias point detection superimposed with the first bias electrical signal.

32. The method according to claim 31, wherein the electrical signal for bias point detection is a low-frequency sine wave signal; and
an error between 0.32:0.5:0.21:0 and a ratio of a coefficient corresponding to a direct current component, a coefficient corresponding to a first-order harmonic component, a coefficient corresponding to a second-order harmonic component, and a coefficient corresponding to a third-order harmonic component that are corresponding to the electrical signal obtained by the first communication apparatus by performing optical-to-electrical conversion on the first optical signal is within a second range.

33. The method according to any one of claims 27 to 32, wherein the method further comprises:
generating, by the first communication apparatus, an electrical signal for bias point detection;
superimposing, by the first communication apparatus, a second bias electrical signal on the electrical signal for bias point detection;
performing, by the first communication apparatus, optical modulation on the electrical signal for bias point detection superimposed with the second bias electrical signal, to obtain a second optical signal; and
if a ratio of coefficients of multiple spectral components corresponding to an electrical signal obtained by the first communication apparatus by performing optical-to-electrical conversion on the second optical signal satisfies the first ratio, determining, by the first communication apparatus, the first bias electrical signal as the second bias electrical signal; or
if a ratio of coefficients of multiple spectral components corresponding to an electrical signal obtained by the first communication apparatus by performing optical-to-electrical conversion on the second optical signal does not satisfy the first ratio, adjusting, by the first communication apparatus, the second bias electrical signal, and superimposing the adjusted second bias electrical signal on the electrical signal for bias point detection.

34. The method according to claim 25 or 26, wherein converting, by the first communication apparatus, the full-wave radio frequency electrical signal into the half-wave radio frequency optical signal comprises:
converting, by the first communication apparatus, the full-wave radio frequency electrical signal into a first half-wave radio frequency electrical signal, wherein the first half-wave radio frequency electrical signal is a radio frequency electrical signal having a positive half-amplitude or a negative half-amplitude of the full-wave radio frequency electrical signal in analog domain; and
superimposing, by the first communication apparatus, a third bias electrical signal on the first half-wave radio frequency electrical signal via a modulated laser, and performing optical modulation on the first half-wave radio frequency electrical signal superimposed with the third bias electrical signal, to obtain the half-wave radio frequency optical signal.

35. The method according to claim 34, wherein the first half-wave radio frequency electrical signal is a positive half-amplitude signal of the full-wave radio frequency electrical signal relative to the direct current component in analog domain, or the first half-wave radio frequency electrical signal is obtained by inverting a negative half-amplitude signal of the full-wave radio frequency electrical signal relative to the direct current component in analog domain.

36. The method according to claim 34 or 35, wherein the full-wave radio frequency electrical signal is an analog signal, and converting, by the first communication apparatus, the full-wave radio frequency electrical signal into the first half-wave radio frequency electrical signal comprises:
converting, by the first communication apparatus, the full-wave radio frequency electrical signal into the first half-wave radio frequency electrical signal via a low-noise power amplifier, wherein
the low-noise power amplifier is a class-B low-noise power amplifier, a class-C low-noise power amplifier, or a class-AB low-noise power amplifier.

37. The method according to claim 34 or 35, wherein the full-wave radio frequency electrical signal is a digital signal, and converting, by the first communication apparatus, the full-wave radio frequency electrical signal into the first half-wave radio frequency electrical signal comprises:
converting, by the first communication apparatus, the full-wave radio frequency electrical signal into a second half-wave radio frequency electrical signal, wherein the second half-wave radio frequency electrical signal is a radio frequency electrical signal having a positive half-amplitude or a negative half-amplitude of the full-wave radio frequency electrical signal in digital domain; and
performing, by the first communication apparatus, digital-to-analog conversion on the second half-wave radio frequency electrical signal to obtain the first half-wave radio frequency electrical signal.

38. The method according to claim 37, wherein the second half-wave radio frequency electrical signal is a positive half-amplitude signal of the full-wave radio frequency electrical signal relative to the direct current component in digital domain, or the second half-wave radio frequency electrical signal is obtained by inverting a negative half-amplitude signal of the full-wave radio frequency electrical signal relative to the direct current component in digital domain.

39. The method according to any one of claims 34 to 38, wherein the method further comprises: performing, by the first communication apparatus, spectrum adjustment on the first half-wave radio frequency electrical signal by using a filtering function; and
superimposing, by the first communication apparatus, the third bias electrical signal on the first half-wave radio frequency electrical signal, and performing optical modulation on the first half-wave radio frequency electrical signal superimposed with the third bias electrical signal, to obtain the half-wave radio frequency optical signal comprises:
superimposing, by the first communication apparatus, the third bias electrical signal on the spectrum-adjusted first half-wave radio frequency electrical signal, and performing optical modulation on the spectrum-adjusted first half-wave radio frequency electrical signal superimposed with the third bias electrical signal, to obtain the half-wave radio frequency optical signal.

40. The method according to any one of claims 34 to 39, wherein
the modulated laser is a directly modulated laser, the third bias electrical signal is a second bias current signal, and a current corresponding to the second bias current signal is greater than or equal to a threshold current of the directly modulated laser; or
the modulated laser is an electro-absorption modulated laser, the third bias electrical signal is a second bias voltage signal, and a voltage corresponding to the second bias voltage signal is greater than a first voltage.

41. The method according to claim 40, wherein
the second bias current signal is a third bias current signal corresponding to a third optical signal with a largest signal-to-noise ratio in multiple third optical signals;
the multiple third optical signals are in one-to-one correspondence with multiple third bias current signals, and each third optical signal in the multiple third optical signals is obtained by the first communication apparatus by performing optical modulation on the first half-wave radio frequency electrical signal superimposed with a third bias current signal corresponding to the third optical signal; and
currents respectively corresponding to the multiple third bias current signals are different from each other, and the currents respectively corresponding to the multiple third bias current signals are all greater than or equal to the threshold current.

42. The method according to claim 40, wherein
the second bias voltage signal is a third bias voltage signal corresponding to a fourth optical signal with a smallest adjacent channel leakage power ratio in multiple fourth optical signals;
the multiple fourth optical signals are in one-to-one correspondence with multiple third bias voltage signals, and each fourth optical signal in the multiple fourth optical signals is obtained by performing optical modulation on the first half-wave radio frequency electrical signal superimposed with a third bias voltage signal corresponding to the fourth optical signal; and
voltages respectively corresponding to the multiple third bias voltage signals are different from each other, and the voltages respectively corresponding to the multiple third bias voltage signals are all greater than or equal to the first voltage.

43. The method according to any one of claims 25 to 42, wherein
the full-wave radio frequency electrical signal generated by the first communication apparatus is a signal that undergoes digital pre-distortion processing performed by the first communication apparatus.

44. The method according to claim 25 or 43, wherein
the full-wave radio frequency electrical signal obtained by the second communication apparatus by converting the half-wave radio frequency optical signal is a fundamental frequency signal in an electrical signal obtained by the second communication apparatus by performing optical-to-electrical conversion on the half-wave radio frequency optical signal.

45. The method according to claim 44, wherein converting, by the second communication apparatus, the half-wave radio frequency optical signal into the full-wave radio frequency electrical signal comprises:
performing, by the second communication apparatus, optical-to-electrical conversion on the half-wave radio frequency optical signal via a photoelectric detector, to obtain a first electrical signal, wherein a passband of the photoelectric detector covers a spectrum of the fundamental frequency signal; and
filtering, by the second communication apparatus, the first electrical signal via a bandpass filter, to obtain the full-wave radio frequency electrical signal, wherein a passband of the bandpass filter comprises only the spectrum of the fundamental frequency signal.

46. The method according to claim 44, wherein converting, by the second communication apparatus, the half-wave radio frequency optical signal into the full-wave radio frequency electrical signal comprises:
performing, by the second communication apparatus, optical-to-electrical conversion on the half-wave radio frequency optical signal via a photoelectric detector, to obtain a first electrical signal, and determining the full-wave radio frequency electrical signal in the first electrical signal, wherein a passband of the photoelectric detector comprises only a spectrum of the fundamental frequency signal.

47. A communication apparatus, wherein the apparatus comprises:
a radio frequency signal generation module, configured to: generate a full-wave radio frequency electrical signal, and output the full-wave radio frequency electrical signal to a modulated laser;
a bias point control module, configured to output a first bias electrical signal to the modulated laser; and
the modulated laser, configured to perform optical modulation on the full-wave radio frequency electrical signal superimposed with the first bias electrical signal, to obtain a half-wave radio frequency optical signal, wherein the half-wave radio frequency optical signal is a radio frequency optical signal having a positive half-amplitude or a negative half-amplitude of the full-wave radio frequency electrical signal; and
the modulated laser is further configured to send the half-wave radio frequency optical signal.

48. The apparatus according to claim 47, wherein the half-wave radio frequency optical signal is obtained by performing optical modulation on a positive half-amplitude signal of the full-wave radio frequency electrical signal relative to a direct current component, or the half-wave radio frequency optical signal is obtained by performing optical modulation on an inverted negative half-amplitude signal of the full-wave radio frequency electrical signal relative to the direct current component.

49. The apparatus according to claim 47 or 48, wherein
the modulated laser is an electro-absorption modulated laser, and the first bias electrical signal is a first bias voltage signal; or
the modulated laser is a directly modulated laser, and the first bias electrical signal is a first bias current signal.

50. The apparatus according to claim 49, wherein the electro-absorption modulated laser comprises a laser diode and an electro-absorption modulator; and the electro-absorption modulated laser performs optical modulation on the full-wave radio frequency electrical signal superimposed with the first bias voltage signal, to obtain the half-wave radio frequency optical signal, and is specifically configured to:
generate a continuous light wave signal via the laser diode; and
modulate, via the electro-absorption modulator, the full-wave radio frequency electrical signal superimposed with the first bias voltage signal onto the continuous light wave signal, to obtain the half-wave radio frequency optical signal.

51. The apparatus according to claim 49, wherein
a current corresponding to the first bias current signal is greater than or equal to a threshold current of the directly modulated laser, and a difference between the current corresponding to the first bias current signal and the threshold current is within a first range.

52. The apparatus according to any one of claims 47 to 51, wherein
the first bias electrical signal satisfies: a ratio of coefficients of multiple spectral components corresponding to an electrical signal obtained by performing optical-to-electrical conversion on a first optical signal satisfies a first ratio, wherein the first optical signal is an optical signal obtained by performing optical modulation on an electrical signal for bias point detection superimposed with the first bias electrical signal.

53. The apparatus according to claim 52, wherein the electrical signal for bias point detection is a low-frequency sine wave signal; and
an error between 0.32:0.5:0.21:0 and a ratio of a coefficient corresponding to a direct current component, a coefficient corresponding to a first-order harmonic component, a coefficient corresponding to a second-order harmonic component, and a coefficient corresponding to a third-order harmonic component that are corresponding to the electrical signal obtained by performing optical-to-electrical conversion on the first optical signal is within a second range.

54. The apparatus according to any one of claims 47 to 53, wherein
the bias point control module is further configured to: generate an electrical signal for bias point detection, and output the electrical signal for bias point detection to the modulated laser;
the bias point control module is further configured to output a second bias electrical signal to the modulated laser;
the modulated laser is further configured to: perform optical modulation on the electrical signal for bias point detection superimposed with the second bias electrical signal, to obtain a second optical signal, and output the second optical signal to the bias point control module; and
the bias point control module is further configured to: if a ratio of coefficients of multiple spectral components corresponding to an electrical signal obtained by performing optical-to-electrical conversion on the second optical signal satisfies the first ratio, determine the first bias electrical signal as the second bias electrical signal; or if a ratio of coefficients of multiple spectral components corresponding to an electrical signal obtained by performing optical-to-electrical conversion on the second optical signal does not satisfy the first ratio, adjust the second bias electrical signal, and output the adjusted second bias electrical signal to the modulated laser.

55. The apparatus according to any one of claims 47 to 54, wherein the radio frequency signal generation module comprises a digital pre-distortion module; and
the full-wave radio frequency electrical signal is a signal that undergoes digital pre-distortion processing performed by the digital pre-distortion module.

56. A communication apparatus, wherein the apparatus comprises:
a radio frequency signal generation module, configured to: generate a full-wave radio frequency electrical signal, and output the full-wave radio frequency electrical signal to a low-noise power amplifier, wherein the full-wave radio frequency electrical signal is an analog signal;
the low-noise power amplifier, configured to: convert the full-wave radio frequency electrical signal into a first half-wave radio frequency electrical signal, and output the first half-wave radio frequency electrical signal to a modulated laser, wherein the first half-wave radio frequency electrical signal is a radio frequency electrical signal having a positive half-amplitude or a negative half-amplitude of the full-wave radio frequency electrical signal in an analog domain, and the low-noise power amplifier is a class-B low-noise power amplifier, a class-C low-noise power amplifier, or a class-AB low-noise power amplifier; and
the modulated laser, configured to: superimpose a third bias electrical signal on the first half-wave radio frequency electrical signal, and perform optical modulation on the first half-wave radio frequency electrical signal superimposed with the third bias electrical signal, to obtain a half-wave radio frequency optical signal, wherein the half-wave radio frequency optical signal is a radio frequency optical signal having a positive half-amplitude or a negative half-amplitude of the full-wave radio frequency electrical signal; and
the modulated laser is further configured to send the half-wave radio frequency optical signal.

57. The apparatus according to claim 56, wherein the radio frequency signal generation module comprises a digital pre-distortion module; and
the full-wave radio frequency electrical signal is a signal that undergoes digital pre-distortion processing performed by the digital pre-distortion module.

58. A communication apparatus, wherein the apparatus comprises:
a half-wave radio frequency signal generation module, configured to: convert a full-wave radio frequency electrical signal into a second half-wave radio frequency electrical signal, and perform digital-to-analog conversion on the second half-wave radio frequency electrical signal to obtain a first half-wave radio frequency electrical signal, wherein
the full-wave radio frequency electrical signal and the second half-wave radio frequency electrical signal are digital signals, the second half-wave radio frequency electrical signal is a radio frequency electrical signal having a positive half-amplitude or a negative half-amplitude of the full-wave radio frequency electrical signal in digital domain, and the first half-wave radio frequency electrical signal is a radio frequency electrical signal having a positive half-amplitude or a negative half-amplitude of the full-wave radio frequency electrical signal in an analog domain; and
the half-wave radio frequency signal generation module is further configured to output the first half-wave radio frequency electrical signal to a modulated laser; and
the modulated laser, configured to: superimpose a third bias electrical signal on the first half-wave radio frequency electrical signal, and perform optical modulation on the first half-wave radio frequency electrical signal superimposed with the third bias electrical signal, to obtain a half-wave radio frequency optical signal, wherein the half-wave radio frequency optical signal is a radio frequency optical signal having a positive half-amplitude or a negative half-amplitude of the full-wave radio frequency electrical signal; and
the modulated laser is further configured to send the half-wave radio frequency optical signal.

59. The apparatus according to claim 58, wherein the second half-wave radio frequency electrical signal is a positive half-amplitude signal of the full-wave radio frequency electrical signal relative to a direct current component in digital domain, or the second half-wave radio frequency electrical signal is obtained by inverting a negative half-amplitude signal of the full-wave radio frequency electrical signal relative to the direct current component in digital domain.

60. The apparatus according to claim 58 or 59, wherein the half-wave radio frequency signal generation module comprises a digital pre-distortion module; and
the full-wave radio frequency electrical signal is a signal that undergoes digital pre-distortion processing performed by the digital pre-distortion module.

61. The apparatus according to any one of claims 56 to 60, wherein
the first half-wave radio frequency electrical signal is a positive half-amplitude signal of the full-wave radio frequency electrical signal relative to the direct current component in analog domain, or the first half-wave radio frequency electrical signal is obtained by inverting a negative half-amplitude signal of the full-wave radio frequency electrical signal relative to the direct current component in analog domain.

62. The apparatus according to any one of claims 56 to 61, wherein
the half-wave radio frequency optical signal is obtained by performing optical modulation on a positive half-amplitude signal of the full-wave radio frequency electrical signal relative to the direct current component, or the half-wave radio frequency optical signal is obtained by performing optical modulation on an inverted negative half-amplitude signal of the full-wave radio frequency electrical signal relative to the direct current component.

63. The apparatus according to any one of claims 56 to 62, wherein the apparatus further comprises:
a waveform adjustment module, configured to: perform spectrum adjustment on the first half-wave radio frequency electrical signal by using a filtering function, and output a spectrum-adjusted first half-wave radio frequency electrical signal to the modulated laser; and
the modulated laser superimposes the third bias electrical signal on the first half-wave radio frequency electrical signal, and performs optical modulation on the first half-wave radio frequency electrical signal superimposed with the third bias electrical signal, to obtain the half-wave radio frequency optical signal; and is specifically configured to:
superimpose the third bias electrical signal on the spectrum-adjusted first half-wave radio frequency electrical signal, and perform optical modulation on the spectrum-adjusted first half-wave radio frequency electrical signal superimposed with the third bias electrical signal, to obtain the half-wave radio frequency optical signal.

64. The apparatus according to any one of claims 56 to 63, wherein
the modulated laser is a directly modulated laser, the third bias electrical signal is a second bias current signal, and a current corresponding to the second bias current signal is greater than or equal to a threshold current of the directly modulated laser; or
the modulated laser is an electro-absorption modulated laser, the third bias electrical signal is a second bias voltage signal, and a voltage corresponding to the second bias voltage signal is greater than a first voltage.

65. The apparatus according to claim 64, wherein
the second bias current signal is a third bias current signal corresponding to a third optical signal with a largest signal-to-noise ratio in multiple third optical signals;
the multiple third optical signals are in one-to-one correspondence with multiple third bias current signals, and each third optical signal in the multiple third optical signals is obtained by performing optical modulation on the first half-wave radio frequency electrical signal superimposed with a third bias current signal corresponding to the third optical signal; and
currents respectively corresponding to the multiple third bias current signals are different from each other, and the currents respectively corresponding to the multiple third bias current signals are all greater than or equal to the threshold current.

66. The apparatus according to claim 64, wherein
the second bias voltage signal is a third bias voltage signal corresponding to a fourth optical signal with a smallest adjacent channel leakage power ratio in multiple fourth optical signals;
the multiple fourth optical signals are in one-to-one correspondence with multiple third bias voltage signals, and each fourth optical signal in the multiple fourth optical signals is obtained by performing optical modulation on the first half-wave radio frequency electrical signal superimposed with a third bias voltage signal corresponding to the fourth optical signal; and
voltages respectively corresponding to the multiple third bias voltage signals are different from each other, and the voltages respectively corresponding to the multiple third bias voltage signals are all greater than or equal to the first voltage.

67. A communication apparatus, wherein the apparatus comprises:
a photoelectric detector, configured to receive a half-wave radio frequency optical signal, wherein the half-wave radio frequency optical signal is a radio frequency optical signal having a positive half-amplitude or a negative half-amplitude of a full-wave radio frequency electrical signal; and
the photoelectric detector is further configured to: perform optical-to-electrical conversion on the half-wave radio frequency optical signal to obtain a first electrical signal, and output the first electrical signal to a bandpass filter, wherein a passband of the photoelectric detector covers a spectrum of a fundamental frequency signal in the first electrical signal; and
the bandpass filter, configured to filter the first electrical signal to obtain the full-wave radio frequency electrical signal, wherein a passband of the bandpass filter comprises only the spectrum of the fundamental frequency signal, and the full-wave radio frequency electrical signal is the fundamental frequency signal in the first electrical signal.

68. A communication apparatus, wherein the apparatus comprises:
a photoelectric detector, configured to receive a half-wave radio frequency optical signal, wherein the half-wave radio frequency optical signal is a radio frequency optical signal having a positive half-amplitude or a negative half-amplitude of a full-wave radio frequency electrical signal; and
the photoelectric detector is further configured to: perform optical-to-electrical conversion on the half-wave radio frequency optical signal to obtain a first electrical signal, and determine the full-wave radio frequency electrical signal in the first electrical signal, wherein a passband of the photoelectric detector comprises only a spectrum of a fundamental frequency signal in the first electrical signal, and the full-wave radio frequency electrical signal is the fundamental frequency signal in the first electrical signal.

69. The apparatus according to claim 67 or 68, wherein
the half-wave radio frequency optical signal is obtained by performing optical modulation on a positive half-amplitude signal of the full-wave radio frequency electrical signal relative to a direct current component, or the half-wave radio frequency optical signal is obtained by performing optical modulation on an inverted negative half-amplitude signal of the full-wave radio frequency electrical signal relative to the direct current component.

70. A communication apparatus, wherein the apparatus comprises:
a processing unit, configured to generate a full-wave radio frequency electrical signal, wherein
the processing unit is further configured to convert the full-wave radio frequency electrical signal into a half-wave radio frequency optical signal, wherein the half-wave radio frequency optical signal is a radio frequency optical signal having a positive half-amplitude or a negative half-amplitude of the full-wave radio frequency electrical signal; and
a communication unit, configured to send the half-wave radio frequency optical signal.

71. The apparatus according to claim 70, wherein the half-wave radio frequency optical signal is obtained by performing optical modulation on a positive half-amplitude signal of the full-wave radio frequency electrical signal relative to a direct current component, or the half-wave radio frequency optical signal is obtained by performing optical modulation on an inverted negative half-amplitude signal of the full-wave radio frequency electrical signal relative to the direct current component.

72. The apparatus according to claim 70 or 71, wherein the processing unit converts the full-wave radio frequency electrical signal into the half-wave radio frequency optical signal, and is specifically configured to:
superimpose a first bias electrical signal on the full-wave radio frequency electrical signal, wherein the first bias electrical signal is a first bias voltage signal or a first bias current signal; and
perform optical modulation on the full-wave radio frequency electrical signal superimposed with the first bias electrical signal, to obtain the half-wave radio frequency optical signal.

73. The apparatus according to claim 72, wherein the first bias electrical signal is the first bias voltage signal; and the processing unit performs optical modulation on the full-wave radio frequency electrical signal superimposed with the first bias electrical signal, to obtain the half-wave radio frequency optical signal, and is specifically configured to:
perform, via an electro-absorption modulated laser, optical modulation on the full-wave radio frequency electrical signal superimposed with the first bias voltage signal, to obtain the half-wave radio frequency optical signal.

74. The apparatus according to claim 73, wherein the electro-absorption modulated laser comprises a laser diode and an electro-absorption modulator; and the processing unit performs, via the electro-absorption modulated laser, optical modulation on the full-wave radio frequency electrical signal superimposed with the first bias voltage signal, to obtain the half-wave radio frequency optical signal, and is specifically configured to:
generate a continuous light wave signal via the laser diode; and
modulate, via the electro-absorption modulator, the full-wave radio frequency electrical signal superimposed with the first bias voltage signal onto the continuous light wave signal, to obtain the half-wave radio frequency optical signal.

75. The apparatus according to claim 72, wherein the first bias electrical signal is the first bias current signal; and the processing unit performs optical modulation on the full-wave radio frequency electrical signal superimposed with the first bias electrical signal, to obtain the half-wave radio frequency optical signal, and is specifically configured to:
perform, via a directly modulated laser, optical modulation on the full-wave radio frequency electrical signal superimposed with the first bias current signal, to obtain the half-wave radio frequency optical signal, wherein
a current corresponding to the first bias current signal is greater than or equal to a threshold current of the directly modulated laser, and a difference between the current corresponding to the first bias current signal and the threshold current is within a first range.

76. The apparatus according to any one of claims 72 to 75, wherein
the first bias electrical signal satisfies: a ratio of coefficients of multiple spectral components corresponding to an electrical signal obtained by performing optical-to-electrical conversion on a first optical signal satisfies a first ratio, wherein the first optical signal is an optical signal obtained by performing optical modulation on an electrical signal for bias point detection superimposed with the first bias electrical signal.

77. The apparatus according to claim 76, wherein the electrical signal for bias point detection is a low-frequency sine wave signal; and
an error between 0.32:0.5:0.21:0 and a ratio of a coefficient corresponding to a direct current component, a coefficient corresponding to a first-order harmonic component, a coefficient corresponding to a second-order harmonic component, and a coefficient corresponding to a third-order harmonic component that are corresponding to the electrical signal obtained by performing optical-to-electrical conversion on the first optical signal is within a second range.

78. The apparatus according to any one of claims 72 to 77, wherein
the processing unit is further configured to generate an electrical signal for bias point detection;
the processing unit is further configured to superimpose a second bias electrical signal on the electrical signal for bias point detection;
the processing unit is further configured to perform optical modulation on the electrical signal for bias point detection superimposed with the second bias electrical signal, to obtain a second optical signal; and
the processing unit is further configured to: if a ratio of coefficients of multiple spectral components corresponding to an electrical signal obtained by performing optical-to-electrical conversion on the second optical signal satisfies the first ratio, determine the first bias electrical signal as the second bias electrical signal; or if a ratio of coefficients of multiple spectral components corresponding to an electrical signal obtained by performing optical-to-electrical conversion on the second optical signal does not satisfy the first ratio, adjust the second bias electrical signal, and superimpose the adjusted second bias electrical signal on the electrical signal for bias point detection.

79. The apparatus according to claim 70 or 71, wherein the processing unit converts the full-wave radio frequency electrical signal into the half-wave radio frequency optical signal, and is specifically configured to:
convert the full-wave radio frequency electrical signal into a first half-wave radio frequency electrical signal, wherein the first half-wave radio frequency electrical signal is a radio frequency electrical signal having a positive half-amplitude or a negative half-amplitude of the full-wave radio frequency electrical signal in analog domain; and
superimpose a third bias electrical signal on the first half-wave radio frequency electrical signal via a modulated laser, and perform optical modulation on the first half-wave radio frequency electrical signal superimposed with the third bias electrical signal, to obtain the half-wave radio frequency optical signal.

80. The apparatus according to claim 79, wherein the first half-wave radio frequency electrical signal is a positive half-amplitude signal of the full-wave radio frequency electrical signal relative to the direct current component in analog domain, or the first half-wave radio frequency electrical signal is obtained by inverting a negative half-amplitude signal of the full-wave radio frequency electrical signal relative to the direct current component in analog domain.

81. The apparatus according to claim 79 or 80, wherein the full-wave radio frequency electrical signal is an analog signal; and the processing unit converts the full-wave radio frequency electrical signal into the first half-wave radio frequency electrical signal, and is specifically configured to:
convert the full-wave radio frequency electrical signal into the first half-wave radio frequency electrical signal via a low-noise power amplifier, wherein
the low-noise power amplifier is a class-B low-noise power amplifier, a class-C low-noise power amplifier, or a class-AB low-noise power amplifier.

82. The apparatus according to claim 79 or 80, wherein the full-wave radio frequency electrical signal is a digital signal; and the processing unit converts the full-wave radio frequency electrical signal into the first half-wave radio frequency electrical signal, and is specifically configured to:
convert the full-wave radio frequency electrical signal into a second half-wave radio frequency electrical signal, wherein the second half-wave radio frequency electrical signal is a radio frequency electrical signal having a positive half-amplitude or a negative half-amplitude of the full-wave radio frequency electrical signal in digital domain; and
perform digital-to-analog conversion on the second half-wave radio frequency electrical signal to obtain the first half-wave radio frequency electrical signal.

83. The apparatus according to claim 82, wherein the second half-wave radio frequency electrical signal is a positive half-amplitude signal of the full-wave radio frequency electrical signal relative to the direct current component in digital domain, or the second half-wave radio frequency electrical signal is obtained by inverting a negative half-amplitude signal of the full-wave radio frequency electrical signal relative to the direct current component in digital domain.

84. The apparatus according to any one of claims 79 to 83, wherein
the processing unit is further configured to perform spectrum adjustment on the first half-wave radio frequency electrical signal by using a filtering function; and
the processing unit superimposes a third bias electrical signal on the first half-wave radio frequency electrical signal, and performs optical modulation on the first half-wave radio frequency electrical signal superimposed with the third bias electrical signal, to obtain the half-wave radio frequency optical signal; and is specifically configured to:
superimpose the third bias electrical signal on the spectrum-adjusted first half-wave radio frequency electrical signal, and perform optical modulation on the spectrum-adjusted first half-wave radio frequency electrical signal superimposed with the third bias electrical signal, to obtain the half-wave radio frequency optical signal.

85. The apparatus according to any one of claims 79 to 84, wherein
the modulated laser is a directly modulated laser, the third bias electrical signal is a second bias current signal, and a current corresponding to the second bias current signal is greater than or equal to a threshold current of the directly modulated laser; or
the modulated laser is an electro-absorption modulated laser, the third bias electrical signal is a second bias voltage signal, and a voltage corresponding to the second bias voltage signal is greater than a first voltage.

86. The apparatus according to claim 85, wherein
the second bias current signal is a third bias current signal corresponding to a third optical signal with a largest signal-to-noise ratio in multiple third optical signals;
the multiple third optical signals are in one-to-one correspondence with multiple third bias current signals, and each third optical signal in the multiple third optical signals is obtained by the processing unit by performing optical modulation on the first half-wave radio frequency electrical signal superimposed with a third bias current signal corresponding to the third optical signal; and
currents respectively corresponding to the multiple third bias current signals are different from each other, and the currents respectively corresponding to the multiple third bias current signals are all greater than or equal to the threshold current.

87. The apparatus according to claim 85, wherein
the second bias voltage signal is a third bias voltage signal corresponding to a fourth optical signal with a smallest adjacent channel leakage power ratio in multiple fourth optical signals;
the multiple fourth optical signals are in one-to-one correspondence with multiple third bias voltage signals, and each fourth optical signal in the multiple fourth optical signals is obtained by performing optical modulation on the first half-wave radio frequency electrical signal superimposed with a third bias voltage signal corresponding to the fourth optical signal; and
voltages respectively corresponding to the multiple third bias voltage signals are different from each other, and the voltages respectively corresponding to the multiple third bias voltage signals are all greater than or equal to the first voltage.

88. The apparatus according to any one of claims 70 to 87, wherein
the full-wave radio frequency electrical signal is a signal that undergoes digital pre-distortion processing.

89. A communication apparatus, wherein the apparatus comprises:
a communication unit, configured to receive a half-wave radio frequency optical signal, wherein the half-wave radio frequency optical signal is a radio frequency optical signal having a positive half-amplitude or a negative half-amplitude of a full-wave radio frequency electrical signal; and
a processing unit, configured to convert the half-wave radio frequency optical signal into the full-wave radio frequency electrical signal.

90. The apparatus according to claim 89, wherein the half-wave radio frequency optical signal is obtained by performing optical modulation on a positive half-amplitude signal of the full-wave radio frequency electrical signal relative to a direct current component, or the half-wave radio frequency optical signal is obtained by performing optical modulation on an inverted negative half-amplitude signal of the full-wave radio frequency electrical signal relative to the direct current component.

91. The apparatus according to claim 89 or 90, wherein
the full-wave radio frequency electrical signal obtained by converting the half-wave radio frequency optical signal is a fundamental frequency signal in an electrical signal obtained by performing optical-to-electrical conversion on the half-wave radio frequency optical signal.

92. The apparatus according to claim 91, wherein the processing unit converts the half-wave radio frequency optical signal into the full-wave radio frequency electrical signal, and is specifically configured to:
perform optical-to-electrical conversion on the half-wave radio frequency optical signal via a photoelectric detector, to obtain a first electrical signal, wherein a passband of the photoelectric detector covers a spectrum of the fundamental frequency signal; and
filter the first electrical signal via a bandpass filter, to obtain the full-wave radio frequency electrical signal, wherein a passband of the bandpass filter comprises only the spectrum of the fundamental frequency signal.

93. The apparatus according to claim 91, wherein the processing unit converts the half-wave radio frequency optical signal into the full-wave radio frequency electrical signal, and is specifically configured to:
perform optical-to-electrical conversion on the half-wave radio frequency optical signal via a photoelectric detector, to obtain a first electrical signal, and determine the full-wave radio frequency electrical signal in the first electrical signal, wherein a passband of the photoelectric detector comprises only a spectrum of the fundamental frequency signal.

94. A communication apparatus, comprising a memory and a processor, wherein
the memory is configured to store instructions or a computer program; and
the processor is configured to execute the computer program or the instructions stored in the memory, to cause the communication apparatus to perform the method according to any one of claims 1 to 19, or cause the communication apparatus to perform the method according to any one of claims 20 to 24.

95. A communication system, wherein the communication system comprises a first communication apparatus and a second communication apparatus, wherein
the first communication apparatus is configured to perform the method according to any one of claims 1 to 19; and
the second communication apparatus is configured to perform the method according to any one of claims 20 to 24.

96. A computer-readable storage medium, wherein the computer-readable storage medium stores a computer program, and when the computer program is run, the method according to any one of claims 1 to 19 or the method according to any one of claims 20 to 24 is implemented.

97. A computer program product, wherein the computer program product comprises computer program code, and when the computer program code is run, the method according to any one of claims 1 to 19 or the method according to any one of claims 20 to 24 is implemented.
